# EUROPÄISCHE PATENTSCHRIFT

(11) **EP 4 028 193 B1**
(45) Veröffentlichungstag und Bekanntmachung des Hinweises auf die Patenterteilung: **19.08.2026**
(21) Anmeldenummer: 20774911.0
(22) Anmeldetag: 11.09.2020
(51) Int. Cl.: B23G 1/16, B23G 5/20, G05B 19/18

(54) **VERFAHREN ZUM ERZEUGEN EINES GEWINDES MIT EINER VORGEGEBENEN GEWINDESTEIGUNG IN EINEM WERKSTÜCK**
METHOD FOR MACHINING A THREAD HAVING A PREDEDERMINED PITCH IN A WORKPIECE
PROCÉDÉ DE FABRICATION D'UN FILET DE PAS PRÉDÉTERMINÉ DANS UNE PIÈCE

(30) Priorität: 13.09.2019 DE 102019124707
(43) Veröffentlichungstag der Anmeldung: 20.07.2022
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: LIEBALD, Peter, 91161 Hilpoltstein (DE); HECHTLE, Dietmar, 91257 Pegnitz (DE); FUNK, Thomas, 91257 Pegnitz (DE)
(74) Vertreter: Meissner Bolte Nürnberg
(86) Internationale Anmeldenummer: PCT/EP2020/075523
(87) Internationale Veröffentlichungsnummer: WO 2021/048389

(56) Entgegenhaltungen:
- EP-A2- 1 122 014
- DE-A1- 1 602 863
- DE-A1- 102016 008 478
- DE-A1- 19 905 775
- JP-A- S60 146 649

## Beschreibung

Die Erfindung betrifft ein Verfahren zum Erzeugen eines Gewindes nach dem Oberbegriff des Anspruchs 1. Ein ähnliches Verfahren ist aus der DE102016008478A1 bekannt.

Ein Gewinde weist einen schraubenlinien- oder helixförmigen Gewindegang mit konstanter Gewindesteigung auf und kann als Innengewinde oder als Außengewinde erzeugt werden. Zum Erzeugen eines Innengewindes wird in aller Regel zunächst ein Kernloch (oder: eine Kernbohrung) im Werkstück erzeugt, das ein Sackloch oder auch ein Durchgangsloch sein kann, und dann in der Innenwandung des Kernloches der Gewindegang erzeugt. Das Kernloch mit darin erzeugtem Gewinde wird auch als Gewindeloch bezeichnet.

Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004 (ISBN 3-89578-232-7*),* im Folgenden nur als "EMUGE-Handbuch" bezeichnet. Grundlagen zu dem Programmaufbau für CNC-Maschinen hinsichtlich Gewindeerzeugung sind in EMUGE-Handbuch, Kapitel 8, Seite 281, und Kapitel 10, Seiten 357 bis 359 angegeben. Zur Gewindeerzeugung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck.

Unter die spanabhebende oder spanende Gewindeerzeugung fallen die axial arbeitenden Gewindebohrer (vgl. EMUGE-Handbuch, Kapitel 8, Seiten 181 bis 298) und die zirkular arbeitenden Gewindefräser (vgl. EMUGE-Handbuch, Kapitel 10, Seiten 325 bis 372*).* Zu den spanlosen Gewindeerzeugungswerkzeugen zählen die axial arbeitenden Gewindefurcher (vgl. EMUGE-Handbuch, Kapitel 9, Seiten 299 bis 324) und auch die zirkular arbeitenden Zirkulargewindeformer.

Es sind nun auch Kombinationswerkzeuge bekannt, mit denen mit demselben Werkzeug in einem Arbeitsschritt ein Gewindeloch im Vollmaterial des Werkstückes, also ohne vorherige Bohrung eines Kernloches, erzeugt wird. Diese Kombinationswerkzeuge umfassen einen das Kernloch erzeugenden Bohrbereich am vorderen Ende und einen axial anschließenden Gewindeerzeugungsbereich zum Erzeugen des Gewindes in dem vom Bohrbereich erzeugten Kernloch und werden im Folgenden auch als kombinierte Bohr- und Gewindeerzeugungswerkzeuge bezeichnet. Solche Kombinationswerkzeuge sind zum Beispiel aus den Druckschriften DE 1 818 609 U1*,* DE 2 323 316 A1*,* DE 32 41 382 A1*,* DE 10 2005 022 503 A1 und DE 10 2016 008 478 A1 bekannt.

Aus der DE 10 2005 022 503 A1 sind verschiedene Kombinationen von simultan arbeitenden Bohrbereich und Gewindeerzeugungsbereich in einem Kombinationswerkzeug zur Erzeugung eines Gewindeloches bekannt, unter anderem auch die Kombination eines axial arbeitenden Bohrbereichs und eines axial arbeitenden Gewindefurchbereiches in einem Werkzeug.

Aus der DE 10 2016 008 478 A1 ist ein Kombinationswerkzeug bekannt, das als Einschuss-Gewindebohr-Werkzeug bezeichnet wird und mit dem die Kernlochbohrung und das Innengewinde-Schneiden in einem gemeinsamen Werkzeughub durchgeführt werden. Es erfolgt ein Gewindebohr-Hub und anschließend ein gegenläufiger Reversier-Hub. Im Gewindebohr-Hub erzeugt einerseits eine Hauptschneide die Kernlochbohrung und andererseits ein Gewindeprofil das Innengewinde an der Innenwandung der Kernlochbohrung bis zum Erreichen einer nutzbaren Soll-Gewindetiefe. Der Gewindebohr-Hub wird bei einem Gewindebohr-Vorschub mit dazu synchronisierter Drehzahl des Gewindebohr-Werkzeugs durchgeführt. In einem nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub und damit synchronisierter Reversier-Drehzahl. Dadurch wird gewährleistet, dass das Gewindeprofil des Gewindebohr-Werkzeugs im Gewindegang des Innengewindes belastungsfrei bewegt wird. Nach dem Gewindebohr-Hub erfolgt nicht unmittelbar der Reversier-Hub, sondern vielmehr zuvor ein Nutformschritt oder Nutform-Hub, bei dem eine an das Innengewinde anschließende Umlaufnut ohne Gewindesteigung gebildet wird, in der das Gewindeprofil des Gewindebohr-Werkzeuges belastungsfrei drehen kann. Das Gewindebohr-Werkzeug wird über die Soll-Gewindetiefe für den Gewindebohr-Hub hinaus bis zum Erreichen einer Soll-Bohrungstiefe bewegt, und zwar mit einem Nutform-Vorschub sowie einer Nutform-Drehzahl, die zueinander nicht synchronisiert sind und unterschiedlich zum Gewindebohr-Vorschub und zur Gewindebohr-Drehzahl sind. Auf diese Weise könne die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt. Die Umlaufnut wird während des Nutform-Hubes mit Hilfe der Hauptschneide sowie des Gewinde-Schneidzahns des Gewindeprofils am Gewindebohr-Werkzeug erzeugt. Bei Erreichen der Soll-Bohrungstiefe wird der Nutform-Vorschub auf 0 reduziert. Gleichzeitig wird auch die Nutform-Drehzahl auf 0 reduziert, um die für den Reversier-Hub erforderliche Drehrichtungsumkehr zu ermöglichen. Beim Start des Reversier-Hubes wird das bekannte Gewindebohr-Werkzeug so angesteuert, dass der Gewinde-Schneidzahn belastungsfrei in den Gewindegang-Auslauf eingefahren werden kann, der in die Umlaufnut einmündet. Wie das allerdings geschehen soll, ist in DE 10 2016 008 478 A1 nicht offenbart. Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie damit synchronisierter Reversier-Drehzahl, wodurch der Gewinde-Schneidzahn ohne Materialabtrag aus der Gewindebohrung herausgedreht werden kann.

EP 2 361 712 A2 offenbart ein Verfahren zum Erzeugen eines Gewindes mit einem Gewindeerzeugungswerkzeug auf einer numerisch gesteuerten Werkzeugmaschine und eine entsprechende Kopplungsvorrichtung für eine, insbesondere numerisch gesteuerte, Werkzeugmaschine, wobei das Gewindeerzeugungswerkzeug von einer Werkzeugspindel gedreht und gleichzeitig gemäß der Gewindesteigung in axiale Richtung vorgeschoben wird, um in einer Bohrung eines Werkstücks ein Gewinde zu erzeugen. Um die Arbeitsgeschwindigkeit des Gewindeerzeugens zu erhöhen, ist vorgesehen, dass die Drehgeschwindigkeit des Gewindeerzeugungswerkzeugs mittels eines zwischen Werkzeugspindel und Gewindeerzeugungswerkzeug wirksam angeordneten Übersetzungsgetriebes gegenüber der Drehgeschwindigkeit der Werkzeugspindel ins Schnelle übersetzt wird. Dadurch ist es möglich, bei gegebener Leistungsfähigkeit der Maschinensteuerung hinsichtlich ihrer Synchronisationsfähigkeit kürzere Taktzeiten beim Gewindeerzeugen zu erreichen. So kann auch die Wirtschaftlichkeit des Verfahrens verbessert werden, da an der Synchronisationsgrenze der jeweiligen sich im Einsatz befindlichen Werkzeugmaschinen ohne größeren Aufwand nichts geändert werden kann. Das Werkzeug ist in einer Spannzange gespannt und die Spannzange in einer Spannzangenaufnahme aufgenommen, die gegenüber dem Gehäuse des Übersetzungsgetriebes durch Kugellager drehbar gelagert ist. Die Maschinenspindel ist durch Nadellager gegenüber dem Gehäuse drehbar gelagert und innerhalb des Gehäuses an seine mit einem inneren Ring verbunden, an dessen Umfang über Lagerbolzen drei Zahnräder angeordnet sind. Innenseitig greifen die drei Zahnräder in ein inneres Zahnrad, das drehfest mit der Spannzangenaufnahme gekoppelt ist. Außenseitig greifen die drei Zahnräder in einen Zahnkranz an der Innenseite eines äußeren Ringes, der mit dem Gehäuse verbunden ist und damit nicht drehend ist. Der innere Ring ist an seiner Außenseite über Lager drehend innerhalb des äußeren Ring gelagert und an seiner Innenseite über entsprechende Lager auf der Außenseite des Endbereichs der Spannzangenaufnahme gegenüber dieser drehbar gelagert. Die Zahnräder und der Zahnkranz bilden das Übersetzungsgetriebe und definieren durch ihre Verzahnungen das Übersetzungsverhältnis des Getriebes.

Eine derart aufgebaute Kopplungsvorrichtung wird von der Anmelderin unter der Bezeichnung SPEEDSYNCHRO^{®} gefertigt und vertrieben (siehe https://speedsynchro.com). Die Drehzahl der Maschinenspindel entspricht dem Quotienten aus der Drehzahl des Gewindeerzeugungswerkzeuges und dem Übersetzungsverhältnis 4,412, der axiale Vorschub dem Produkt aus der Gewindesteigung und Übersetzungsverhältnis 4,412. Es umfasst einen von der Anmelderin als Softsynchro^{®} bezeichneten axialen Minimallängenausgleich mittels Elastomerelementen, um die bei dem Gewindeprozess, besonders am Umkehrpunkt, auftretenden axialen Kräfte zu kompensieren.

Der Erfindung liegt nun die Aufgabe zugrunde, ein neues Verfahren zum Erzeugen eines Gewindes in einem Werkstück anzugeben.

Gemäß der Erfindung ist ein Verfahren zum Erzeugen eines Gewindes mit einer vorgegebenen Gewindesteigung in einem Werkstück vorgesehen,
a) bei dem ein Werkzeug zum Erzeugen eines Gewindes verwendet wird,
a1) wobei das Werkzeug wenigstens einen Gewindeerzeugungsbereich umfasst,
a2) wobei der Gewindeerzeugungsbereich mit einer vorgegebenen Gewindesteigung und einem vorgegebenen Windungssinn des zu erzeugenden Gewindes um eine durch das Werkzeug verlaufende Werkzeugachse verläuft,
b) bei dem das Werkzeug in einer Arbeitsbewegung während einer ersten Arbeitsphase in das Werkstück bewegt wird,
b1) wobei die Arbeitsbewegung eine Drehbewegung mit einem vorgegebenen Drehsinn um die Werkzeugachse des Werkzeugs und eine gemäß der Gewindesteigung des Gewindeerzeugungsbereichs mit der Drehbewegung synchronisierte axiale Vorschubbewegung des Werkzeugs in einer axialen Vorwärtsrichtung axial zur Werkzeugachse umfasst, derart, dass einer vollen Umdrehung des Werkzeugs um die Werkzeugachse ein axialer Vorschub des Werkzeugs um die vorgegebene Gewindesteigung entspricht,
b2) wobei der Gewindeerzeugungsbereich während der ersten Arbeitsphase in der Arbeitsbewegung einen unter der vorgegebenen Gewindesteigung verlaufenden Gewindegang in dem Werkstück erzeugt,
c) wobei das Werkzeug in einer Abbremsbewegung während einer zweiten Arbeitsphase im Anschluss an die erste Arbeitsphase weiter in das Werkstück bis zu einem Umkehrpunkt bewegt wird,
c1) wobei der axiale Vorschub des Werkzeugs bezogen auf eine volle Umdrehung zumindest während eines Teils der Abbremsbewegung, vorzugsweise während der gesamten Abbremsbewegung, betragsmäßig kleiner als die Gewindesteigung ist und beim Umkehrpunkt Null ist und
c2) wobei der Gewindeerzeugungsbereich des Werkzeugs während der Abbremsbewegung wenigstens eine geschlossene oder ringförmige Umfangsnut in dem Werkstück erzeugt.

Während der Abbremsbewegung in der zweiten Arbeitsphase wird also eine Umfangsnut in dem Werkstück erzeugt.

Gemäß der Erfindung ist bei dem Verfahren zudem vorgesehen, dass
- während der Arbeitsbewegung die Drehzahl der Drehbewegung des Werkzeugs in ihrem zeitlichen Verlauf ein erstes Plateau, bei dem die Drehzahl konstant auf einer vorgegebenen maximalen Drehzahl bleibt, durchläuft und
- während der Abbremsbewegung die Drehzahl der Drehbewegung des Werkzeugs in ihrem zeitlichen Verlauf ein zweites Plateau, bei dem die Drehzahl konstant auf derselben vorgegebenen maximalen Drehzahl bleibt, durchläuft,
- wobei die vorgegebene maximale Drehzahl der Drehbewegung des Werkzeugs mindestens so groß gewählt ist, dass eine Bahngeschwindigkeit am Gewindeerzeugungsbereich von mindestens 57 m/min, insbesondere von mindestens 85 m/min, erreicht wird, was bei einem Gewindedurchmesser von 6 mm einer maximalen Drehzahl von mindestens 3000 U/min, insbesondere mindestens 4.500 U/min, entspricht.

In einer Ausführungsform gemäß der Erfindung ist vorgesehen, dass
- das Werkzeug in der Arbeitsbewegung und in der Abbremsbewegung von einem Maschinenantrieb angetrieben wird und zwischen den Maschinenantrieb und das Werkzeug eine Übersetzungseinheit für die Drehbewegung, insbesondere eine Übersetzungsgetriebeeinheit, mit einem vorgegebenen oder vorgebbaren Übersetzungsverhältnis geschaltet (oder: gekoppelt) ist,
- wobei das Übersetzungsverhältnis dem Quotienten aus der Drehzahl des Maschinenantriebs und der Drehzahl des Werkzeugs entspricht und maximal 1:3 beträgt, so dass das Werkzeug mindestens dreimal so schnell dreht wie der Maschinenantrieb.
- wobei in der Programmierung des Maschinenantriebs eine maximale Drehzahl der Drehbewegung des Maschinenantriebs programmiert wird, die dem Produkt aus dem Übersetzungsverhältnis und der vorgegebenen maximalen Drehzahl der Drehbewegung am Werkzeug entspricht.

Weitere Ausgestaltungen und Weiterbildungen gemäß der Erfindung ergeben sich aus den abhängigen Patentansprüchen.

In einer Ausführungsform liegt zwischen dem Zeitintervall des ersten Plateaus der Drehzahl und dem Zeitintervall des zweiten Plateaus der Drehzahl ein Zwischenzeitintervall, in dem die Drehzahl unter die maximale Drehzahl abfällt.

Das Verhältnis der Intervalllänge des Zwischenzeitintervalls zur Intervalllänge des Zeitintervalls des zweiten Plateaus liegt in einer Ausführungsform in einem Bereich von 0,5 bis 2,4.

Die Intervalllänge des zweiten Plateaus ist in einer Ausführungsform in einem Bereich von 0,01 s bis 0,25 s, insbesondere 0,02 s bis 0,13 s, gewählt und/oder die Intervalllänge des Zwischenzeitintervalls ist in einer Ausführungsform zwischen 0,05 s und 0,15 s, insbesondere zwischen 0,06 und 0,10 s, gewählt.

In einer Ausführungsform ist die maximale Drehzahl schon zu Beginn der ersten Arbeitsphase oder der Arbeitsbewegung oder bei dem Eintrittspunkt des Werkezeugs in das Werkstück erreicht.

In einer Ausführungsform wird die maximal erreichte Bahngeschwindigkeit am Gewindeerzeugungsbereich in einem Bereich von 57 m/min bis 189 m/min, insbesondere von 85 m/min bis 132 m/min, gewählt.

In einer Ausführungsform ist das Übersetzungsverhältnis im Allgemeinen zwischen 1:3 und 1:10 gewählt, insbesondere zwischen 1:4 und 1:8, vorzugsweise zwischen 1:4 und 1:5.

Der Gewindeerzeugungsbereich weist im Allgemeinen ein Wirkprofil auf, das dem Gewindeprofil des zu erzeugenden Gewindes entspricht.

In einer Ausführungsform weist der Gewindeerzeugungsbereich, vorzugsweise in einem vorderen Bereich, des Werkzeugs wenigstens einen Gewindezahn auf, vorzugsweise zwei Gewindezähne.

Bevorzugt im vorderen Bereich oder als vorderer Gewindezahn ist in einer Ausführungsform ein Gewindezahn vorgesehen, der ein Gewindezahnprofil mit einer vorderen Gewindezahnprofilflanke und einer hinteren Gewindezahnprofilflanke aufweist sowie eine sich unmittelbar an die vordere Gewindezahnprofilflanke anschließende vordere Flankenfreifläche an einer vorderen Gewindezahnflanke und eine sich unmittelbar an die hintere Gewindezahnprofilflanke anschließende hintere Flankenfreifläche an einer hinteren Gewindezahnflanke aufweist. Die vordere Flankenfreifläche ist gegenüber einer vorderen Gewindezahnflankeneinhüllenden, die entlang der oder parallel zur Schraubenlinie und durch die vordere Gewindezahnprofilflanke verläuft, nach hinten freigestellt oder zurückversetzt. Es ist nun die hintere Flankenfreifläche gegenüber einer hinteren Transversalebene, die senkrecht zur Werkzeugachse gerichtet ist und durch den hintersten Punkt des Gewindezahnprofils oder der hinteren Gewindezahnprofilflanke verläuft, nach vorne versetzt oder freigestellt. Die Schraubenlinie ist gegenüber der hinteren Transversalebene um den Gewindesteigungswinkel nach hinten geneigt.

Durch diese Freistellung des Gewindezahnes wird eine Reibung des Gewindezahnes an der Werkstückoberfläche sowohl an seiner vorderen Gewindezahnfreifläche als auch an seiner hinteren Gewindezahnfreifläche sowohl während der Arbeitsbewegung als auch während der Abbremsbewegung vermieden oder zumindest stark reduziert.

Dabei sind hier und im Folgenden "vorne" oder "vordere" als in Richtung der Vorwärtsbewegung oder dem Windungssinn des Gewindeerzeugungsbereiches folgend zu verstehen und "hinten" oder "hintere" als in entgegengesetzter Richtung, also entgegengesetzt zur Richtung der Vorwärtsbewegung oder in Richtung der Rückwärtsbewegung oder entgegengesetzt zum Windungssinn des Gewindeerzeugungsbereiches zu verstehen.

In Ausführungsformen ist die vordere Flankenfreifläche gegenüber der vorderen Gewindezahnflankeneinhüllenden um einen vorderen Flankenfreiwinkel geneigt oder zurückversetzt ist, der im Allgemeinen in einem Intervall zwischen 0° und 10°, insbesondere zwischen 0° und 2°, liegt. In vorteilhaften Ausführungsformen ist die hintere Flankenfreifläche gegenüber der hinteren Transversalebene um einen Winkel geneigt oder zurückversetzt, der im Allgemeinen in einem Intervall zwischen 0° und 6°, insbesondere zwischen 2° und 5° liegt, und/oder gegenüber einer hinteren Gewindezahnflankeneinhüllenden, die entlang der oder parallel zur Schraubenlinie verläuft, um einen hinteren Flankenfreiwinkel geneigt oder zurückversetzt ist, der größer ist als der Gewindesteigungswinkel und im Allgemeinen in einem Intervall zwischen dem Gewindesteigungswinkel und 6°, insbesondere zwischen 4° und 5°, liegt.

Die Flankenfreiflächen können helikal, d.h. in der Abwicklung linear, verlaufen oder auch (anders) gekrümmte Formen annehmen, insbesondere sich zumindest abschnittsweise noch stärker aufeinander zu verjüngen oder auch weniger stark aufeinander zu verjüngen. In einer solchen Ausführungsform kann der entsprechende Flankenfreiwinkel eine Begrenzungslinie oder -fläche festlegen, die von der Flankenfreifläche nicht (nach außen) überschritten wird.

In einer weiteren Ausführungsform weist der Gewindeerzeugungsbereich, insbesondere in seinem hinteren Bereich oder als hintersten Gewindezahn, wenigstens einen Gewinde- und Räumzahn auf. Dieser Gewinde- und Räumzahn weist in einem im Windungssinn gesehen vorderseitigen Bereich ein Gewindezahnelement mit einem Gewindezahnprofil als Wirkprofil zum Erzeugen oder Nachbearbeiten des Gewindes auf. Ferner weist der Gewinde- und Räumzahn in einem im Windungssinn gesehen rückwärtigen Bereich ein Räumelement zum Räumen des erzeugten Gewindes bei einer Reversierbewegung auf, wobei das Räumelement ein Räumprofil als Wirkprofil aufweist, das vorzugsweise dem Gewindeprofil des erzeugten Gewindes entspricht und/oder dem Gewindezahnprofil an seinem vorderseitigen Bereich entspricht.

Das Räumelement weist vorzugsweise eine Räumschneide auf, die ein Räumprofil aufweist, das zum Gewindezahnprofil des Gewindezahnelements korrespondiert, insbesondere ein gleiches oder zumindest an Räumprofilflanken des Räumprofils gleiches Wirkprofil aufweist wie das Gewindezahnprofil. Ferner weist das Räumelement in einer vorteilhaften Ausführungsform eine entgegengesetzt zum Windungssinn gesehen der Räumschneide nachgeordnete furchend arbeitende Räumfläche auf, wobei sich die Wirkprofile der Räumschneide und der Räumfläche zu dem gesamten Räumprofil des Räumelements überlagern. Die Räumfläche steigt vorzugsweise radial nach außen im Windungssinn gesehen an und kann in einen Zahnsteg, der insbesondere ein konstantes Profil oder keine Freiflächen aufweist, übergehen, wobei insbesondere ein Räumprofilkopf der Räumfläche und/oder des Zahnsteges kleiner als ein Räumprofilkopf der Räumschneide ist.

Die Zahnflanken des Gewinde- und Räumzahnes können zumindest überwiegend oder vollständig entlang zugehöriger vorderer Gewindezahnflankeneinhüllenden bzw. hinterer Gewindezahnflankeneinhüllenden oder ohne Freiflächen verlaufen.

In einer besonders vorteilhaften Ausführungsform weist der Gewindeerzeugungsbereich sowohl wenigstens einen Gewindezahn wie beschrieben als auch wenigstens einen Gewinde- und Räumzahn auf, wobei der Gewinde- und Räumzahn im Windungssinn gesehen der letzte Zahn des Gewindeerzeugungsbereiches ist und damit der erste Zahn bei der Reversierbewegung.

In einer weiteren Ausführungsform weist wenigstens ein Gewindezahn oder der Gewinde- und Räumzahn in seinem im Windungssinn vorderseitigen Bereich oder im Gewindezahnelement eine Gewindeschneide auf und vorzugsweise auch eine im Windungssinn gesehen der Gewindeschneide nachgeordnete Gewindefurchfläche zum Erzeugen einer Oberfläche mit guter Oberflächengüte, wobei sich die Wirkprofile der Gewindeschneide und der Gewindefurchfläche zu dem, vorzugsweise dem Gewindeprofil entsprechenden, Gewindezahnprofil an dem vorderseitigen Bereich überlagern.

Die Gewindefurchfläche kann radial nach außen entgegengesetzt zum Windungssinn ansteigen und vorzugsweise in einen oder in den Zahnsteg, der insbesondere als Kalibrierbereich dient und/oder ein konstantes Profil oder keine Freiflächen aufweist, übergehen. Ein Gewindezahnprofilkopf der Gewindefurchfläche und/oder des Zahnsteges kann nun kleiner sein als der Gewindezahnprofilkopf der Gewindeschneide.

In einer vorteilhaften Ausführungsform umfasst das Werkzeug ferner wenigstens einen Bohrbereich zum Erzeugen eines Kernloches. Der Bohrbereich ist in einem weiter vorne, insbesondere an einem vorderen oder freien Ende, liegenden Bereich angeordnet als der Gewindeerzeugungsbereich. Bohrbereich und Gewindeerzeugungsbereich sind miteinander starr bewegungsgekoppelt und/oder auf einem gemeinsamen Werkzeugträger oder Werkzeugschaft befestigt oder ausgebildet. Bevorzugt erzeugt während der Arbeitsbewegung der Bohrbereich des Werkzeugs ein Kernloch in dem Werkstück und der Gewindeerzeugungsbereich einen unter der vorgegebenen Gewindesteigung verlaufenden Gewindegang in der Oberfläche dieses Kernloches. Der Gewindeerzeugungsbereich ragt im Allgemeinen radial zur Werkzeugachse weiter nach außen als der Bohrbereich. Dadurch kann das Gewinde ohne radiale Zustellung des Werkzeugs erzeugt werden und der Bohrbereich beim Reversieren ohne Zerstörung des Gewindes durch das Kernloch wieder herausbewegt werden.

Die Abbremsbewegung umfasst bevorzugt eine Drehbewegung mit gleichbleibendem Drehsinn wie bei der Arbeitsbewegung.

In der Regel beginnt der Abbremsvorgang oder die zweite Arbeitsphase bei einem axialen Vorschub, der der Gewindesteigung der ersten Arbeitsphase entspricht. Der Abbremsvorgang ist als Abbremsung von der anfänglichen Gewindesteigung bis auf Null am Ende oder an einem Umkehrpunkt zu verstehen und muss nicht über das gesamte Drehwinkelintervall eine Verringerung des axialen Vorschubs abhängig vom Drehwinkel (Abbremsbeschleunigung), insbesondere auf Werte unterhalb der Gewindesteigung beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt.

In einer bevorzugten Ausführungsform wird während der Abbremsbewegung die axiale Vorschubbewegung abhängig vom Drehwinkel der Drehbewegung des Werkzeugs gemäß einer vorab gespeicherten eindeutigen Beziehung, insbesondere einer Funktion oder einer Abfolge von Funktionen, zwischen dem axialen Vorschub des Werkzeugs und dem Drehwinkel gesteuert.

Eine Funktion, die die Beziehung zwischen axialem Vorschub (oder: der axialen Eindringtiefe) und dem Drehwinkel definiert, kann einen kontinuierlichen Definitionsbereich und Wertebereich oder auch einen diskreten Definitionsbereich und Wertebereich mit diskreten vorab gespeicherten oder vorab ermittelten Wertepaaren oder Wertetabellen aufweisen.

In einer Ausführungsform ist auch die Drehgeschwindigkeit der Drehbewegung beim Umkehrpunkt Null. und/oder ist der gesamte oder aufsummierte axiale Vorschub des Werkzeuges während der Abbremsbewegung zwischen dem 0,1-fachen bis 2-fachen der Gewindesteigung gewählt oder eingestellt.

In einer bevorzugten Ausführungsform werden während der Abbremsbewegung in mehreren aufeinanderfolgenden Abbremsschritten zueinander unterschiedliche Beziehungen, insbesondere Funktionen, zwischen dem axialen Vorschub des Werkzeugs und dem Drehwinkel gewählt oder eingestellt.

In einer besonders vorteilhaften Ausführungsform ist während mehreren, insbesondere auch allen, Abbremsschritten für die axiale Eindringtiefe oder der axiale Vorschub eine lineare Funktion des Drehwinkels gewählt und/oder ist die (programmierte) Steigung, d.h. die Ableitung der axialen Eindringtiefe oder des axialen Vorschubs nach dem Drehwinkel, in jedem dieser Abbremsschritte konstant und nimmt betragsmäßig von einem Abbremsschritt zu einem darauffolgenden Abbremsschritt ab.

Diese Ausführungsform kann besonders einfach implementiert werden, indem für die Arbeitsbewegung eine NC-Steuerung für einen Gewindeprozess, beispielsweise eine G33 Wegbedingung, mit der Gewindesteigung des Gewindes verwendet wird und in den mehreren Abbremsschritten ebenfalls eine, vorzugsweise die gleiche, NC-Steuerung für einen Gewindeprozess, beispielsweise eine G33 Wegbedingung, mit der jeweiligen konstanten Steigung als Gewindesteigungsparameter verwendet wird.

In einer Ausführungsform ist während mehreren, insbesondere allen, Abbremsschritten die axiale Eindringtiefe oder der axiale Vorschub eine, insbesondere kubische, Spline-Funktion des Drehwinkels.

In einer Ausführungsform sind die unterschiedlichen Funktionen aufeinanderfolgender Abbremsschritte stetig und im Fall differenzierbarer Funktionen vorzugsweise stetig differenzierbar aneinandergesetzt.

In einer Ausführungsform ist, insbesondere während eines Egalisierungsschrittes, der axiale Vorschub während der Abbremsbewegung in einem Drehwinkel-Teilintervall Null und/oder erfolgt in einem Drehwinkel-Teilintervall in zur Vorwärtsrichtung der Arbeitsbewegung entgegengesetzter Rückwärtsrichtung.

In einer Ausführungsform wird nach Erreichen des Umkehrpunktes eine Reversierbewegung des Werkzeuges eingeleitet, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst.

Die Reversierbewegung wird bevorzugt mit einem zur Arbeitsbewegung und Abbremsbewegung symmetrischen Bewegungsverlauf mit umgekehrtem Drehsinn und umgekehrtem Vorschub durchgeführt.

In einer vorteilhaften Ausführungsform wird die Reversierbewegung in der ersten Reversierphase mit der betragsmäßig gleichen, nur in der Drehrichtung und Vorschubrichtung invertierten vorab gespeicherten eindeutigen Beziehung, insbesondere einer Funktion oder einer Abfolge von Funktionen, zwischen dem axialen Vorschub des Werkzeugs und dem Drehwinkel gesteuert wie in der Abbremsbewegung während der zweiten Arbeitsphase, ggf. unter Auslassung oder Verkürzung des Egalisierungsschrittes, sofern vorhanden.

In einer Ausführungsform räumt der Gewinde- und Räumzahn des Werkzeugs nun während der Reversierbewegung mit seinem Räumelement Fremdkörper, insbesondere Späne oder Spanwurzeln, vor oder aus dem Gewinde aus und kann insbesondere auch die Werkstückoberfläche, insbesondere im Gewinde, glätten und/oder insbesondere keine Zwischenspalte bei dem Räumvorgang zur Gewindeganginnenwand entstehen lassen, in denen sich Späne festsetzen könnten.

Die Erfindung wird im Folgenden anhand von Ausführungsbeispielen weiter erläutert. Dabei wird auch auf die Zeichnung Bezug genommen, in deren
- FIG 1: ein kombiniertes Bohr- und Gewindeerzeugungswerkzeug bei der Erzeugung eines Gewindeloches,
- FIG 2 bis 10: aufeinanderfolgende Schritte eines Verfahrens oder Zyklus zur Erzeugung eines Gewindeloches mit einem kombinierten Bohr- und Gewindeerzeugungswerkzeug, insbesondere gemäß FIG 1,
- FIG 11: ein mit einem kombinierten Bohr- und Gewindeerzeugungswerkzeug, insbesondere gemäß FIG 1, oder einem Verfahren oder Zyklus zur Erzeugung eines Gewindeloches, insbesondere einem, Verfahren gemäß den FIG 2 bis 10, erzeugtes Gewindeloch,
- FIG 12: die Steuerung eines Gewindelocherzeugungszyklus anhand eines Graphen der axialen Eindringtiefe als Funktion des Drehwinkels,
- FIG 13: der Endabschnitt des in FIG 12 dargestellten Graphen in der Vorwärtsbewegung als Abbremsvorgang,
- FIG 14: der Endabschnitt des in FIG 12 dargestellten Graphen in der Rückwärtsbewegung als Beschleunigungsvorgang,
- FIG 15: ein Diagramm der Eindringtiefe und der Drehzahl als Funktionen der Zeit ohne eine Übersetzungseinheit zwischen Antriebseinheit und Werkzeug,
- FIG 16: ein Diagramm der Eindringtiefe und der Drehzahl als Funktionen der Zeit mit einer Übersetzungseinheit zwischen Antriebseinheit und Werkzeug,
- FIG 17: eine Ausführungsform einer Werkzeugkoppeleinheit mit einer Übersetzungseinheit zum Koppeln eines kombinierten Bohr- und Gewindeerzeugungswerkzeuges mit einer Antriebseinheit in einem Längsschnitt,
- FIG 18: ein Gewinde- und Räumzahn eines Bohr- und Gewindeerzeugungswerkzeugs in einer perspektivische Ansicht von vorne und
- FIG 19: der Gewinde- und Räumzahn der FIG 18 in einer perspektivische Ansicht von hinten
jeweils schematisch dargestellt sind. Einander entsprechende Teile und Größen sind in den FIG 1 bis 19 mit denselben Bezugszeichen versehen.

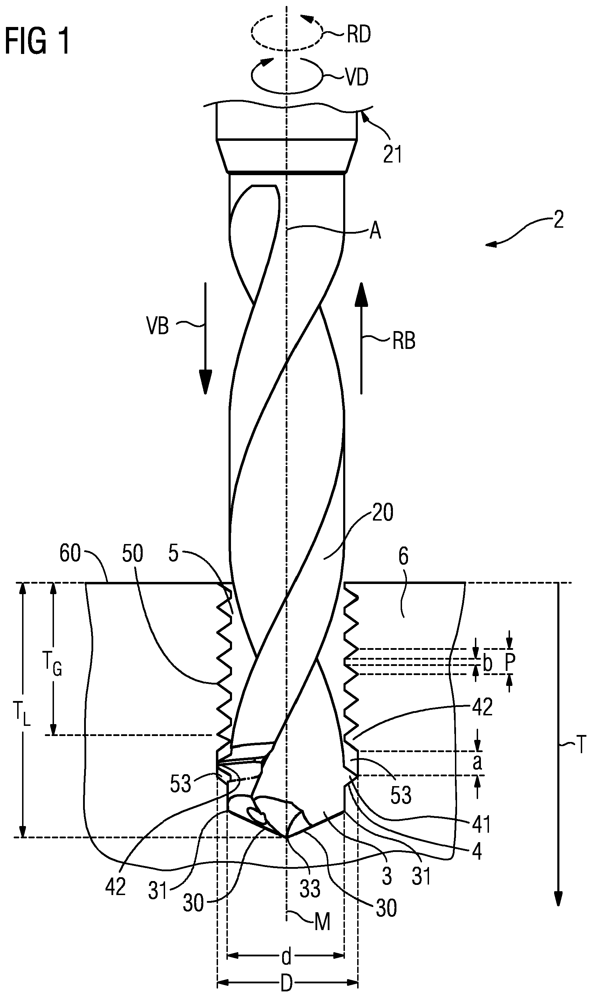

Erste Ausführungsbeispiele des Verfahrens gemäß der Erfindung werden im Folgenden anhand von FIG 1 bis 11 erläutert.

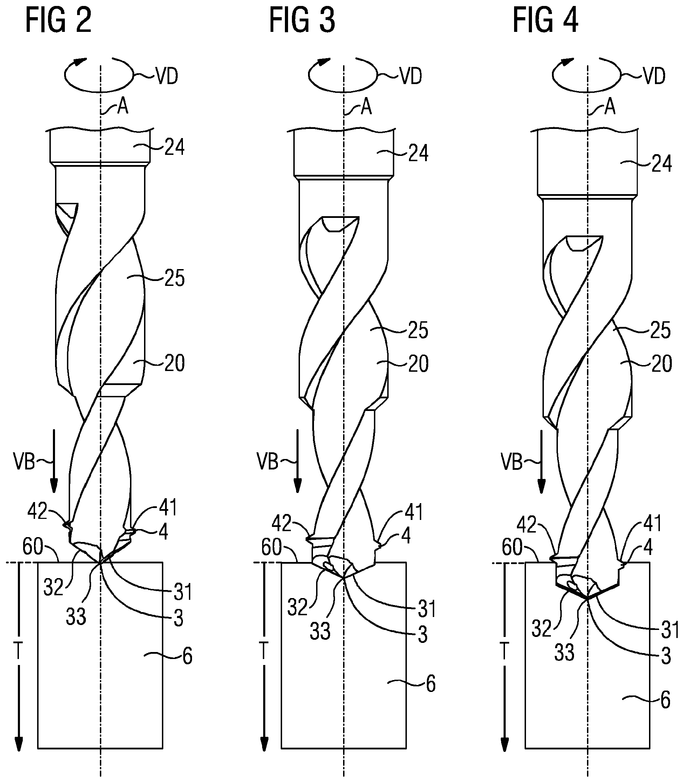

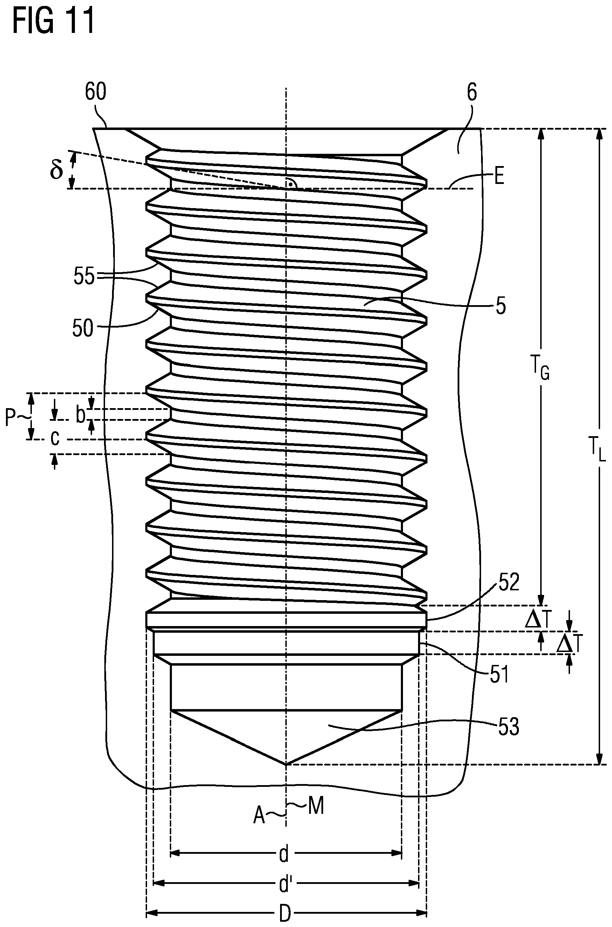

Das in FIG 1 und auch in FIG 2 bis 10 gezeigte Werkzeug 2 wird zum Erzeugen eines Gewindeloches 5 in einem Werkstück 6 eingesetzt. Das Werkzeug 2 ist ein kombiniertes Werkzeug und erzeugt sowohl das Kernloch in dem Werkstück mit dem vorgegebenen Kernlochdurchmesser des Gewindes als auch das Innengewinde in dem Kernloch, d.h. den Gewindegang 50 des Innengewindes in der Mantelwandung oder Innenwandung des Kernloches. Dazu wird das Werkzeug in einer Arbeitsbewegung oder einem Arbeitshub oder einer Gewindeerzeugungsbewegung, die aus einer Drehbewegung um die Werkzeugachse einerseits und einer axialen Vorschubbewegung entlang der Werkzeugachse zusammengesetzt ist, in das Werkstück 6 bewegt. Die FIG 11 zeigt ein Ausführungsbeispiel eines Gewindeloches 5 mit einem Gewindegang 50 und einem Gewindeprofil 55, das mit einem Verfahren remgemäß der Erfindung, beispielsweise unter Nutzung eines Werkzeugs nach FIG 1, hergestellt werden kann.

Der Gewindesteigungswinkel δ des Gewindeganges 50 mit der Gewindesteigung P und dem Durchmesser D wird bezüglich einer Transversalebene E, die senkrecht zur Werkzeugachse A gerichtet ist, gemessen und ist aus der folgenden Beziehung $P = π ⋅ D tan ⋅ δ$ berechenbar. Typische Werte für den Gewindesteigungswinkel δ liegen beispielsweise zwischen 1° und 5°.

Das Werkzeug 2 ist einerseits um eine durch das Werkzeug 2 verlaufende Werkzeugachse A drehbar oder rotatorisch bewegbar und andererseits entlang oder axial zur Werkzeugachse A axial oder translatorisch bewegbar. Diese beiden Bewegungen werden, vorzugsweise durch eine Kontrolleinheit, insbesondere Maschinensteuerung, aufeinander abgestimmt oder synchronisiert, während das Werkzeug 2 an einer Oberfläche 60 des Werkstücks 6 und bis auf eine Lochtiefe LT in das Werkstück 6 eindringt. Die Werkzeugachse A bleibt während der Erzeugung des Gewindeloches 5 relativ zum Werkstück 6 ortsfest oder lagekonstant. Die Gewindemittelachse M des Gewindeloches 5 ist während des Prozesses koaxial zur Werkzeugachse A oder fällt mit dieser zusammen.

Das Werkzeug 2 ist vorzugsweise mittels eines Koppelbereichs an einem axial zur Werkzeugachse A verlaufenden oder ausgebildeten Werkzeugschaft 21 mittels eines nicht dargestellten Drehantriebs, insbesondere einer Werkzeugmaschine und/oder Antriebs- oder Werkzeugmaschinenspindel, rotatorisch oder in einer Drehbewegung um seine Werkzeugachse A in einem Vorwärtsdrehsinn VD und in einem entgegengesetzten Rückwärtsdrehsinn RD antreibbar. Ferner ist das Werkzeug 2 axial in einer axialen Vorwärtsbewegung VB oder einer axialen Rückwärtsbewegung RB axial zur Werkzeugachse A bewegbar, insbesondere mittels eines Axialantriebs, der wiederum in der Werkzeugmaschine und/oder Antriebs- oder Werkzeugmaschinenspindel vorgesehen sein kann.

An einem vom Koppelbereich des Schaftes 21 abgewandten freien Endbereich des Werkzeuges 2 ist ein Arbeitsbereich 20 vorgesehen. Der Arbeitsbereich 20 umfasst einen Bohrbereich 3 am stirnseitigen Ende des Werkzeuges 2 und einen axial bezüglich der Werkzeugachse A zum Bohrbereich 3 nach hinten oder zum Schaft 21 hin versetzten Gewindeerzeugungsbereich 4.

Der Bohrbereich 3 umfasst stirnseitige Bohr(haupt)schneiden 31 und 32, die schräg, insbesondere konisch, axial nach vorne verlaufend angeordnet sein können und in einer Bohrerspitze 33 zulaufen können, insbesondere in einem sich zur Bohrerspitze 33 verjüngenden Konus. Diese stirnseitigen Bohrschneiden 31 und 32 sind in dem Vorwärtsdrehsinn VD schneidend, im dargestellten Ausführungsbeispiel rechtschneidend, ausgebildet und tragen bei der Vorwärtsbewegung VB bei gleichzeitiger Drehbewegung in Vorwärtsdrehsinn VD Material des Werkstücks 6, das axial vor dem Werkzeug 2 liegt, spanabhebend ab..

Außerdem umfasst der in der Regel in axialer Richtung vergleichsweise kurz ausgebildete Bohrbereich 3 vorzugsweise auch nicht näher bezeichnete Führungsbereiche an seiner Außenwandung, die zur Eigenführung des Werkzeugs 2 in der erzeugten Bohrung dienen können und dazu an der Kernlochwandung anliegen oder nur wenig davon beabstandet sind. Anstelle oder zusätzlich zu den Führungsbereichen können auch Umfangsschneiden oder Mantelschneiden vorgesehen sein, die die Mantelwandung des Kernloches spanend bearbeiten oder vorbereiten, indem sie sich radial zur Werkzeugachse A nach außen anschließende Bereiche des Werkstücks 6 spanabhebend abtragen. Diese Mantelschneiden können dazu dienen, eine ausreichende Oberflächengüte auch der Mantelwandung oder Kernlochinnenwandung zu erreichen und verlaufen insbesondere vorwiegend parallel oder leicht nach hinten geneigt (zur Reibungsreduzierung) zur Werkzeugachse A auf einem radialen Abstand d/2 von der Werkzeugachse A, der dem halben Kernlochinnendurchmesser entspricht. Die Führungsbereiche 31 oder Umfangs- oder Mantelschneiden können unmittelbar an die stirnseitigen Bohrschneiden 31 und 32 anschließend ausgebildet und/oder angeordnet sein oder auch axial von diesen etwas versetzt sein.

Der Bohrbereich 3 hat einen Außendurchmesser oder Bohrdurchmessser d und erzeugt folglich eine Bohrung oder ein Kernloch mit diesem Innendurchmesser d im Werkstück 6. Die Bohrschneiden 31 und 32 kann man auch als Kernlochschneiden bezeichnen, da sie das Kernloch des Gewindeloches 5 erzeugen. Die äußerste zur Werkzeugachse A radiale Abmessung der Bohr- oder Kernlochschneiden 31 und 32 bestimmen dabei den Kernlochinnendurchmesser d. Der gewindelose untere oder innerste Bohrungsteilbereich 56 in dem Gewindeloch 5 gemäß FIG 11 hat noch die von dem Bohrbereich 3 abgebildete Gestalt.

Hinter dem Bohrbereich 3 oder den Bohr- oder Kernlochschneiden 31 und 32 nachgelagert oder in zur axialen Vorwärtsbewegung VB entgegengesetzter Richtung axial versetzt angeordnet umfasst das Werkzeug 2 ferner einen Gewindeerzeugungsbereich 4, der entlang einer Schraubenlinie (oder: Helix, Gewindegang), deren Steigung der Gewindesteigung P und deren Windungssinn dem Windungssinn des zu erzeugenden Innengewindes oder Gewindeganges 50 entspricht, verläuft oder ausgebildet ist. Die Schraubenlinie ist in diesem Sinne technisch und nicht als rein mathematische eindimensionale Linie zu verstehen, sondern hat auch quer zur mathematischen Linie eine gewisse Ausdehnung, die der entsprechenden Abmessung des Gewindeerzeugungsbereiches 4 entspricht. Mathematisch müsste man sonst von einer Schar von zueinander parallel verlaufenden Schraubenlinien oder eventuell von einem Schraubenband oder Helixband sprechen. Der Windungssinn des Gewindeerzeugungsbereiches 4 als Rechtsgewinde oder Linksgewinde entspricht der Überlagerung aus axialer Vorwärtsbewegung VB und Vorwärtsdrehbewegung VD.

Der Gewindeerzeugungsbereich 4 ragt im Allgemeinen radial zur Werkzeugachse A weiter nach außen oder hat einen größeren radialen Außenabstand zur Werkzeugachse A als der Bohrbereich 3 oder hat einen größeren Außendurchmesser D als der Außendurchmesser d des Bohrbereiches 3.

Der Gewindeerzeugungsbereich 4 umfasst einen oder mehrere, d.h. eine Anzahl n größer oder gleich 1, Gewindezähne, die schneidend und/oder formend ausgebildet sind. Vorzugsweise ist n = 2. Jeder Gewindezahn ist entlang der Schraubenlinie verlaufend ausgebildet oder ausgerichtet oder angeordnet. Jeder Gewindezahn weist ein Gewindezahnprofil als Wirkprofil auf, das sich im Allgemeinen als äußerste Abmessung oder Außenprofil des Gewindezahnes in einer Projektion entlang der Schraubenlinie ergibt oder darstellt und sich in das Werkstück bei der Gewindeerzeugungsbewegung abbildet, sei es durch Schneiden oder durch Formen oder Eindrücken. Wenn mehrere (n > 1) Gewindezähne vom Gewindeerzeugungsbereich 4 umfasst sind, so sind diese Gewindezähne wenigstens annähernd entlang der Schraubenlinie (oder in axialer Richtung) versetzt zueinander angeordnet. Unter eine solche Anordnung entlang der Schraubenlinie fallen auch Ausführungsformen, bei denen Gewindezähne leicht seitlich zu einer Ideallinie versetzt sind, beispielsweise um Gewindewirkprofile auch mit unterschiedlicher Bearbeitung an den Gewindeflanken oder eine unterschiedliche Aufteilung oder Überlagerung der Gewindewirkprofile auf das bzw. zu dem Gesamtgewindeprofil zu realisieren. Wichtig ist hinsichtlich dieser Anordnung der Gewindezähne lediglich, dass sich ihre Anordnung bei der Arbeitsbewegung auf einen Gewindegang im Werkstück mit derselben Gewindesteigung P abbildet.

Im in FIG 1 dargestellten Ausführungsbeispiel sind zwei Gewindezähne 41 und 42 vorgesehen, die beispielsweise um eine halbe oder allgemein 1/n der Gewindesteigung P zueinander axial versetzt sind, in Winkelrichtung also entsprechend einer halben Umdrehung oder um 180° versetzt sind. Die Gewindezähne, insbesondere 41 und 42, ragen radial von der Werkzeugachse A weiter nach außen als die Bohr- oder Kernlochschneiden 30 und 31, Der Außendurchmesser des Gewindeerzeugungsbereichs 4 und des Gewindeganges 50 und damit des Gewindelochs 5 ist mit D bezeichnet. Die radiale Differenz zwischen der äußersten Abmessung der Gewindeerzeugungszähne und der äußersten radialen Abmessung der Kernlochschneiden entspricht insbesondere der Profiltiefe des Gewindeprofils des zu erzeugenden Innengewindes oder, mit anderen Worten, der Differenz zwischen dem Radius D/2 des Gewindegrundes und dem Radius des Kernloches d/2.

Das Gewindeprofil des Innengewindes, also der Querschnitt durch den Gewindegang 50, wird erzeugt durch das aus den einzelnen Wirkprofilen der Gewindezähne, z.B. 41 und 42, bei vollständigem Durchlauf durch das Werkstück zusammengesetzte oder überlagerte Gewindewirkprofil.

Die in axialer Projektion auf die Werkzeugachse A gemessene Gewindeprofilbreite des Gewindewirkprofils ist mit c bezeichnet und entspricht dem maximalen Abstand der Gewindeprofilflanken. Der in axialer Projektion auf die Werkzeugachse A gemessene axiale Abstand zwischen zwei aufeinanderfolgenden Gewindeprofilen des Gewindeganges 50 ist die Gewindelücke b. Die Summe aus der Gewindelücke b und der Gewindebreite c entspricht hier der Gewindesteigung P.

Die Gewindezähne 41 und 42 sind im Allgemeinen durch Trennnuten 25, die insbesondere Spannuten oder auch Kühl- und/oder Schmiermittelnuten bilden, voneinander getrennt. Die Trennnuten 25 beginnen im Bohrbereich 3 und setzen sich durch den Gewindeerzeugungsbereich 4 hindurch insbesondere bis in den Schaftbereich fort und verlaufen vorzugsweis gedrallt unter einem konstanten oder variablen Drallwinkel, der typischerweise in einem Intervall von 0° bis 50°, insbesondere 20° bis 35° liegt.

In einer vorteilhaften Ausführungsform wird mit dem Werkzeug 2 oder einem anderen Werkzeug folgendes Verfahren durchgeführt:
Während einer ersten Arbeitsphase oder Gewindeerzeugungsphase wird mit dem Werkzeug 2 das Kernloch mittels des Bohrbereichs 3 erzeugt und gleich axial dahinter und zumindest teilweise gleichzeitig der Gewindegang 50 in der Kernlochwandung mittels des Gewindeerzeugungsbereichs 4 erzeugt. In dieser ersten Arbeitsphase wird die axiale Vorschubgeschwindigkeit v entlang der Werkzeugachse A auf die Drehgeschwindigkeit für die Drehbewegung um die Werkzeugachse A so abgestimmt und synchronisiert, dass bei einer vollen Umdrehung der axiale Vorschub der Gewindesteigung P entspricht. Die axiale Eindringtiefe (oder: der axiale Vorschub) T in Richtung der Werkzeugachse A gemessen von der Werkstückoberfläche 60 in dieser ersten Arbeitsphase entspricht der Gewindetiefe T_{G}. Die Variable T entspricht in einer üblichen NC-Maschinensteuerung der z-Achse.

Nun wird in einer an die erste Arbeitsphase unmittelbar anschließenden zweiten Arbeitsphase in einem Abbremsvorgang (oder: in einer Abbremsbewegung) das Werkzeug 2 in einem Drehwinkelintervall derart abgebremst, dass der axiale Vorschub V bei einem Drehwinkel von 360°, d.h. bei einer vollen Umdrehung, des Werkzeugs 2 kleiner als die Gewindesteigung P ist und bis auf Null abnimmt. In der Regel beginnt der Abbremsvorgang oder die zweite Arbeitsphase bei einem auf einen Drehwinkel von 360° bezogenen axialen Vorschub, der der Gewindesteigung P der ersten Arbeitsphase entspricht, also V = P, und reduziert dann den axialen Vorschub pro 360° Drehwinkel auf Werte unterhalb der Gewindesteigung P, also V < P. Der Abbremsvorgang ist als Abbremsung von der anfänglichen Gewindesteigung V = P bis auf Null am Ende oder an einem Umkehrpunkt, also V = 0, zu verstehen und muss nicht über das gesamte Drehwinkelintervall eine Verringerung des axialen Vorschubs V abhängig vom Drehwinkel (Abbremsbeschleunigung) beinhalten. Vielmehr sind auch Drehwinkelintervalle möglich, in denen der axiale Vorschub bezogen auf den Drehwinkel Null ist oder sogar vorübergehend negativ ist, also seine Richtung umkehrt. Dieser Abbremsvorgang erfolgt in einer bevorzugten Ausführungsform in definierten Teilschritten wie nachfolgend noch näher erläutert wird.

Diese Abbremsbewegung in der zweiten Arbeitsphase führt dazu, dass der Gewindeerzeugungsbereich 4 nun - in eigentlich atypischer oder funktionsfremder Weise - wenigstens eine Umfangsnut in der Kernlochwandung erzeugt. Der Vorgang in der zweiten Arbeitsphase kann deshalb außer als Abbremsvorgang auch als Umfangsnuterzeugung oder Freistichbewegung, bei rein schneidendem Werkzeug auch als Freischneidbewegung bezeichnet werden.

In FIG 1 sind die Gewindeerzeugungszähne 41 und 42 mit gleichem Außenradius D/2 und vorzugsweise gleichem Gewindewirkprofil, das schon dem Endprofil des Gewindeganges 50 entspricht, dargestellt. Die Gewindeerzeugungszähne 41 und 42 des Werkzeugs gemäß FIG 1 erzeugen in der zweiten Arbeitsphase eine Umfangsnut 53 mit dem durchgehenden Außendurchmesser D und der axialen Länge a, die sich aus dem gesamten axialen Vorschub der Abbremsbewegung in der zweiten Arbeitsphase bis zum Umkehrpunkt ergibt, erzeugen.

In FIG 11 sind dagegen zwei Umfangsnuten 51 und 52 dargestellt, wobei die erste Umfangsnut 51 einen zwischen dem Kernlochdurchmesser d und dem Gewindeaußendurchmesser D liegenden Außendurchmesser d' aufweist und die zweite Umfangsnut 52 einen Außendurchmesser hat, der dem Gewindeaußendurchmesser D entspricht.

Solche Umfangsnuten 51 und 52 können während der zweiten Arbeitsphase beispielsweise mit zwei um P/2 versetzten Gewindeerzeugungszähnen 41 und 42 wie beispielsweise in FIG 1 dargestellt, erzeugt werden, die wie folgt modifiziert werden: Es kann der erste Gewindeerzeugungszahn 41 in FIG 1 nur einen Außenradius d'/2 aufweisen und somit ein Anschnitt- oder Anfurchzahn sein, der den Gewindegang 50 nicht bis zur vollen Profiltiefe oder bis zum finalen Gewindegrund erzeugt, während der der zweite Gewindeerzeugungszahn 42 bereits den vollen Außendurchmesser D aufweist, also die volle Gewindeprofiltiefe erzeugt (Vollzahn).

Die Umfangsnut setzt sich somit in diesem Ausführungsbeispiel aus zwei Teilnuten zusammen, nämlich der ersten im Durchmesser kleineren Umfangsnut 51, die vom ersten Gewindeerzeugungszahn 41 erzeugt wird, und der mit dem vollen Durchmesser D ausgebildeten zweiten Umfangsnut 52, die vom zweiten Gewindeerzeugungszahn 42 erzeugt wird.

Diese Ausführungen sind nur beispielhaft. Bei einer nicht dargestellten anderen Anzahl oder Verteilung von Gewindeerzeugungszähnen ergeben sich entsprechend andere Umfangsnuten.

Wenn man die Umfangsnut(en), beispielsweise die Umfangsnuten 51 und 52 in FIG 11 oder die Umfangsnut 53 in FIG 1, in axialer Richtung kontinuierlich oder ununterbrochen erzeugen will sind, wird der axiale Vorschub V bei voller Umdrehung oder 360° insbesondere um mindestens b/n gegenüber P reduziert, um die Gewindelücke b zu schließen oder nicht mehr zu erzeugen, wobei n die Zahl der Gewindeerzeugungszähne im Gewindeerzeugungsbereich 4 ist.

Man kann die Freistichbewegung oder Abbremsbewegung, beispielsweise durch geeignete Wahl der Bewegungsparameter oder auch durch zusätzliche axiale Egalisierbewegungen, auch so ausführen, dass die Außenbreite am Gewindeprofil, insbesondere die Flanken, in der Umfangsnut nicht mehr sichtbar sind oder verschwinden und/oder die Umfangsnut nur noch eine zylindrische Gestalt hat. Damit könnte die Durchschraubbarkeit des erzeugten Werkstückgewindes verbessert oder ermöglicht werden.

In den in FIG 1 bis 11 dargestellten Ausführungsbeispielen ist n = 2 mit den beiden Gewindeerzeugungszähne 41 und 42 bzw. Umlaufnuten 51 und 52, so dass also der axiale Vorschub V beim Abbremsvorgang vorzugsweise kleiner als P - b/2 eingestellt wird. Das Gewindewirkprofil der Gewindeerzeugungszähne, hier 41 und 42, erzeugt dann in der Überlagerung bei der Bewegung kein Gewinde mehr, sondern wenigstens eine durchgehende Umfangsnut, die durchgehend den Außendurchmesser hat, der dem des zugehörigen Gewindeerzeugungszahnes auf seiner jeweiligen Bahn bei der Abbremsbewegung in der zweiten Arbeitsphase entspricht.

Vorne bleibt durch den Bohrbereich 3 des Werkzeugs 2 ein Bohrungsteilbereich 56 am Grund des Gewindelochs 5, auf den sich die Gestalt des Bohrbereichs 3 beim Bohren abbildet. Die Gesamttiefe oder Lochtiefe oder gesamte axiale Abmessung des Gewindeloches 5 nach der zweiten Arbeitsphase ist mit T_{L} bezeichnet und entspricht im Wesentlichen der Summe aus der Gewindetiefe T_{G} als axialem Vorschub in der ersten Arbeitsphase und der axialen Nutlänge a als axialem Vorschub in der zweiten Arbeitsphase sowie der axialen Tiefe des von dem Bohrbereich 3 erzeugten, stehenbleibenden Bohrungsteilbereichs 56.

Wenn die Gesamttiefe oder Lochtiefe T_{L} des Gewindeloches 5 erreicht ist, kommt das Werkzeug 2 zum Stillstand und erreicht einen Umkehrpunkt UP. Es wird nun am Umkehrpunkt UP unmittelbar eine Reversier- oder Rückwärtsbewegung RB eingeleitet, mit der das Werkzeug 2 zunächst in einer ersten Reversierphase durch die Umlaufnut(en) 51, 52, 53 bis zum Gewindegang 50 zurückbewegt wird und dann in einer zweiten Reversierphase durch das Gewinde bzw. den Gewindegang 50 nach außen aus dem Gewindeloch 5 und dann dem Werkstück 6 herausbewegt wird oder ausgefädelt wird. Wegen des kleineren Durchmessers wird auch bei der Reversierbewegung das Gewinde nicht durch den Bohrbereich 3 verletzt. Zu einer bevorzugten Ausbildung der ersten Reversierphase wird später noch mehr ausgeführt.

In der zweiten Reversierphase der Rückwärtsbewegung RB werden wieder der axiale Vorschub und die Drehbewegung des Werkzeugs 2 aufeinander gemäß der Gewindesteigung P synchronisiert, um das Gewinde nicht zu beschädigen, nur dass jeweils die Richtung des axialen Vorschubs in der Pfeilrichtung der Rückwärtsbewegung RB gegenüber der Pfeilrichtung der Vorwärts- oder Arbeitsbewegung VB vertauscht oder entgegengesetzt ist und die Drehrichtung der Drehbewegung ebenfalls umgekehrt wird, also statt dem Vorwärtsdrehsinn VD nun der Rückwärtsdrehsinn VR eingestellt wird.

Die Gewindeachse oder Mittelachse des Gewindes mit dem Gewindegang 50 ist mit M bezeichnet und fällt während der gesamten Arbeitsbewegung, also sowohl in der ersten Arbeitsphase als auch in der zweiten Arbeitsphase, und auch während der Reversierbewegung, also sowohl in der ersten Reversierphase als auch in der zweiten Reversierphase, mit der Werkzeugachse A des Werkzeugs 2 zusammen oder ist koaxial zu dieser.

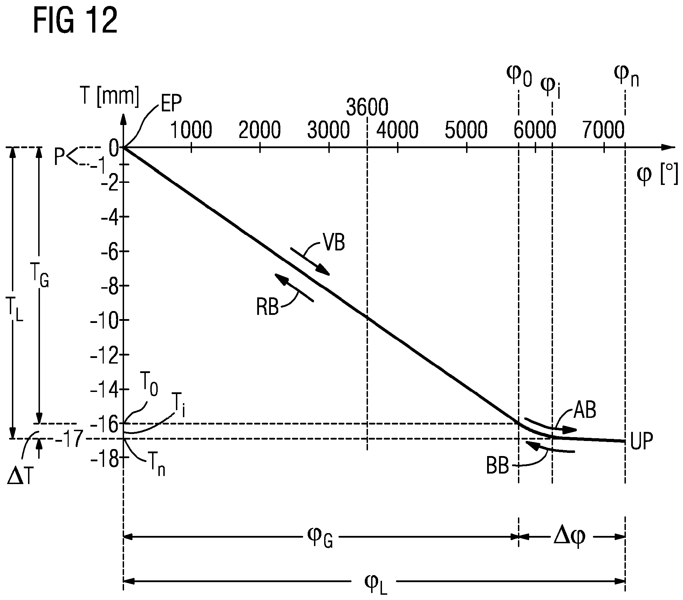

Die FIG 12 zeigt anhand eines Diagramms ein Ausführungsbeispiel eines Prozesses (oder: Verfahrens) oder eines Steuerungsablaufs, der zur Erzeugung eines Gewindeloches im Werkstück, also im Vollmaterial des Werkstücks ohne vorherige Kernbohrung, beispielsweise eines Gewindeloches gemäß FIG 11, verwendet werden kann.

Im Rahmen des Verfahrens gemäß der Erfindung kann außer einem Werkzeug wie beispielsweise gemäß FIG 1, auch ein kombiniertes Bohr- und Gewindebohrwerkzeug, wie aus der eingangs erwähnten DE 10 2016 008 478 A1 bekannt, oder ein kombiniertes Bohr- und Gewindefurchwerkzeug, wie aus der eingangs erwähnten DE 10 2005 022 503 A1 bekannt, verwendet werden.

In dem Graphen der Funktion T (φ) gemäß FIG 12 ist, ohne Beschränkung der Allgemeinheit, insbesondere die Erzeugung eines Gewindeloches, also ein vollständiger Gewindelocherzeugungszyklus gemäß der Erfindung in einem Ausführungsbeispiel veranschaulicht, insbesondere ein Gewindelocherzeugungszyklus mit erster Arbeitsphase, zweiter Arbeitsphase, Umkehrpunkt, erster Reversierphase und zweiter Reversierphase, beispielsweise wie bereits anhand FIG 1 bis 10 beschrieben.

In dem Diagramm der FIG 12 ist auf der vertikalen Achse oder Ordinate die Eindringtiefe (oder: vertikale oder axiale Koordinate) T als in axialer Richtung, d.h. entlang der Werkzeugachse A und der zur Werkzeugachse A koaxialen Gewindemittelachse M, verlaufende und gemessene Koordinate für den axialen Vorschub in mm aufgetragen. Die Werte für die Eindringtiefe T nehmen von dem ganz oben dargestellten Wert, der insbesondere der axialen Eintrittsposition an der Werkstückoberfläche 60 des Werkstücks 6 entspricht (die auch in FIG 2 dargestellt ist) nach unten bis zu einem untersten Wert ab, sind also als negative Werte nach unten aufgetragen. Der Zahlenbereich geht in dem Beispiel der FIG 1 bespielhaft von T = 0 mm als oberstem Wert bis z.B. T = - 17 mm als unterstem Wert, es sind aber, je nach gewünschter Gewindelänge und Werkzeuggestaltung, selbstverständlich auch andere Werte möglich.

Auf der horizontalen Achse oder Abszisse ist der (aufsummierte) Drehwinkel φ der Drehbewegung des Werkzeugs 2 um dessen Werkzeugachse A in Grad [°] aufgetragen. Der Drehwinkel φ geht aus von dem Eintrittsdrehwinkel oder anfänglichen Drehwinkel φ = 0° bei der axialen Eintrittsposition T = 0 mm bei einem Eintrittspunkt EP = (0, 0) und nimmt nach rechts zu positiven Werten hin bis zu dem auf der Abszisse als letzten Wert eingetragenen Wert von φ = 8000° zu. Der Drehwinkel φ nimmt bei der Vorwärtsdrehbewegung VB oder in einem Vorwärtsdrehsinn hin zu positiven Werten zu und bei der Rückwärtsdrehbewegung RD oder einem dem Vorwärtsdrehsinn entgegengesetzten Rückwärtsdrehsinn ab. Dabei entspricht ± 360° einer vollständigen Umdrehung des Werkzeugs 2 um seine Werkzeugachse A.

Die Funktion T (φ) beschreibt die Abhängigkeit oder Synchronisierung der axialen Vorschubbewegung in der axialen Koordinate (oder: Tiefe im Werkstück 6) T von oder mit der Drehbewegung in der Koordinate φ und wird typischerweise in einer Steuerung wie einer numerischen Steuerung oder CC-Steuerung der Werkzeugmaschine, insbesondere in Form einer vorab ermittelten und gespeicherten Wertetabelle oder auch als Funktion zur jeweiligen Berechnung, hinterlegt. Nach der in der CNC-Technik üblichen Nomenklatur entspräche die T-Koordinate der Z-Achse (Spindelachse), wobei die positive Richtung konventionell vom Werkstück zum Werkzeug verläuft, wie beispielsweise in FIG 1 bei der Koordinate T eingezeichnet.

Der Graph (φ; T (φ)) der Funktion T (φ) verläuft gemäß FIG 12 zunächst einen für einen Gewindebohrer oder Gewindefurcher typischen und der Erzeugung des Gewindeganges entsprechenden linearen Abschnitt, d.h. in Form einer Geraden, von dem Ausgangspunkt φ = 0° und T = 0 mm bis zu einem Gewindeendpunkt bei φ₀ und T(φ₀), bei dem der Gewindegang oder die eigentliche Gewindeerzeugung endet und der in dem dargestellten Beispiel ohne Beschränkung der Allgemeinheit - 16 mm beträgt.

Es gilt also die Darstellung der linearen Funktion T (φ) in diesem Abschnitt von φ = 0 bis φ = φ₀ und T = T (0), insbesondere 0 mm, bis T = T(φ₀), insbesondere - 16 mm: $\left|T\left(φ\right)\right| = \left(P/360°\right) φ$ mit der Gewindesteigung P.

Die Steigung oder Ableitung dT/dφ in diesem Bereich ist konstant und entspricht dem Betrage nach P / 360°. Das bedeutet also für die Gewindesteigung $P = 360 ° \left|dT/dφ\right|$

Da bei dem gewählten Beispiel der FIG 12 der zum eingetragenen Winkelwert φ = 3600° entsprechende Wert für die Gewindetiefe T = - 10 mm ist, ist die Steigung der Geraden - 1 mm / 360° und damit die Gewindesteigung P = 1 mm. Aufgrund des zur Drehung synchronisierten axialen Vorschubs entlang der Eindringtiefe T bzw. Gewindemittelachse M sind bei einer vollständigen Umdrehung um 360° alle Komponenten des Werkzeugs 2 um die Gewindesteigung P weitergewandert.

Der lineare Abschnitt der Funktion T (φ) entspricht der üblichen synchronisierten Gewindebohrer- oder Gewindefurcher-Kinematik und kann in einer CNC-Steuerung beispielsweise als schon fest programmierte Wegbedingung (Adressbuchstabe G oder G-Funktion) hinterlegt sein, z.B. als G33, insbesondere G331 und G332, wobei die Gewindesteigung P als Interpolationsparameter parallel zur Z-Achse eingegeben wird, typischerweise unter dem Adressbuchstaben K in der CNC-Nomenklatur. In diesem linearen Abschnitt erfolgt der Gewindeerzeugungsprozess, insbesondere zur Erzeugung des Gewindeganges 50 in der ersten Arbeitsphase, von dem insbesondere in FIG 3 bis 6 verschiedene Positionen oder Abschnitte mit zunehmender Eindringtiefe T gezeigt sind, und wird als Resultat ein Gewinde der Gewindetiefe T_{G} als Intervalllänge der Eindringtiefe T, insbesondere von T = 0 bis T₀, über die Intervalllänge oder den Drehwinkelbereich φ_{G} des Drehwinkels φ , insbesondere von φ = 0° bis φ = φ₀ erzeugt. Im Beispiel der FIG 12 findet der Gewindeerzeugungsprozess **(erste Arbeitsphase)** von φ = 0° bis φ = φ₀ und von der entsprechenden Eindringtiefe T = 0 mm bis T = - 16 mm statt. Die Steigung der Geraden in FIG 12 zwischen φ = 0 und φ = φ₀ entspricht der axialen Vorschubgeschwindigkeit des Werkzeugs 2, die gemäß der Gewindesteigung P auf den Drehwinkel φ synchronisiert ist.

Die zeitliche Abhängigkeit des Drehwinkels φ(t) als Funktion der Zeit t und damit Eindringtiefe T(t) als Funktion der Zeit t kann während des Gewindeerzeugungsprozesses prinzipiell - auch in weiten Bereichen - variiert werden. Vorzugsweise sind aber die Drehgeschwindigkeit dφ/dt und die axiale Vorschubgeschwindigkeit dT/dt während der Arbeitsbewegung VB jeweils konstant. Wenn die Drehgeschwindigkeit dφ/dt verändert wird, muss also entsprechend auch die axiale Vorschubgeschwindigkeit dT/dt, also die Ableitung der Eindringtiefe T nach der Zeit t entsprechend angepasst werden, damit die Synchronisierung des axialen Vorschubs Z gemäß der Beziehung Z = P/360° erhalten bleibt. Dies ist die bekannte und in Werkzeugmaschinensteuerungen oder NC-Steuerungen implementierte Kinematik bei der Gewindeerzeugung mittels eines axial arbeitenden Gewindewerkzeugs wie eines Gewindebohrers oder Gewindeformers.

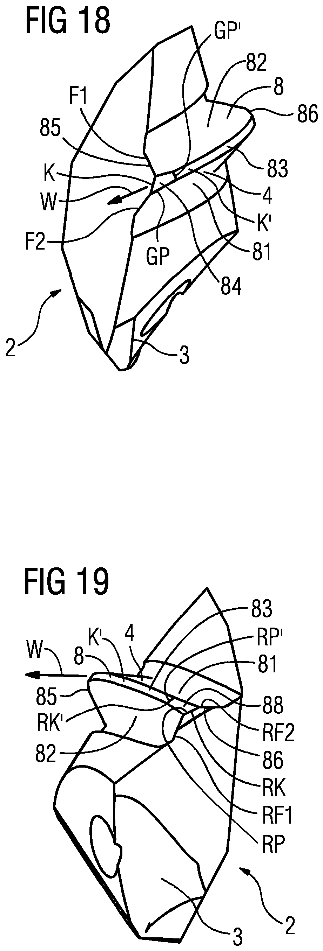

Im Anschluss an den Gewindeerzeugungsprozess (erste Arbeitsphase) erfolgt nun, in der zweiten Arbeitsphase, ein Abbremsvorgang oder eine Abbremsbewegung AB in einem Drehwinkelbereich Δφ zwischen den Drehwinkelwerten φ₀ und φₙ und einem zugehörigen Eindringtiefenbereich ΔT, der im Beispiel der FIG 18 von T(φ₀) = - 16 mm bis T(φₙ) = - 17 mm reicht. Am Ende der Abbremsbewegung AB ist ein Umkehrpunkt UP erreicht, bei dem das Werkzeug 2 sowohl hinsichtlich der Drehbewegung als auch hinsichtlich der axialen Vorschubbewegung kurzzeitig zu Stillstand kommt. Beim Umkehrpunkt UP sind der maximale Drehwinkelbereich φ_{L}, wobei φ_{L} = φ_{G} + Δφ, und die maximale Eindringtiefe T_{L} für die Erzeugung des Gewindeloches erreicht.

Während des Abbremsvorganges oder der Abbremsbewegung AB wird die axiale Vorschubgeschwindigkeit abhängig vom Drehwinkel, die der Steigung des dargestellten Graphen für die Funktion T(φ) entspricht, verringert, und zwar gemäß einer Abhängigkeit oder Funktion, die vorzugsweise streng monoton (Steigung immer fallend) oder monoton (Steigung fallend und ggf. abschnittsweise auch Null) ist, jedoch ggf. auch in Teilabschnitten auch wieder vorübergehend leicht ansteigen kann. Vorzugsweise wird die Steigung in einer vorgegebenen Anzahl n von einzelnen definierten programmierten oder eingespeicherten Teilschritten oder Abbremsschritten Sᵢ sukzessive verringert, wobei die Gesamtzahl oder Anzahl n eine natürliche Zahl mit n > 1 ist, im Allgemeinen 200 > n > 2, insbesondere 20 > n > 5 gewählt ist und wobei i der Zählindex für den Abbremsschritt Sᵢ ist und zwischen 1 und n liegt, also 1 ≤ i ≤ n gilt.

In jedem Teilschritt oder Abbremsschritt Sᵢ ist vorzugsweise eine der Steuerung eines Gewindeprozesses entsprechende Synchronisierung von axialem Vorschub T (oder von der Vorschubgeschwindigkeit dT/dt) und dem Drehwinkel φ (oder der Drehgeschwindigkeit dφ/dt) eingestellt oder programmiert, indem jedem Abbremsschritt Sᵢ mit 1 ≤ i ≤ n eine zugehörige vorgegebene Funktion Tᵢ(φ) mit einem zugehörigen Werteintervall [Tᵢ₋₁, Tᵢ] über dem zugehörigen Drehwinkelintervall [φᵢ₋₁, φᵢ] zugeordnet oder programmiert wird.

Die Funktion Tᵢ(φ) ist vorzugsweise linear, der Graph also (idealisiert) eine Gerade.

Dabei nimmt die programmierte oder eingespeicherte Steigung von jedem Abbremsschritt Sᵢ zum nächsten Abbremsschritt Sᵢ₊₁ stufenweise oder sukzessive ab, d.h. | dTᵢ/dφ | > | dTᵢ₊₁/dφ |. Die Steigung entspricht jeweils einem Steigungsparameter.

In einer vorteilhaften Ausführungsform wird dieser Steigungsparameter als Gewindesteigung in der CNC-Steuerung programmiert, also insbesondere als Interpolationsparameter entlang der z-Achse oder der Gewindeachse M in einer G33, insbesondere G331 und G332, Wegbedingung. Dadurch können die bereits in der Steuerprogrammierung vorgegebenen Wegbedingungen oder G-Funktionen genutzt werden und es muss nur der Eingabeparameter der Gewindesteigung sukzessive geändert oder neu programmiert werden.

Somit wird also in jedem Abbremsschritt Sᵢ der zugehörige Steigungsparameter ${P}_{i} = \left|{dT}_{i}/dφ\right|$ programmiert oder eingestellt, wobei ${P}_{i + 1} < {P}_{i}$ für alle i mit 1 ≤ i ≤ n. Ferner ist ${P}_{i} < P$ d.h. die Steigung in der zweiten Arbeitsphase oder während der Abbremsbewegung AB kleiner ist als die Gewindesteigung P während der ersten Arbeitsphase. Insbesondere aber ohne Beschränkung der Allgemeinheit kann Pᵢ = P (n - i)/n sein. Im Allgemeinen ist der letzte Wert Pₙ immer noch größer als 0, auch wenn er der kleinste Wert der Werte Pᵢ ist.

Die Werte von Pᵢ können beispielsweise so gewählt werden, dass aus der Gewindesteigungsbewegung heraus eine stetig fortgeführte Bewegung in den Freischneidbereich möglich ist. Es soll insbesondere möglichst die Geschwindigkeit des Werkzeugs beibehalten werden. Daraus folgend können beispielsweise verschiedene Bedingungen formuliert werden, die in Näherungsfunktionen abgebildet werden können.

Dabei gilt in jedem Abbremsschritt Sᵢ für alle i mit 1 ≤ i ≤ n die Beziehung: $T \left(φ\right) = {T}_{i - 1} - \left({P}_{i}/360°\right) \left(φ-{φ}_{i - 1}\right)$ für φ ∈ [φᵢ₋₁, φᵢ] mit den Randbedingungen T(φᵢ₋₁) = Tᵢ₋₁ und T(φᵢ) = Tᵢ.

Der Drehwinkelbereich Δφ für die Abbremsbewegung AB in der zweiten Arbeitsphase ist im Allgemeinen kleiner gewählt als der Drehwinkelbereich φ_{G} für die Gewindeerzeugung in der ersten Arbeitsphase, insbesondere ist Δφ < 0,5 φ_{G} und vorzugsweise Δφ < 0,2 φ_{G} gewählt. Das kann insbesondere davon abhängen, wie groß die nutzbare Gewindelänge ist. Ein anderer Einflussfaktor ist die beabsichtigte Funktion im Freistich. Falls man neben dem reinen Abbremsen zusätzlich noch weitere Drehungen zum Freischneiden der Späne machen möchte, können wieder Umdrehungen hinzukommen (siehe weiter unten zu FIG 21 und 22)

Der Eindringtiefenbereich (oder: die maximale Eindringtiefe) ΔT für die Abbremsbewegung AB in der zweiten Arbeitsphase ist im Allgemeinen kleiner gewählt als der Eindringtiefenbereich oder die Gewindelänge T_{G} für die Gewindeerzeugung in der ersten Arbeitsphase, insbesondere ist ΔT < 0,5 T_{G}, vorzugsweise ΔT < 0,2 T_{G} gewählt.

Der Eindringtiefenbereich ΔT für die Abbremsbewegung AB kann insbesondere gleich P gewählt werden. Ebenso ist ein Eindringtiefenbereich ΔT kleiner P möglich, um die Gewindelochtiefe kleiner zu halten, z.B. 0,5 P oder auch 0,25 P. Aus Gründen der Zerspanung kann es eventuell auch günstig sein, größere Freistichhöhen oder einen größeren Eindringtiefenbereich ΔT zu wählen, insbesondere bis zu 2 P und in Ausnahmefällen auch größer.

In einem Ausführungsbeispiel einer Abbremsbewegung AB in einem Drehwinkelbereich Δφ und einem zugehörigen Eindringtiefenbereich ΔT sei beispielhaft und ohne Beschränkung der Allgemeinheit n = 10 gewählt und sind somit zehn Abbremsschritte S₁ bis S₁₀ mit den zugehörigen Steigungsparametern P₁ bis P₁₀ vorgesehen. Der Drehwinkelbereich Δφ ist entsprechend aufgeteilt in die n = 10 Drehwinkelintervalle [φ₀, φ₁], [φ₁, φ₂],..., [φᵢ₋₁, φᵢ], [φᵢ, φᵢ₊₁],... [φ₉, φ₁₀] und diesen Intervallen zugehörig sind die entsprechenden Eindringtiefenintervalle [T₀, T₁], [T₁, T₂], ...,[Tᵢ₋₁, Tᵢ], [Tᵢ, Tᵢ₊₁],..., [T₉, T₁₀], in die der Eindringtiefenbereich ΔT aufgeteilt ist, der im Beispiel der FIG 12 von T(φ₀) = -16 mm bis T(φ₁₀) = - 17 mm reicht und/oder der Gewindesteigung - P = - 1 mm entspricht. Jedem Intervall entspricht ein Teilschritt Sᵢ.

Es wird nun jedem dieser Intervalle jedes Abbremsschrittes Sᵢ ein zugehöriger Steigungsparameter Pᵢ, insbesondere als Gewindesteigung oder Interpolationsparameter der CNC-Steuerung, zugeordnet, also den beiden Intervallen [φ₀, φ₁] und [T₀, T₁] die Steigung P₁, dem Intervallpaar [φ₁, φ₂] und [T₁, T₂] die Steigung P₂ und so weiter bis zur Steigung P₁₀ für das letzte Intervallpaar [φ₉, φ₁₀] und [T₉, T₁₀].

Die Steigungswerte P₁ bis P₁₀ werden so gewählt, dass Pᵢ₊₁ < Pᵢ ist für i = 1 bis i = n, insbesondere n = 10. In jedem Teilabschnitt oder Abbremsschritt Sᵢ bleibt die Gewindesteigung P₁ bis P₁₀ konstant, so dass sich im Wesentlichen gerade Teilabschnitte des Graphen der Funktion T (φ) ergeben, in denen eine synchronisierte "Gewindebewegung" stattfindet, also die axiale Vorschubgeschwindigkeit dem Quotienten aus Pᵢ/360° entspricht.

Bevorzugt werden die Eindringtiefeintervalle in den Abbremsschritten Sᵢ für alle i mit 1 ≤ i ≤ n (hier z.B. n = 10) gleich groß gewählt, so dass die Länge der Intervalle T₁ - T₀ = T₂ - T₁ = Tᵢ - Tᵢ₋₁ = Tᵢ₊₁ - Tᵢ = Tₙ - Tₙ₋₁ gleich oder äquidistant gewählt ist, also ${T}_{i} - {T}_{i - 1} = ΔT / n .$

Da der axiale Vorschub in jedem Teilabschnitt oder Teilintervall in diesem Ausführungsbeispiel konstant gewählt ist, da Tᵢ₊₁ - Tᵢ für alle i gleich oder äquidistant gewählt ist, ergeben sich bei geringer werdender Steigung Pᵢ und damit abnehmender axialer Vorschubgeschwindigkeit größer werdende Drehwinkelintervalle φᵢ₊₁ - φᵢ ${φ}_{i + 1} - {φ}_{i} > {φ}_{i} - {φ}_{i - 1}$ in dem Drehwinkelbereich Δφ in den Abbremsschritten Sᵢ. D.h. der Drehwinkelabstand φ₂ - φ₁ ist kleiner als der Drehwinkelabstand φ₃ - φ₂ und der Drehwinkelabstand φᵢ₊₁ - φᵢ ist größer als der Winkelabstand φᵢ - φᵢ₋₁. Den größten Winkelabstand oder Winkelbereich deckt der letzte Teilabschnitt ab zwischen den Drehwinkelwerten φ₁₀ - φ₉. Dies entspricht einem kontinuierlichen und in jedem Teilabschnitt oder Abbremsschritt Sᵢ verlangsamten Abbremsvorgang.

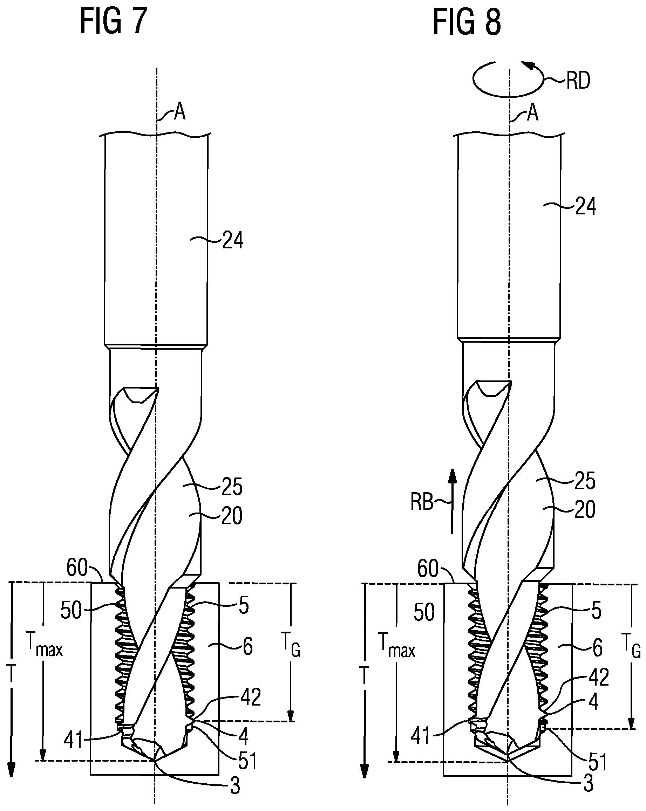

Während der Abbremsbewegung AB wird die zeitliche Abhängigkeit der Drehgeschwindigkeit dφ/dt und die axiale Vorschubgeschwindigkeit dT/dt so gewählt oder gesteuert oder programmiert, dass das Werkzeug 2 am Umkehrpunkt UP = (φₙ, Tₙ) bzw. (φ₁₀, T₁₀) zur Ruhe kommt, also dφ/dt = 0 und dT/dt = 0 bei φ = φₙ bzw. T = Tₙ oder bei φ = φ₁₀ bzw. T = T₁₀. Das Werkzeug 2 am Umkehrpunkt UP ist auch in FIG 7 gezeigt. Die Reduzierung der Drehgeschwindigkeit dφ/dt und der axialen Vorschubgeschwindigkeit dT/dt auf 0 abhängig von der Zeit t kann z.B. kontinuierlich während der Abbremsbewegung AB erfolgen oder auch beispielsweise erst in dem letzten Abbremsschritt Sₙ oder S₁₀.

Aus den Trägheiten des Antriebssystems, insbesondere der Steuerung und der Maschinenantriebe und der Massenträgheit der bewegten Komponenten folgen physikalisch *in realiter* nicht exakt lineare, sondern etwas abgerundete Verläufe der Graphen in den Abbremsschritte S₁ bis S₁₀ oder bei der Abbremsbewegung AB. Idealisiert dargestellt oder in der Programmierung der Abbremsbewegung selbst hinterlegt ergibt sich jedoch die beschriebene Abfolge von linearen Funktionen oder aneinandergereihten linearen Abschnitten mit stufenweise abnehmender Steigung, d.h. stufenweise abnehmender jeweils konstanter Vorschubgeschwindigkeit, in den einzelnen Abbremsschritten Sᵢ beispielsweise S₁ bis S₁₀.

Vor Einleitung einer Ausfahr- oder Reversierbewegung kann man ggf. noch einen Zwischenschritt durchführen, etwa einen Säuberungsvorgang. Hier kann man beispielsweise Spanwurzelreste durch weitere Drehung des Werkzeugs entfernen oder die Umfangsnut von Resten der Gewindespitzen säubern, um einen saubereren zylindrischen Bereich zu bekommen. Dann ließe sich eine Schraube noch besser eindrehen.

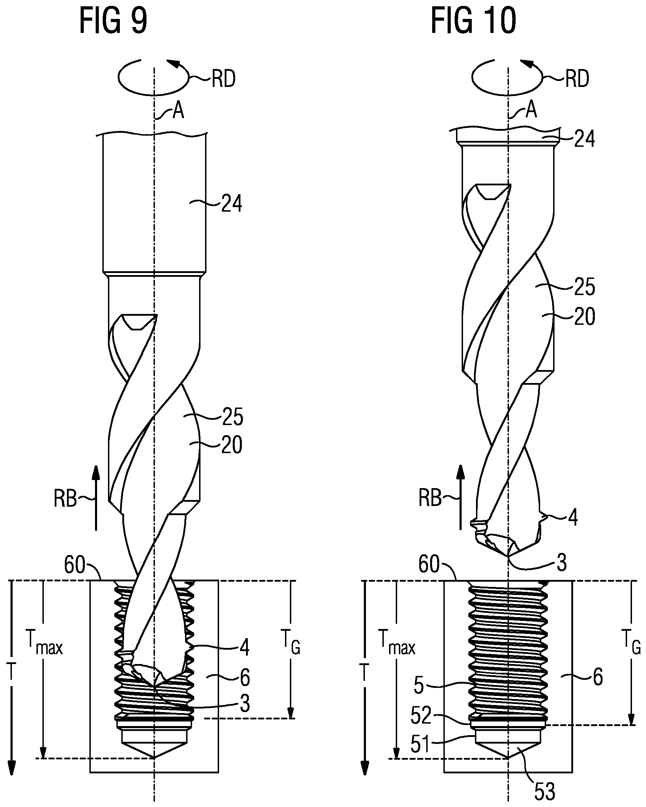

Nach Erreichen des Umkehrpunktes UP wird nun in einer Ausführungsform, wie insbesondere in FIG 12 dargestellt, eine Reversierbewegung oder Rückwärtsbewegung RB eingeleitet, die zunächst in einer ersten Reversierphase eine Beschleunigungsbewegung BB umfasst bis zum Einfädeln in den Gewindegang 50, was beispielsweise in FIG 8 dargestellt ist, und in einer zweiten Reversierphase eine Rückwärtsbewegung RB, in der das Werkzeug 2 durch den Gewindegang 50 synchronisiert nach außen ausgefädelt wird, was beispielsweise in FIG 9 dargestellt ist. In einer vorteilhaften Ausführungsform kann nun die Steuerkurve oder Funktion gemäß FIG 12 in umgekehrter Reihenfolge und/oder symmetrisch zum Umkehrpunkt UP verwendet oder durchlaufen werden.

Die Drehbewegung wird für die Rückwärtsbewegung RB bzw. BB vom Vorwärtsdrehsinn VD in den Rückwärtsdrehsinn RD umgekehrt, d.h. der Drehwinkel φ ausgehend von φ = φₙ bzw. φ = φ₁₀ vorzugsweise beim Umkehrpunkt UP reduziert oder in negativer Richtung zurückgedreht, bis schließlich wieder der Ausgangswert φ = 0 erreicht ist und das Werkzeug 2 aus dem Werkstück 6 austritt. Die vorzugsweise unverändert übernommene Abhängigkeit oder Funktion T(φ) führt nun dazu, dass die Eindringtiefe T mit abnehmendem Drehwinkel betragsmäßig kleiner wird, also von T = Tₙ bzw. T = T₁₀ beim Umkehrpunkt UP wieder bis auf T = 0 beim Eintrittspunkt EP bei φ = 0 abnimmt, der somit also zugleich auch der Austrittspunkt ist. Insbesondere entspricht die erste Reversierphase der zweiten Arbeitsphase und die zweite Reversierphase der ersten Arbeitsphase.

Insbesondere kann auch eine Ausführungsform für die zweite Arbeitsphase in reversierter Reihenfolge für die erste Reversierphase verwendet werden. Es kann also in der ersten Reversierphase ausgehend vom Umkehrpunkt UP die gleiche Abhängigkeit oder Funktion T(φ) in entgegengesetzter Reihenfolge für die Beschleunigungsbewegung BB in Umkehrung der Abbremsbewegung AB verwendet werden.

Es können aber auch andere Funktionen T(φ) und Teilschritte verwendet werden, die vorzugsweise zu dem Punkt (φ₀, T₀,) zurückführen, an dem auch die Abbremsbewegung AB begann bzw. die erste Arbeitsphase endete, so dass der richtige Einfädelpunkt für das Werkzeug für das Zurückfahren durch den Gewindegang 50 erreicht werden kann.

Vorzugsweise wird ausgehend von dem Endwinkelwert φₙ oder φ₁₀ in umgekehrter Reihenfolge zunächst eine Beschleunigungsphase als erste Reversierphase mit einer Beschleunigungsbewegung BB durchgeführt mit den gleichen Inkrementalschritten. Diese Schritte sind nunmehr jedoch Beschleunigungsschritte Sⱼ mit n+1 ≤ j ≤ 2 n sind, beginnend mit S₁₁ bis S₂₀ für n =10. Zugeordnet ist jedem dieser Beschleunigungsschritte Sⱼ ein zugehöriges Drehwinkelintervall [φ₁₀, φ₁₁], [φ₁₁, φ₁₂],..., [φⱼ₋₁, φⱼ], [φⱼ, φᵢ₊₁],... [φ₁₉, φ₂₀], wobei φⱼ aus der ersten Reversierphase einfach φᵢ aus der zweiten Arbeitsphase entspricht, wenn man i + j = n setzt. Die Steigungsparameter bleiben ebenfalls gleich, nur in umgekehrter Reihenfolge, also werden sie von P₁₀ über P₉, P₈ bis zu P₁ für die Teilabschnitte der Steuerkurve gemäß FIG 12 von rechts nach links durchlaufen, bis der Tiefenwert T₀ erreicht wird. Es wird ein neuer Winkelwert φ₁₁ zeitlich nach dem Winkelwert φ₁₀ angenommen und es entspricht das Intervall [φ₁₀ , φ₁₁] dem Intervall [T₁₀, T₉], mit der Gewindesteigung P₁₀ und das anschließende Winkelintervall [φ₁₁, φ₁₂] dem Eindringtiefenintervall [T₉, T₈] mit der entsprechenden Gewindesteigung P₉ usw. bis zum letzten Teilabschnitt von [φ₁₉, φ₂₀] entsprechend [T₁, T₀] mit der Gewindesteigung P₁.

Im Anschluss wird dann in umgekehrter Richtung der FIG 12 der lineare Abschnitt der Kurve von φ₀ bis φ = 0 entsprechend der Eindringtiefe T von T₀ bis zu T = 0 durchlaufen. Die der Steigung der Geraden in FIG 12 entsprechende axiale Vorschubgeschwindigkeit bei der Rückwärtsbewegung ist nun wieder P/360° mit umgekehrter Richtung. Dadurch wird das Werkzeug gerade umgekehrt durch das in der Vorwärtsbewegung erzeugte Gewinde geführt, ohne dass in dem Gewinde eine Beschädigung des erzeugten Gewindeganges stattfindet. Die Rückwärtsbewegung ist also genau so synchronisiert wie die Vorwärtsbewegung , nur mit umgekehrter Drehrichtung, so dass sich der Winkel φ von dem Winkel φₙ gerade wieder rückwärts in seinem Wert abnimmt bis auf φ = 0 und auch bei umgekehrter axialer Vorschubgeschwindigkeit nunmehr die Gewindetiefe von T = T₀ bis T = 0 mathematisch gesehen zunimmt.

Die gleiche Steuerkurve oder Funktion T(φ) wie in der Vorwärtsbewegung VB in den beiden Arbeitsphasen auch in der Rückwärtsbewegung RB in den beiden Reversierphasen zu verwenden, hat einerseits den Vorteil, dass sich das Werkzeug 2 positionsgenau oder bewegungsgenau steuern lässt und sich insbesondere beim Einfädeln in den Gewindegang 50 in der richtigen Stellung befindet, und derart die Kräfte beim Reversieren sehr gering gehalten werden können und/oder eine hohe Rückfahr- oder Ausfahrgeschwindigkeit ermöglicht wird.

In einer Ausführungsform einer Umsetzung der beschriebenen Abhängigkeiten oder Funktionen für T(φ) werden die Werte der Eindringtiefe T als gemessene oder von der Steuerung oder Programmierung vorgegebene Eingabeparameter verwendet und ergeben sich die zugehörigen Werte des Drehwinkels φ aus der Abhängigkeit mittels der zugeordneten Steigungsparameter P und Pᵢ.

Es kann also ein NC-Programm für Gewindebohren oder Gewindefurchen gewählt werden, insbesondere mit einer G33, insbesondere G331 und G332, Wegbedingung mit einzugebender Gewindesteigung, und es kann nun eine Folge oder Menge von Werten für die Eindringtiefe angegeben werden, bei denen auf einen neuen Gewindesteigungsparameter umgeschaltet wird, wobei der Gewindesteigungsparameter bis zum nächsten Wert der Eindringtiefe beibehalten wird.

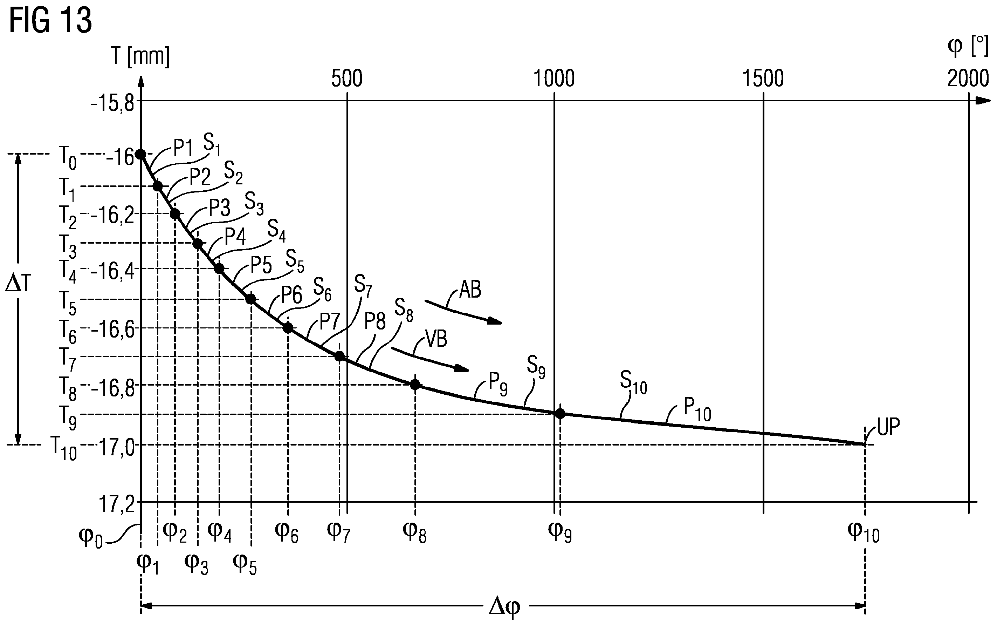

Die FIG 13 zeigt nun ein Ausführungsbeispiel einer Abbremsbewegung AB in einer vergrößerten Ansicht des rechten unteren Bereichs des Diagramms der FIG 12 in einem Drehwinkelbereich Δφ und einem zugehörigen Eindringtiefenbereich ΔT. In FIG 13 ist beispielhaft und ohne Beschränkung der Allgemeinheit n = 10 gewählt und es sind somit zehn Abbremsschritte S₁ bis S₁₀ mit den zugehörigen Steigungsparametern P₁ bis P₁₀ eingezeichnet.

Der Drehwinkelbereich Δφ ist entsprechend aufgeteilt in die n = 10 Drehwinkelintervalle [φ₀, φ₁], [φ₁, φ₂],..., [φᵢ₋₁, φᵢ], [φᵢ, φᵢ₊₁],... [φ₉, φ₁₀] und diesen Intervallen zugehörig sind die entsprechenden Eindringtiefenintervalle [T₀, T₁], [T₁, T₂],..., [Tᵢ₋₁, Tᵢ], [Tᵢ, Tᵢ₊₁],..., [T₉, T₁₀], in die der Eindringtiefenbereich ΔT aufgeteilt ist, der im Beispiel der FIG 12 von T(φ₀) = -16 mm bis T(φ₁₀) = - 17 mm reicht und/oder der Gewindesteigung - P = - 1 mm entspricht. Jedem Intervall entspricht ein Teilschritt Sᵢ.

In FIG 13 ist, anders als in FIG 12, der Differenzdrehwinkel ausgehend von φ₀ aufgezeichnet. Wenn man in FIG 13 die gleichen Werte auf der Drehwinkelachse für φ wie in FIG 12 eintragen will, so sind alle Werte auf der horizontalen Achse mit dem Wert von φ₀, der in FIG 12 beispielsweise 5800° beträgt, zu addieren. Die Abbremsbewegung AB beginnt bei dem Drehwinkelwert φ₀ und dem zugehörigen Eindringtiefenwert T₀ und endet bei dem Enddrehwinkelwert φ₁₀ und dem zugehörigen Eindringtiefenwert T₁₀.

Es wird nun jedem dieser Intervalle jedes Abbremsschrittes Sᵢ ein zugehöriger Steigungsparameter Pᵢ, insbesondere als Gewindesteigung oder Interpolationsparameter der CNC-Steuerung, zugeordnet, also den beiden Intervallen [φ₀, φ₁] und [T₀, T₁] die Steigung P₁, dem Intervallpaar [φ₁, φ₂] und [T₁, T₂] die Steigung P₂ und so weiter bis zur Steigung P₁₀ für das letzte Intervallpaar [φ₉, φ₁₀] und [T₉, T₁₀].

Die Steigungswerte P₁ bis P₁₀ werden so gewählt, dass Pᵢ₊₁ < Pᵢ ist für i = 1 bis i = 10 in FIG 13 oder n in FIG 12. In jedem Teilabschnitt oder Abbremsschritt Sᵢ bleibt die Gewindesteigung P₁ bis P₁₀ konstant, so dass sich im Wesentlichen gerade Teilabschnitte des Graphen der Funktion T (φ) ergeben, in denen eine synchronisierte "Gewindebewegung" stattfindet, also die axiale Vorschubgeschwindigkeit dem Quotienten aus Pᵢ/360° entspricht.

Im dargestellten Ausführungsbeispiel der FIG 13 wurden die Eindringtiefeintervalle in den Abbremsschritten Sᵢ für alle i mit 1 ≤ i ≤ n (hier z.B. n = 10) gleich groß gewählt, so dass die Länge der Intervalle T₁ - T₀ = T₂ - T₁ = Tᵢ - Tᵢ₋₁ = Tᵢ₊₁ - Tᵢ = Tₙ - Tₙ₋₁ gleich oder äquidistant gewählt ist, also ${T}_{i} - {T}_{i - 1} = ΔT / n$ im dargestellten Ausführungsbeispiel der FIG 13 als - 1 mm/10 = - 0,1 mm gewählt ist.

Da der axiale Vorschub in jedem Teilabschnitt oder Teilintervall im Ausführungsbeispiel der FIG 13 konstant gewählt ist, da Tᵢ₊₁ - Tᵢ für alle i gleich oder äquidistant gewählt ist, ergeben sich bei geringer werdender Steigung Pᵢ und damit abnehmender axialer Vorschubgeschwindigkeit größer werdende Drehwinkelintervalle φᵢ₊₁ - φᵢ ${φ}_{i + 1} - {φ}_{i} > {φ}_{i} - {φ}_{i - 1}$ in dem Drehwinkelbereich Δφ in den Abbremsschritten Sᵢ. D.h. der Drehwinkelabstand φ₂ - φ₁ ist kleiner als der Drehwinkelabstand φ₃ - φ₂ und der Drehwinkelabstand φᵢ₊₁ - φᵢ ist größer als der Winkelabstand φᵢ - φᵢ₋₁. Den größten Winkelabstand oder Winkelbereich deckt der letzte Teilabschnitt ab zwischen den Drehwinkelwerten φ₁₀ - φ₉. Dies entspricht einem kontinuierlichen und in jedem Teilabschnitt oder Abbremsschritt Sᵢ verlangsamten Abbremsvorgang.

Während der Abbremsbewegung AB wird die zeitliche Abhängigkeit der Drehgeschwindigkeit dφ/dt und die axiale Vorschubgeschwindigkeit dT/dt so gewählt oder gesteuert oder programmiert, dass das Werkzeug 2 am Umkehrpunkt UP = (φₙ, Tₙ) bzw. (φ₁₀, T₁₀) zur Ruhe kommt, also dφ/dt = 0 und dT/dt = 0 bei φ = φₙ bzw. T = Tₙ oder bei φ = φ₁₀ bzw. T = T₁₀.

Die Reduzierung der Drehgeschwindigkeit dφ/dt und der axialen Vorschubgeschwindigkeit dT/dt auf 0 abhängig von der Zeit t kann z.B. kontinuierlich während der Abbremsbewegung AB erfolgen oder auch beispielsweise erst in dem letzten Abbremsschritt Sₙ oder S₁₀.

Die real nicht exakt linearen, sondern etwas abgerundeten Verläufe der Graphen in den Abbremsschritte S₁ bis S₁₀ der FIG 13 folgen physikalisch aus den Trägheiten des Antriebssystems, insbesondere der Steuerung, einschließlich deren Interpolationsroutinen zur Glättung der Übergänge, und der Maschinenantriebe und der Massenträgheit der bewegten Komponenten. Idealisiert dargestellt oder in der Programmierung der Abbremsbewegung selbst hinterlegt ergibt sich jedoch die beschriebene Abfolge von linearen Funktionen oder aneinandergereihten linearen Abschnitten mit stufenweise abnehmender Steigung, d.h. stufenweise abnehmender jeweils konstanter Vorschubgeschwindigkeit, in den einzelnen Abbremsschritten Sᵢ beispielsweise S₁ bis S₁₀.

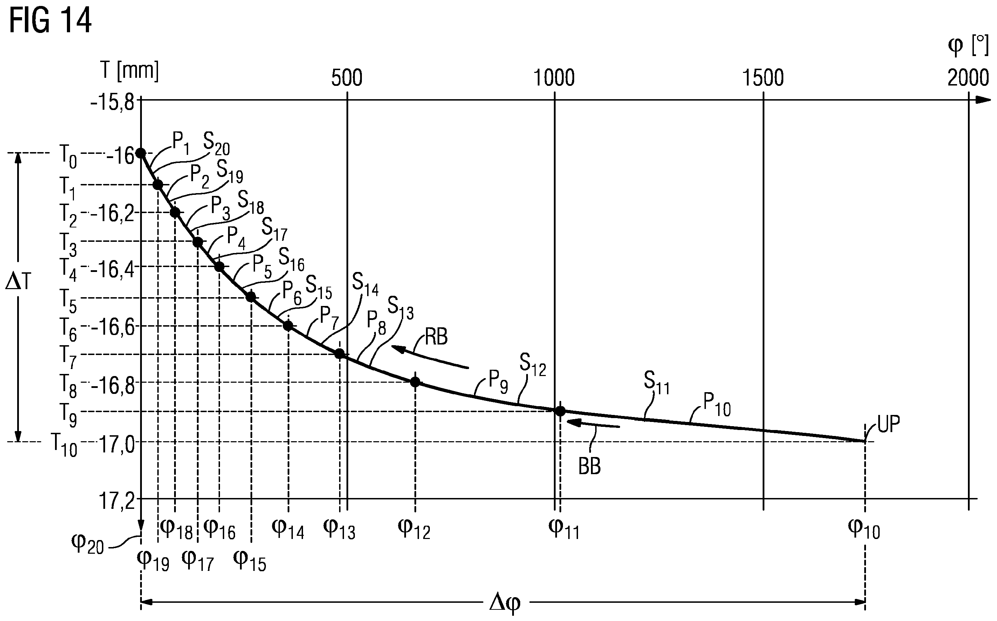

In FIG 14 ist ein Ausführungsbeispiel gezeigt, wie in der ersten Reversierphase ausgehend vom Umkehrpunkt UP die gleiche Abhängigkeit oder Funktion T(φ) in entgegengesetzter Reihenfolge für die Beschleunigungsbewegung BB in Umkehrung der Abbremsbewegung AB z.B. gemäß FIG 12 und 13 verwendet werden kann.

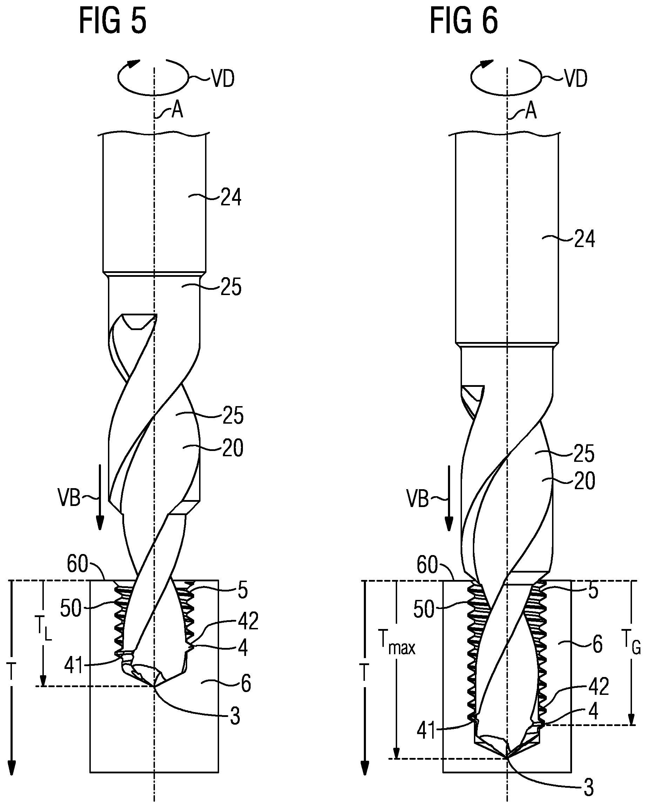

Es können aber auch andere Funktionen T(φ) und Teilschritte als in FIG 5 verwendet werden, die vorzugsweise zu dem Punkt (φ₀, T₀,) zurückführen, an dem auch die Abbremsbewegung AB begann bzw. die erste Arbeitsphase endete, so dass der richtige Einfädelpunkt für das Werkzeug für das Zurückfahren durch den Gewindegang 50 erreicht werden kann.

Vorzugsweise wird ausgehend von dem Endwinkelwert φₙ oder φ₁₀ in umgekehrter Reihenfolge zunächst eine Beschleunigungsphase als erste Reversierphase mit einer Beschleunigungsbewegung BB durchgeführt mit den gleichen Inkrementalschritten. Diese Schritte sind nunmehr jedoch Beschleunigungsschritte Sⱼ mit n+1 ≤ j ≤ 2 n sind, in FIG 14 beginnend mit S₁₁ bis S₂₀ für n =10.

Zugeordnet ist jedem dieser Beschleunigungsschritte Sⱼ ein zugehöriges Drehwinkelintervall [φ₁₀, φ₁₁], [φ₁₁, φ₁₂],..., [φⱼ₋₁, φⱼ], [φⱼ, φᵢ₊₁],... [φ₁₉, φ₂₀], wobei φⱼ aus der ersten Reversierphase einfach φᵢ aus der zweiten Arbeitsphase entspricht, wenn man i + j = n setzt. Die Steigungsparameter bleiben ebenfalls gleich, nur in umgekehrter Reihenfolge, also in FIG 5 werden sie von P₁₀ über P₉, P₈ bis zu P₁ für die Teilabschnitte der Steuerkurve gemäß FIG 13 von rechts nach links durchlaufen, bis der Tiefenwert T₀ erreicht wird. Gemäß FIG 14 wird der neue Winkelwert φ₁₁ zeitlich nach dem Winkelwert φ₁₀ angenommen und entspricht das Intervall [φ₁₀ , φ₁₁] dem Intervall [T₁₀, T₉], mit der Gewindesteigung P₁₀ und das anschließende Winkelintervall [φ₁₁, φ₁₂] dem Eindringtiefenintervall [T₉, T₈] mit der entsprechenden Gewindesteigung P₉ usw. bis zum letzten Teilabschnitt von [φ₁₉, φ₂₀] entsprechend [T₁, T₀] mit der Gewindesteigung P₁.

Im Anschluss wird dann in umgekehrter Richtung der FIG 12 der lineare Abschnitt der Kurve von φ₀ bis φ = 0 entsprechend der Eindringtiefe T von T₀ bis zu T = 0 durchlaufen. Die der Steigung der Geraden in FIG 1 entsprechende axiale Vorschubgeschwindigkeit bei der Rückwärtsbewegung ist nun wieder P/360° mit umgekehrter Richtung. Dadurch wird das Werkzeug gerade umgekehrt durch das in der Vorwärtsbewegung erzeugte Gewinde geführt, ohne dass in dem Gewinde eine Beschädigung des erzeugten Gewindeganges stattfindet. Die Rückwärtsbewegung ist also genau so synchronisiert wie die Vorwärtsbewegung , nur mit umgekehrter Drehrichtung, so dass sich der Winkel φ von dem Winkel φₙ gerade wieder rückwärts in seinem Wert abnimmt bis auf φ = 0 und auch bei umgekehrter axialer Vorschubgeschwindigkeit nunmehr die Gewindetiefe von T = T₀ bis T = 0 mathematisch gesehen zunimmt.

Die gleiche Steuerkurve oder Funktion T(φ) wie in der Vorwärtsbewegung VB in den beiden Arbeitsphasen auch in der Rückwärtsbewegung RB in den beiden Reversierphasen zu verwenden, hat einerseits den Vorteil, dass sich das Werkzeug 2 positionsgenau oder bewegungsgenau steuern lässt und sich insbesondere beim Einfädeln in den Gewindegang 50 in der richtigen Stellung befindet, und derart die Kräfte beim Reversieren sehr gering gehalten werden können und/oder eine hohe Rückfahr- oder Ausfahrgeschwindigkeit ermöglicht wird.

In einer Ausführungsform einer Umsetzung der beschriebenen Abhängigkeiten oder Funktionen für T(φ) werden die Werte der Eindringtiefe T als gemessene oder von der Steuerung oder Programmierung vorgegebene Eingabeparameter verwendet und ergeben sich die zugehörigen Werte des Drehwinkels φ aus der Abhängigkeit mittels der zugeordneten Steigungsparameter P und Pᵢ.

Es kann also ein CNC-Programm für Gewindebohren oder Gewindefurchen gewählt werden, insbesondere mit einer G33, insbesondere G331 und G332, Wegbedingung mit einzugebender Gewindesteigung, und es kann nun eine Folge oder Menge von Werten für die Eindringtiefe angegeben werden, bei denen auf einen neuen Gewindesteigungsparameter umgeschaltet wird, wobei der Gewindesteigungsparameter bis zum nächsten Wert der Eindringtiefe beibehalten wird.

Eine Abfolge wäre z.B.

### Arbeitsbewegung:

▪ Bei der Eindringtiefe T = 0 wähle den Gewindesteigungsparameter P und behalte diesen bis T = T₀ bei. Es wird eine Drehzahl oder Drehgeschwindigkeit eingestellt.
▪ Bei T = T₀ wechsle auf den Gewindesteigungsparameter P₁ und behalte diesen bis T = T₁ bei.
▪ Bei T = Tᵢ wechsle auf den Gewindesteigungsparameter Pᵢ₊₁ und behalte diesen bis T = Tᵢ₊₁ bei für alle i mit 1 ≤ i ≤ n.
▪ Reduziere die Drehgeschwindigkeit oder Drehzahl bis auf 0 bei T = Tₙ.
und vorzugsweise für die

### Reversierbewegung:

▪ Bei T = Tₙ reversiere die axiale Vorschubbewegung und die Drehbewegung mit einer eingestellten Drehzahl oder Drehgeschwindigkeit und starte wieder in jeweils umgekehrter Richtung mit dem Gewindesteigungsparameter Pₙ und behalte diesen bis T = Tₙ₋₁ bei.
▪ Bei T = Tⱼ wechsle auf den Gewindesteigungsparameter Pⱼ und behalte diesen bis T = Tⱼ₋₁ bei für alle j als absteigender Index mit 1 ≤ j ≤ n-1.
▪ Bei T = T₀ wähle den Gewindesteigungsparameter P und behalte diesen bis T = 0 bei.

Auch wenn diese Ausführungsform der Arbeitsbewegung in der zweiten Arbeitsphase und/oder der Reversierbewegung in der ersten Reversierphase, die insbesondere einer linearen Interpolation entspricht, aufgrund ihrer einfachen Implementierung in bestehende Maschinenprogramme Vorteile aufweist, können gemäß der Erfindung in allen Ausführungsformen auch andere Abhängigkeiten oder Funktionen oder Interpolationen in einzelnen Teilschritten oder Teilintervallen für die Beziehung zwischen T und φ vorgesehen werden oder auch Kombinationen daraus.

Bei der beschriebenen linearen Interpolation werden die linearen Kurvenabschnitte oder Graphenabschnitte stetig aneinander angesetzt, d.h. die Anfangspunkte (φᵢ , Tᵢ) jedes Intervalls entsprechen den Endpunkten des jeweils vorhergehenden Intervalls und beim ersten Intervall dem Endpunkt (φ₀ , T₀) des linearen Graphen der Gewindeerzeugung. Diese Verknüpfungspunkte werden auch als Stützstellen bezeichnet.

In allen Ausführungsformen oder Interpolationen können anstelle linearer Abschnitte auch Kurvenabschnitte oder Graphenabschnitte gewählt werden, die stetig differenzierbar aneinandergesetzt (oder: verknüpft, miteinander verbunden) werden. Das bedeutet, dass nicht nur der Anfangspunkt jedes Intervalls mit dem Endpunkt des vorhergehenden Intervalls übereinstimmt, also ein stetiger Übergang an den Verknüpfungspunkten zwischen den Intervallen erfolgt, sondern zusätzlich die Graphenabschnitte oder deren Funktionen auch in diesen Verknüpfungspunkten differenzierbar sind und ihre Ableitung den gleichen Wert aufweisen. Dadurch werden glatte oder stetig differenzierbare Übergänge zwischen den Graphen in den einzelnen Abbremsschritten oder Intervallen erreicht, was dem Bewegungsablauf förderlich ist. Auch der Übergang im Drehwinkel φ₀ von der Gewindeerzeugungsbewegung in der ersten Arbeitsphase zur Abbremsbewegung AB in der zweiten Arbeitsphase oder dann entsprechend vorzugsweise auch von der ersten Reversierphase zur zweiten Reversierphase ist vorzugsweise stetig differenzierbar oder mit derselben Steigung gewählt

Beispiele für Funktionen, die sich für einen solche stetig differenzierbare Interpolation eignen, sind Polynome höheren Grades als 1, insbesondere dritten Grades wie beispielsweise kubische Splines. Hier kann eine Spline-Interpolation Anwendung finden. Durch eine Polynomfunktion 3. Grades als Splinefunktion $T \left(φ\right) = {a}_{3} {φ}^{3} + {a}_{2} {φ}^{2} + {a}_{1} φ + {a}_{0}$ mit den bei Spline-Interpolation üblichen Randbedingungen lässt sich beispielsweise eine bis in die dritte Ableitung stetige Funktion erstellen.

Ferner kann auch eine durchgehende, insbesondere streng monoton oder auch monoton fallende Funktion für den Abbremsvorgang oder zumindest einen überwiegenden Teil der Abbremsschritte Sᵢ, beispielsweise eine Exponentialfunktion oder logarithmische Funktion, verwendet werden. Beispielsweise kann die folgende Exponentialfunktion verwendet werden: $T = - {e}^{\frac{- P}{π ⋅ fd} ⋅ x} + 1 ;$ wobei fd der Flankendurchmesser ist und x eine fortlaufende natürliche Zahl.

Die beschriebenen theoretischen Kurven oder Funktionen können insbesondere durch einen entsprechende Anzahl von einzelnen NC-Steuerungsdatensätze abgebildet werden.

In einer weiteren Ausführungsform einer Umsetzung der beschriebenen Abhängigkeiten oder Funktionen für T(φ) werden die Werte des Drehwinkels φ als gemessene oder von der Steuerung oder Programmierung vorgegebene Eingabeparameter verwendet und ergeben sich die zugehörigen Werte der Eindringtiefe T aus der Abhängigkeit mittels der Steigungsparameter P und Pᵢ.

Es kann in einer dritten Variante auch die Zeit als Eingabeparameter vorgegeben werden und es ergeben sich die Werte des Drehwinkels φ(t) und der Eindringtiefe T(t) aus der Abhängigkeit von der Zeit t und der Abhängigkeit voneinander mittels der Steigungsparameter P und Pᵢ.

Die Steuerung oder Synchronisierung kann in einer Ausführungsform in einem offenen Regel- oder Steuerkreis ohne Messung der Prozessgrößen Eindringtiefe und Drehwinkel erfolgen. Jedem Drehwinkelwert wird dabei mittels einer Wertetabelle oder durch Berechnung nach den hinterlegten Formeln ein Eindringtiefenwert zugeordnet und Drehantrieb und Axialantrieb werden entsprechend angesteuert.

In einer weiteren Ausführungsform kann auch eine Messung wenigstens einer der beiden Prozessgrößen Eindringtiefe und Drehwinkel erfolgen und können die Messwerte in die Steuerung rückgekoppelt werden, um eine Regelung, beispielsweise gemäß der in FIG 12 gezeigten Sollkurve, in einem geschlossenen Regelkreis zu verwirklichen. Der Drehwinkel φ wird in der Regel im Bereich des Antriebs, insbesondere der Antriebsspindel, mittels Drehwinkelsensoren oder Messung von mit dem Drehwinkel in eindeutiger Beziehung stehenden physikalischen Größen bestimmt. Es ist grundsätzlich aber auch möglich, den Drehwinkel direkt am Werkzeug 2 zu messen. Die Eindringtiefe T kann durch axiale Positionssensoren gemessen werden und auch hier wieder im Allgemeinen am Antrieb, insbesondere der Antriebsspindel, oder auch in einer besonderen Ausführungsform am Werkzeug oder Werkstück selbst.

In weiteren Ausführungsformen kann in der zweiten Arbeitsphase zusätzlich ein Egalisierungsschritt oder konstanter Umlaufschritt stattfinden, währenddessen die Eindringtiefe T(φ) = const. ist oder zumindest keine weitere Vorschubbewegung in Vorwärtsrichtung ausgeführt wird. Der Drehsinn der Drehbewegung bleibt während des Egalisierungsschrittes vorzugsweise gleich, wird also nicht reversiert.

In einer Ausführungsform wird bei Erreichen der maximalen Eindringtiefe ΔT bei einem Drehwinkel φₙ₋₁ der entsprechende Wert T(φ) für den darauffolgenden Schritt Sₙ bis zu dem Drehwinkel φₙ beim Umkehrpunkt UP konstant gehalten, d.h. T(φₙ₋₁) = Tₙ₋₁ = Tₙ = T(φₙ).

In einer weiteren Ausführungsform wird die maximale Eindringtiefe ΔT schon bei einem Drehwinkel φₙ₋₂ mit dem entsprechenden Wert T(φₙ₋₂) = Tₙ₋₂ erreicht. Nun wird der Wert T(φ) für den darauffolgenden Schritt Sₙ₋₁ bis zu dem Drehwinkel φₙ₋₁ wieder reduziert, d.h. die axiale Vorschubrichtung umgekehrt, und die Eindringtiefe auf den Wert T(φₙ₋₁) = Tₙ₋₁ < Tₙ₋₂ reduziert. Das Werkzeug läuft also mit einem leichten Reversiervorschub in der Umlaufnut. Diese definierte Bewegung in negativer T-Richtung vom Bohrungsgrund weg kann vorteilhaft sein, um die Umfangsnut hinsichtlich Durchschraubbarkeit weiter zu verbessern. Ab dem Drehwinkel φₙ₋₁ wird wieder der entsprechende Wert T(φ) für den darauffolgenden Schritt Sₙ bis zu dem Drehwinkel φₙ beim Umkehrpunkt UP konstant gehalten, d.h. T(φₙ₋₁) = Tₙ₋₁ = Tₙ = T(φₙ). Es kann aber, vor allem bei schon (weitgehend) erzeugter Umfangsnut auch eine relativ große und/oder schnelle Rückholbewegung und/oder auch eine axiale Hin- und Herbewegung des Werkzeuges beim Egalisieren erfolgen, die auch einen axialen Vorschub pro 360° aufweisen kann, der sogar größer als die Gewindesteigung P ist. Das Werkzeug und seine Gewindezähne drehen somit im Schritt Sₙ auf einer Kreisbahn oder zylindrischen Bahn steigungslos bzw. sogar im Schritt Sₙ₋₁ mit einer positiven Steigung wieder um einen kleinen Betrag nach außen in dem Werkstück. Diese Bewegung dient insbesondere dazu, die Umfangsnut zu egalisieren und die Oberfläche des Werkstücks zu säubern, die erzeugte Gewindebohrung möglichst vollständig von Spanmaterial zu evakuieren und ggf. auch Verspannungen zwischen Werkstück und Werkzeug abzubauen, die durch die Bearbeitungskräfte vorher aufgebaut wurden. Der Schritt Sₙ als letzter Schritt der Abbremsbewegung AB sowie auch der vorletzte Schritt Sₙ₋₁ kann somit auch als Egalisierungsschritt bezeichnet werden. Der gesamte Drehwinkel φₙ - φₙ₋₁ des Egalisierungsschritts Sₙ bzw. φₙ - φₙ₋₂ des Egalisierungsschritts Sₙ und Sₙ₋₁ kann in weiten Grenzen frei gewählt werden, beispielsweise zwischen 180° und 2000°, und wird in der Regel größer gewählt werden, beispielsweise 3 mal größer, als der Drehwinkel φₙ₋₁ - φ₀ bzw. φₙ₋₂ - φ₀ des vorherigen monoton fallenden Abschnitts (Übergangsbereich). Bei der Reversierbewegung RB kann in der ersten Reversierphase beispielsweise der Egalisierungsschritt auch teilweise oder ganz wegfallen.

Durch das Verfahren gemäß der Erfindung können im Übergang in die Umfangsnut sowie in der Umfangsnut selbst vorteilhafte Bewegungsabläufe erzielt werden. Die Arbeitsgeschwindigkeit des Werkzeuges kann möglichst hoch und gleichbleibend (stetig) verlaufen. Die Maschine (inkl. Steuerung) kann die Bewegung hochdynamisch abbilden. In der Umfangsnut kann außerdem eine durchschraubbare Geometrie erzeugt werden.

Sieht man sich die Verhältnisse an der Maschine an, so ist erkennbar, dass im System eine Massenträgheit sowie eine Trägheit in den Antrieben und im Steuerungssystem physikalisch vorhanden ist. Um die Geschwindigkeit aus dem Gewinde auch in dem Freistich, d.h. der Umfangsnut, hoch zu halten, wird insbesondere durch eine stetige Bewegungsbahn von z-Achse (Variable T) und Drehachse (Variable φ) die Maschine in die Lage versetzt, vorzugsweise mit einer hohen Bahngeschwindigkeit diese Bewegung zu realisieren. Dies wirkt sich dann in einer hohen und stetigen Geschwindigkeit der wirksamen Werkzeugzähne und -schneiden aus. Dies ist wiederum für eine gleichmäßige Zerspanung günstig.

Um die Maschine zu programmieren, können die theoretischen Bewegungsbahnen in entsprechende NC-Sätze übertragen werden. Hierbei können geringfügige Abweichungen oder Annäherungen (in Form von beispielsweise zusammengesetzten Helixbewegungen) vorkommen.

Bei der technischen Umsetzung eines Gewindeerzeugungsprozesses wie dem vorliegenden ist auch die zeitliche Abhängigkeit der Eindringtiefe T = T(t) und des Drehwinkels φ = φ(t) oder der Drehzahl oder Frequenz n = n(t) von der Zeit t festzulegen. Dadurch wird die am Werkstück resultierende Bahngeschwindigkeit v(t) (Umfangsgeschwindigkeit, Bearbeitungsgeschwindigkeit, Vorschubgeschwindigkeit, Schnittgeschwindigkeit), also die Geschwindigkeit in tangentialer Richtung an die Trajektorie, festgelegt.

Die Bahngeschwindigkeit v(t) hängt vom Radius r und damit dem Gewindelochdurchmesser, einerseits und der Drehgeschwindigkeit ω(t) = dφ(t)/dt = 2 π n(t) gemäß der vektoriellen Beziehung v = r x ω ab und ist demnach für größere Radien r bei gleicher Drehzahl n größer, also z.B. bei M8-Gewinden (r = 4 mm) größer als bei M6-Gewinden (r = 3 mm).

Im Fall des dargestellten Ausführungsbeispiels mit gleichzeitiger Bohr- und Gewindebearbeitung muss eine einheitliche Bahngeschwindigkeit v(t) für den Bohrbereich 3 und den Gewindeerzeugungsbereich 4 eingestellt werden und das Werkzeug und die Bahngeschwindigkeit müssen optimal aufeinander abgestimmt werden. Insbesondere muss die Erzeugung des Gewindeloches mit ausreichender Qualität sichergestellt sein bei einer ausreichenden Standzeit des Werkzeuges. Dabei ist auch wichtig, zu große Beschleunigungen und dadurch auftretende Kräfte auf das Werkzeug zu vermeiden. Dies ist vor allem für den Bohrbereich 3 wichtig, der in vielen ersten Versuchen beschädigt wurde oder gar ausbrach.

Es soll deshalb idealerweise möglichst lange oder über einen möglichst langen Zeitraum während des Prozesses eine konstante maximale Bahngeschwindigkeit vₘₐₓ erreicht oder beibehalten werden. Dies gilt insbesondere für die Abbremsbewegung oder Freistichbewegung AB.

Das Werkzeug wird im Allgemeinen hinsichtlich seiner Leistung und Geometrie auf diesen maximalen Wert vₘₐₓ optimiert. Dieser maximalen Bahngeschwindigkeit vₘₐₓ entspricht eine konstante maximale Drehzahl nₘₐₓ, die aber vom Radius oder Durchmesser des Werkzeuges abhängt, wie schon beschrieben.

Gemäß dem *EMUGE-Handbuch,* Seiten 170 bis 177, sollten für ein Kernlochbohren abhängig vom Werkstoff des Werkstücks und vom Werkstoff des Bohrers (VHM oder HSS) verschiedene Schnittgeschwindigkeiten gewählt werden, so z.B. von 90 bis 100 m/min. in nicht gehärteten Stählen und Gusseisen und bis zu 150 m/min. in Aluminiumlegierungen für die dort angegebenen Spiralbohrer (min bedeutet Minute also 60 s). Gemäß dem *EMUGE-Handbuch,* Seiten 282 bis 283, sollten für ein Gewindebohren abhängig vom Werkstoff des Werkstücks und vom Werkstoff des Gewindebohrers (VHM oder HSS) ebenfalls verschiedene Schnittgeschwindigkeiten gewählt werden, so z.B. von 40 bis 100 m/min. in nicht gehärteten Stählen und von 5 bis 80 m/min. in Gusseisen und von 10 bis 60 m/min. in Aluminiumlegierungen für die dort angegebenen verschiedenen Gewindebohrertypen.

Die Werte für die Schnittgeschwindigkeiten eines Spiralbohrers und eines Gewindebohrers in dem gleichen Werkstoff unterscheiden sich gemäß diesen Empfehlungen aus dem Stand der Technik bereits teilweise erheblich. Es muss aber bei einem kombinierten Werkzeug die Schnitt- oder Bahngeschwindigkeit für die sich im Radius nur wenig unterscheidenden Bohrschneiden und Gewindezähne praktisch gleich sein. Außerdem sind die Geometrien der Gewindebohrer und Spiralbohrer aus dem *EMUGE-Handbuch* schon deshalb nicht auf ein kombiniertes Werkzeug in Zusammenhang mit dem Verfahren gemäß der Erfindung übertragbar, weil schon die axiale Länge des Bohrbereiches 3 und des Gewindeerzeugungsbereichs 4 des kombinierten Werkzeugs wesentlich kürzer gewählt werden müssen als bei den Einzelwerkzeugen gemäß dem *EMUGE-Handbuch.* Ansonsten bliebe nämlich bei einem integrierten Bohrprozess und einem integrierten Freistichprozess keine ausreichende axiale Länge für das eigentliche Gewinde übrig. Diese axial verkürzten Bohr- und Gewindebohrbereiche erkennt man auch an dem bekannten Gewindebohr-Werkzeug gemäß DE 10 2016 008 478 A1.

Es muss somit eine gut geeignete Bahngeschwindigkeit für die oben beschriebene Optimierung eines kombinierten Werkzeuges und einen zugehörigen Gewindelocherzeugungsprozesses gefunden werden. Dabei ist einerseits zwar eine möglichst hohe Bearbeitungsgeschwindigkeit oder möglichst geringe Taktzeit anzustreben, andererseits muss aber die Geschwindigkeit von dem Werkzeug und der Steuerung beherrscht werden können, also ein Kompromiss zwischen ökonomischen und technologischen Anforderungen als Optimierung gefunden werden.

Die Erfinder haben Versuche und Untersuchungen durchgeführt und dabei verschiedene Werkzeugprototypen, die im Wesentlichen gemäß FIG 1 aufgebaut waren mit der Qualität eines renommierten Werkzeugherstellers EMUGE, in einer modernen hochwertigen Produktionswerkzeugmaschine GROB G552 mit einer modernen hochwertigen Maschinenprogrammsteuerung SIEMENS 840D eingesetzt.

Nach aufwendigen Versuchen und Untersuchungen der Erfinder haben sich schließlich Werte für die Bahngeschwindigkeit vₘₐₓ aus einem Werteintervall von 57 m/min bis 189 m/min, insbesondere von 85 m/min bis 132 m/min als besonders zweckmäßig herausgestellt, insbesondere in Aluminiumwerkstoffen. Aus diesen Bahngeschwindigkeitsbereichen werden in etwa folgende bevorzugte Drehzahlbereiche in U/min (1/min = 1/60 Hz) für die maximale Drehzahl abgeleitet.

Bei einem M6-Gewinde (Durchmesser 6 mm) liegt die maximale Drehzahl nₘₐₓ des Werkzeugs zwischen 3.000 U/min und 10.000 U/min, vorzugsweise zwischen 4.500 U/min und 7.000 U/min. Bei einem anderen Gewindedurchmesser verändert sich die Drehzahl oder der Drehzahlbereich gemäß dem Verhältnis von 6 mm zu dem anderen Gewindedurchmesser, also z.B. bei M8 statt M6 um den Faktor 6/8 = 0,75. Bei einem M8-Gewinde (Durchmesser 8 mm) beispielsweise liegt somit die maximale Drehzahl nₘₐₓ des Werkzeugs zwischen 2.250 U/min und 7.500 U/min, vorzugsweise zwischen 3.375 U/min und 5.250 U/min.

Technisch ist, wie schon ausgeführt, eine primäre Zielvorgabe oder Prozessbedingung, sowohl während der Gewindeerzeugung, also der ersten Arbeitsphase mit der Arbeitsbewegung VB, als auch und vor allem während der Freistichbewegung, also der zweiten Arbeitsphase mit der Abbremsbewegung AB, eine möglichst lange Zeitdauer die gewünschte Bahngeschwindigkeit und damit die maximale Drehzahl konstant zu halten. Das bedeutet mit anderen Worten, es soll über möglichst lange Zeiträume während der Arbeitsbewegung, einschließlich der zweiten Arbeitsphase (Freistichbewegung), ein möglichst langes Plateau mit der maximalen Drehzahl in der zeitabhängigen Funktion der Drehzahl n(t) gewährleistet werden. So kann der Prozess möglichst lange bei der für das Werkzeug optimalen maximalen Drehzahl betrieben werden und zu hohe Kräfte und Beschleunigungen auf das Werkzeug können vermieden werden.

Die maximale Drehzahl soll darüber hinaus in einer weiteren Zielvorgabe oder Prozessbedingung auch schon bereits beim Eintritt in das Werkstück bei einem vorgegebenen Sicherheitsabstand erreicht sein.

Es stellte sich nun überraschenderweise heraus, dass bei den genannten bevorzugten maximalen Drehzahlen von 4.000 U/min bis 6.000 U/min, insbesondere für M6 und M8, selbst mit diesem High-end-Maschinenequipment in der Freistichbewegung keine konstante maximale Drehzahl und damit Bahngeschwindigkeit erreicht werden konnte, was zu verringerten Standzeiten bis mitunter zum Werkzeugbruch führte. Der Schleppfehler, also der Versatz zwischen Sollwert und Istwert der Achsposition, wird bei Werkzeugmaschinen mit steigender Drehzahl größer. Entgegenwirken kann man diesem Fehler zwar durch eine Erhöhung des Kv-Faktors, der die Geschwindigkeit angibt, wie schnell der Schleppfehler geschlossen wird. Jedoch sind der Erhöhung des Kv-Faktors Grenzen gesetzt, da sonst das Regelsystem der Maschine instabil wird, Überschwinger entstehen und die Maschine zu vibrieren beginnt.

In einer Ausführungsform ist eine Übersetzungseinheit zwischen der Spindel der Maschine und dem Werkzeug zwischengeschaltet oder angeordnet, die mit einem vorgegebenen Übersetzungsverhältnis von wenigstens 1:3 die Drehzahl der Maschinenspindel als Antrieb oder Antriebswelle auf eine höhere Drehzahl am Abtrieb oder der Abtriebswelle mit dem Werkzeug und damit des Werkzeugs selbst übersetzt. Die Drehzahl an der Maschinenspindel ist dabei gleich dem Produkt aus dem Übersetzungsverhältnis und der Drehzahl des Werkzeugs. Durch diese Maßnahme konnte überraschenderweise ein ausreichendes Drehzahlplateau mit der maximalen Drehzahl sowohl während der ersten Arbeitsphase (Gewindeerzeugung) als auch während der zweiten Arbeitsphase (Umfangsnuterzeugung) erzielt werden.

Das Übersetzungsverhältnis wird im Allgemeinen zwischen 1:3 und 1:10 gewählt, insbesondere zwischen 1:4 und 1:8, vorzugsweise zwischen 1:4 und 1:5. Es stellte sich heraus, dass höhere Übersetzungsverhältnisse keine signifikanten weiteren Verbesserungen brachten.

Sollten Werkzeugmaschinensteuerungen die genannten Zielvorgaben ebenfalls erreichen, auch ohne Übersetzungseinheit, können diese ebenfalls zur Durchführung des Verfahrens gemäß der Erfindung eingesetzt werden.

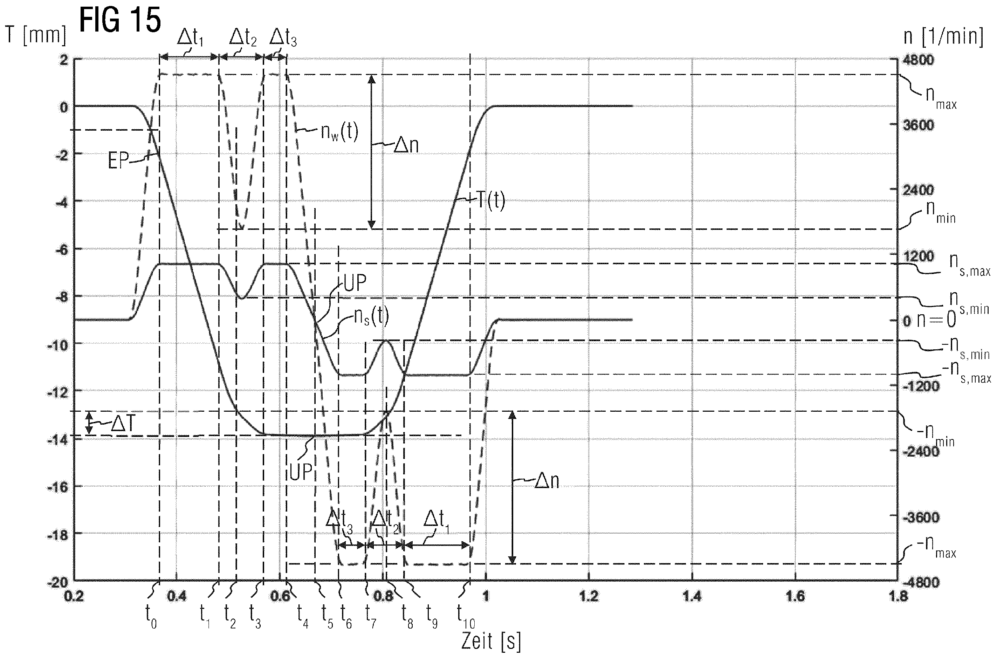

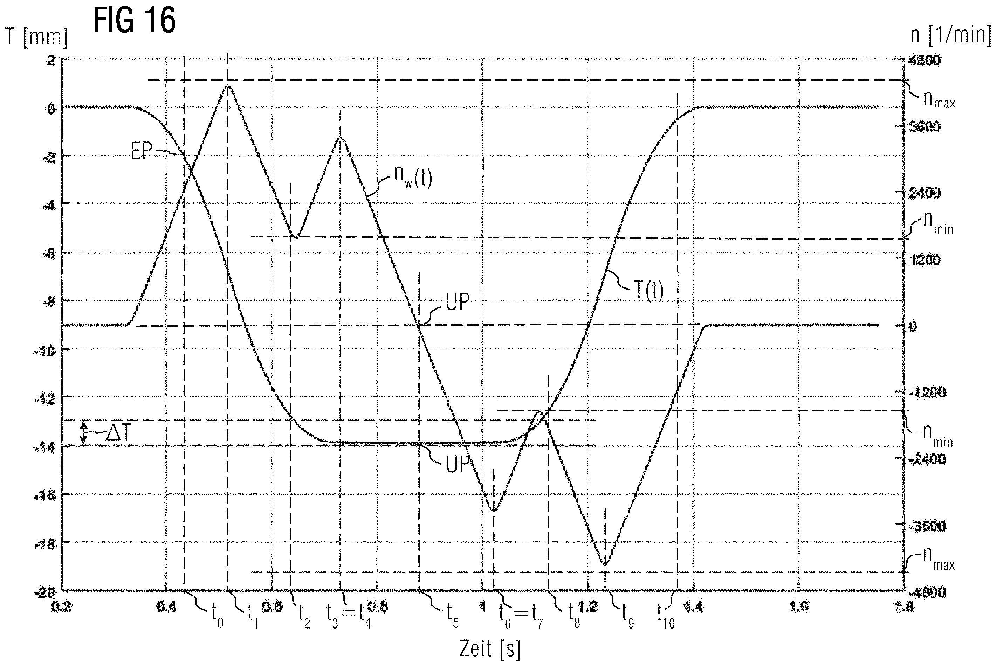

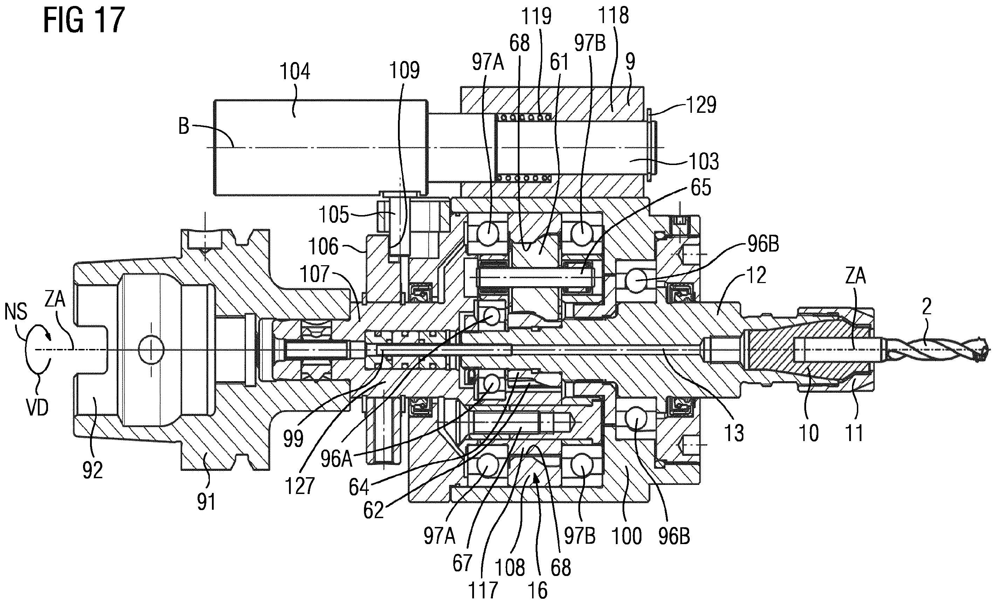

In Ausführungsbeispielen anhand der FIG 15 und FIG 16 wird der Unterschied mit und ohne Übersetzungseinheit deutlich. Ein Ausführungsbeispiel für die verwendete Übersetzungseinheit ist in FIG 17 gezeigt.

Der Gewindeerzeugungszyklus der FIG 15 wurde gemäß einer Ausführungsform der Erfindung mit einer Übersetzungseinheit zwischen dem Maschinenantrieb bzw. der Maschinenspindel der Werkzeugmaschine und Werkzeug durchgeführt. Das Übersetzungsverhältnis der Übersetzungseinheit, das dem Verhältnis aus der Drehzahl oder der Drehgeschwindigkeit des Antriebs, hier also dem Maschinenantrieb oder der Maschinenspindel, zu der Drehzahl bzw. der Drehgeschwindigkeit des Abtriebs, hier also des Werkzeugs 2 oder seines Werkzeughalters, entspricht, ist dabei kleiner eins gewählt, d.h. die Übersetzung erfolgt ins Schnelle. Im dargestellten Beispiel der FIG 16 wurde eine Übersetzungseinheit mit einem Übersetzungsverhältnis von ca. 4,4 gewählt, indem ein erfindungsgemäß modifiziertes Speedsynchro^{®} der Anmelderin eingesetzt wurde. Es wurde eine maximale Drehzahl der Spindel von 1.020 1/min = 17 1/s = 17 Hz eingestellt, entsprechend einer Drehzahl des Werkzeugs von 4.500 1/min = 75 1/s = 75 Hz

Der Gewindeerzeugungszyklus der FIG 16 wurde ohne eine Übersetzungseinheit zwischen Maschinenspindel der Werkzeugmaschine und Werkzeug durchgeführt, d.h. die Drehzahl der Spindel entsprach der des Werkzeugs. Es wurde eine maximale Drehzahl der Spindel von 4.500 1/min = 75 1/s = 75 Hz eingestellt.

In FIG 15 und 16 sind empirisch ermittelte zeitliche Abhängigkeiten oder Steuerungen der Eindringtiefe T= T(t) oder z-Achsen-Koordinate einerseits und der Drehzahl n = n(t) als Funktion der Zeit t über den gesamten Gewindeerzeugungszyklus zwischen dem Eintrittspunkt EP und dem Umkehrpunkt UP und wieder zurück dargestellt. Die Eindringtiefe T(t) = T(φ(t)) ergibt sich als Funktion der Zeit t aufgrund der gewählten Abhängigkeit T(φ), die bereits ausführlich beschrieben wurde. Die Drehzahl n(t) hängt mit der Winkelgeschwindigkeit ω = ω(t) = dφ/dt, die der ersten zeitlichen Ableitung des Drehwinkels des Drehwinkels φ = φ(t) entspricht, wie folgt zusammen 2π n(t) = dφ/dt. Die Winkelgeschwindigkeit ω bzw. die Drehzahl n(t) und die axiale Geschwindigkeit v(t) sind wieder synchronisiert, insbesondere gemäß einer Ausführung nach FIG 12.

Es sind als Drehzahl n(t) in FIG 15 zwei verschiedene Drehzahlen über der Zeit aufgetragen, einerseits die Drehzahl n_{W}(t) des Werkzeugs 2 und andererseits die Drehzahl n_{S}(t) der Maschinenspindel.

Die beiden Drehzahlen n_{W}(t) und n_{S}(t) sind über das Übersetzungsverhältnis $I = {n}_{s} \left(t\right) / {n}_{w} \left(t\right)$ der Übersetzungseinheit miteinander verknüpft, also dem Quotienten aus der Antriebsdrehzahl n_{S}(t) und der Abtriebsdrehzahl n_{W}(t). Das Übersetzungsverhältnis I ist im Allgemeinen kleiner als 1 / 3 oder 1:3 gewählt, im vorliegenden Ausführungsbeispiel der FIG 16 beträgt das Übersetzungsverhältnis I der Übersetzungseinheit etwa I = 1/ 4,4.

In FIG 16 ist dagegen als Drehzahl n(t) nur eine Drehzahl über der Zeit aufgetragen, nämlich die Drehzahl n_{W}(t) des Werkzeugs 2, denn wegen der fehlenden Übersetzungseinheit sind die Drehzahl n_{W}(t) des Werkzeugs 2 und die Drehzahl n_{S}(t) der Maschinenspindel gleich, d.h. n_{S}(t) = n_{W}(t).

Auf der Zeitachse der Zeit t sind in FIG 15 und FIG 16 elf Zeitpunkte t₀ bis t₁₀ aufgetragen.

Der früheste Zeitpunkt t₀ entspricht dem Beginn des Gewindeerzeugungszyklus beim Eintrittspunkt EP. Der Eintrittspunkt EP liegt bei T(t₀) an der Werkstückoberfläche und ist um einen Sicherheitsabtsand hier beispielsweise - 2 mm von T = 0 mm, bei dem die Bewegung in der z-Achse beginnt, beabstandet. Beim Zeitpunkt t₀ beginnt die erste Arbeitsphase der Arbeitsbewegung VB, bei der das Gewinde erzeugt wird. Hier ist die Eindringtiefe T(t) mit dem Drehwinkel φ(t) oder der Drehzahl n(t) über die Gewindesteigung synchronisiert wie beispielsweise in FIG 12 gezeigt. In dieses Zeitintervall fallen beispielsweise die FIG 5 und 6, bei denen der Gewindeerzeugungsbereich 4 den Gewindegang 50 erzeugt.

Beim Zeitpunkt t₂ endet diese erste Arbeitsphase und geht in die zweite Arbeitsphase die Freistichbewegung oder Abbremsbewegung AB über. Hier bei T(t₂) ist die Gewindetiefe T_{G} erreicht, die im vorliegenden Fall beispielsweise ca. 11 mm beträgt. In der zweiten Arbeitsphase zwischen dem Zeitpunkt t₂ und dem Zeitpunkt t₅ findet die Abbremsbewegung oder Freistichbewegung AB statt, die beim Umkehrpunkt UP endet. Die Eindringtiefe T(t) nimmt, deutlich langsamer werdend, um den Eindringtiefenberiech ΔT = T(t₅) - T(t₂) bis auf den untersten Wert T(t₅) beim Umkehrpunkt UP (betragsmäßig) zu, der im dargestellten Beispiel -14 mm beträgt. Hier ist die Gewindelochtiefe T_{L} erreicht. Beginnend zum Zeitpunkt t₂ bis zum Zeitpunkt t₅, der dem Umkehrpunkt UP entspricht, findet also der Abbremsvorgang oder die Freistichbewegung zum Erzeugen der Umfangsnut(en), insbesondere 53 in FIG 1 und 10 sowie 51 und 52 in FIG 11, statt, insbesondere die Abbremsbewegung AB gemäß FIG 12 und FIG 13 und/oder die Abbremsbewegung mit der erfindungsgemäßen vorgegebenen Abhängigkeit zwischen der Eindringtiefe T = T(φ) und dem Drehwinkel φ (nicht zu verwechseln mit der Kurve T(t) in FIG 15 und 16). Während des Abbremsvorgangs ändert sich in der Ausführungsform gemäß FIG 12 die Eindringtiefe um ΔT und der Drehwinkel um Δφ.

Speziell kann wieder eine Änderung der Gewindesteigungen Pi im Abstand von jeweils 0,1 mm mit programmierten Gewindebefehlen G331 mit dem Steigungsbereich von 0,9 mm - 0,05 mm (Gewinde selbst hat P = 1 mm) eingestellt sein. Maschineninterne Routinen interpolieren dabei in der Regel die eingegebenen Befehle zu einer stetigen Kurve für jede Achse. Durch die verringerten Steigungen in der Freistichbewegung wird insbesondere die Spanwurzel im Bohrgrund verkleinert, bis sie bei der Rückwärtsbewegung kein Hindernis mehr darstellt.

Beim Umkehrpunkt UP erreicht die Eindringtiefe T(t) ihren tiefsten und betragsmäßig größten Wert T_{L} und der Drehwinkel φ(t) ebenfalls seinen größten oder weitesten Wert φ_{L}. Die axialen Geschwindigkeit v(t) = dT/dt und die Drehzahl n(t) = dφ/dt/ 2π nehmen beim Umkehrpunkt UP jeweils momentan den Wert Null an, das heißt das Werkzeug 2 kommt hier momentan zum Stillstand, wie beispielsweise in FIG 7 dargestellt.

Ab dem Umkehrpunkt UP bei dem Zeitpunkt t₅ beginnt nun die Reversierbewegung RB des Werkzeugs 2, die wieder in eine erste Reversierphase mit der Beschleunigungsbewegung BB, die zwischen den Zeitpunkten t₅ und t₈ liegt, und eine zweite Reversierphase, die zwischen den Zeitpunkten t₈ und t₁₀ liegt, unterteilt ist. Bei dem Zeitpunkt t₁₀ ist wieder die Werkstückoberfläche erreicht und T(t₁₀) = T(t₀), im vorliegenden Beispiel -2 mm. In den in FIG 15 und 16 dargestellten Ausführungsbeispielen ist, ohne Beschränkung der Allgemeinheit, die Steuerung der Vorschubbewegung VB und der Reversierbewegung RB im Wesentlichen symmetrisch zum Umkehrpunkt UP gestaltet, d.h. die Graphen für die Eindringtiefe T = T(t) sind im Wesentlichen achsen- oder spiegelsymmetrisch zu einer durch den Zeitpunkt t₅ des Umkehrpunktes UP verlaufenden senkrechten Symmetrieachse und die Graphen der Drehzahlen n_{W}(t) und n_{S}(t) sind jeweils im Wesentlichen punktsymmetrisch zum Punkt (t₅, 0) beim Umkehrpunkt UP.

Es wurde in den Ausführungsbeispielen der FIG 15 und 16 die Abhängigkeit oder Synchronisierung der Eindringtiefe T = T(φ) von bzw. mit dem Drehwinkel φ mit variierendem Gewindesteigungsparameter in der Freistichbewegung AB gemäß FIG 12 und 13 und 14 gewählt.

Wie man in den FIG 15 und 16 sofort erkennen kann, unterscheiden sich die realen zeitlichen Verläufe der Drehzahl n_{W}(t) trotz theoretisch gleich in der Maschinensteuerung programmierter resultierender maximaler Drehzahl nₘₐₓ am Werkzeug, hier 4.500 U/min, ganz erheblich. Dies wird im Folgenden näher erläutert.

In der Ausführung gemäß der Erfindung mit Übersetzungseinheit gemäß FIG 15 erhöht die Maschinensteuerung die Drehzahl n_{W}(t) gemäß der vorgegebenen maximalen Drehbeschleunigung ab dem Zeitpunkt bei T = 0 mm und erreicht schon kurz vor dem Zeitpunkt t₀ am Eintrittspunkt EP den maximalen Wert n_{s.max} der Drehzahl der Maschinenspindel und den entsprechenden übersetzten maximalen Wert der Drehzahl des Werkzeugs. Dieser maximale Wert der Drehzahl des Werkzeugs erreicht nun oder entspricht nun der theoretischen, programmierten maximalen Drehzahl nₘₐₓ des Werkzeugs, hier den vollen 4.500 U/min, entsprechend n_{s.max} = I nₘₐₓ = 1.020 U/min für die Spindel.

Diese maximale Drehzahl nₘₐₓ wird nun über ein Plateau mit einem Zeitintervall Δt₁ zwischen den Zeitpunkten t₀ und t₁ konstant gehalten, d.h. n_{W}(t) = nₘₐₓ bzw. entsprechend n_{S}(t) = n_{S,max} in dem Zeitintervall zwischen t₀ und t₁ der Intervalllänge Δt₁.

Beim Zeitpunkt t₄ nimmt die Drehzahl n_{W}(t) wieder ab bis auf ein lokales Minimum bei einer Minimumsdrehzahl nₘᵢₙ, das bzw. die schon innerhalb der Abbremsbewegung AB, also hier kurz nach dem Zeitpunkt t₂, liegt.

Die Drehzahldifferenz zwischen maximaler Drehzahl nₘₐₓ und Minimumsdrehzahl nₘᵢₙ ist mit Δn bezeichnet, also Δn = nₘₐₓ - nₘᵢₙ und sollte 0,8 nₘₐₓ nicht übersteigen. Δn ist abhängig von der verwendeten Maschine und Maschinensteuerung.

Nun steigt nach Erreichen der Minimumsdrehzahl nₘᵢₙ infolge der Steuerung der Freistichbewegung AB die Drehzahl n_{W}(t) sogleich wieder an und erreicht wiederum zum zweiten Mal die maximale Drehzahl nₘₐₓ bei dem Zeitpunkt t₃ , die über ein zweites Plateau mit einem Zeitintervall Δt₃ zwischen den Zeitpunkten t₃ und t₄ konstant gehalten wird, d.h. n_{W}(t) = nₘₐₓ bzw. entsprechend n_{S}(t) = n_{S,max} in dem Zeitintervall zwischen t₃ und t₄ der Intervalllänge Δt₃.

Der zeitliche Verlauf der Drehzahl n_{W}(t) ist bei anderen Werten für das Übersetzungsverhältnis I, insbesondere in einem Wertebereich von I = 3 bis 8, und bei anderen Werten für die maximale Drehzahl nₘₐₓ insbesondere in einem Wertebereich von 3.000 bis 10.000 U/min, auch in den verschiedenen Kombinationen, qualitativ gleich. Insbesondere treten ebenso die beiden Plateaus Δt₁ und Δt₃ mit dem Zwischenzeitintervall Δt₂ auf.

Die absoluten Werte der Intervalllänge des zweiten Plateaus Δt₃ hängen von dem Übersetzungsverhältnis I und der maximalen Drehzahl nₘₐₓ und auch von der Maschinensteuerung ab. Insbesondere kann die Intervalllänge Δt₃ des zweiten Plateaus in einem Bereich von 0,01 s bis 0,25 s, insbesondere 0,02 s bis 0,13 s, gewählt werden.

Ab dem Zeitpunkt t₄ nimmt die Drehzahl n_{W}(t) auf 0 bei dem Umkehrpunkt UP bei dem Zeitpunkt t₅ ab.

Das Zwischenzeitintervall Δt₂ zwischen den Zeitpunkten t₁ und t₃, das zwischen den beiden Plateaus, also den Zeiträumen Δt₁ und Δt₃ mit maximaler Drehzahl nₘₐₓ, liegt, ist auch maschinenabhängig und dürfte im Allgemeinen nicht zu vermeiden, sein, sollte jedoch möglichst kurz gehalten werden.

Die absoluten Werte für die Intervalllänge des Zwischenzeitintervalls Δt₂ für die verschiedenen Übersetzungsverhältnisse I und maximalen Drehzahlen nₘₐₓ liegen insbesondere zwischen 0,05 s und 0,15 s, bevorzugt zwischen 0,06 und 0,10 s, variieren also in der Regel nicht so stark wie bei Δt₃.

Interessant ist hier unter anderem auch das Verhältnis Δt₂ / Δt₃ des Zeitintervalls Δt₂ zwischen den Plateaus und des des Zeitintervalls des zweiten Plateaus Δt₃, denn das Zeitintervall Δt₂ des ersten Plateaus ist auch von der Gewindelänge abhängig. Im Allgemeinen liegt das Verhältnis Δt₂ / Δt₃ in einem Bereich von 0,3 bis 3,4 für die verschiedenen Übersetzungsverhältnisse I und maximalen Drehzahlen nₘₐₓ, insbesondere in einem Bereich von 0,5 bis 2,4.

Dieser Verlauf der Drehzahl n_{W}(t) während der Arbeitsbewegung zwischen den Zeitpunkten t₁ und t₅ wiederholt sich, wie in FIG 15 zu sehen, in der Reversierbewegung zwischen den Zeitpunkten t₅ und t₁₀ punktgespiegelt am Umkehrpunkt UP mit zwei Plateaus maximaler Drehzahl - nₘₐₓ, nämlich dem Plateau Δt₃ zwischen den Zeitpunkten t₆ und t₇ und dem Plateau Δt₁ zwischen den Zeitpunkten t₉ und t₁₀ und dem dazwischenliegenden Bereich geringerer Drehzahl mit dem betragsmäßigen Drehzahlminimum - nₘᵢₙ zwischen den Zeitpunkten t₇ und t₉ .

In der Ausführung ohne Übersetzungseinheit gemäß FIG 16 erhöht die Maschinensteuerung die Drehzahl n_{W}(t) gemäß der vorgegebenen maximalen Drehbeschleunigung ab dem Zeitpunkt bei T = 0 mm über den Zeitpunkt t₀ am Eintrittspunkt EP bis zu dem Zeitpunkt t₁, bis ein punktuelles lokales und globales Maximum bei diesem Zeitpunkt t₁ erreicht wird, jedoch ohne Plateau, d.h. ohne ein Zeitintervall, in dem die Drehzahl auf ihrem maximalen Wert bleibt (nicht erfindungsgemäß). Vielmehr wird der maximale Wert der Drehzahl n_{W}(t) sogleich wieder verlassen, d.h. die Drehzahl n_{W}(t) nimmt ab dem Zeitpunkt t₁ unmittelbar wieder ab. Ferner liegt der real erreichte maximale Wert der Drehzahl n_{W}(t) unterhalb der programmierten maximalen Drehzahl nₘₐₓ.

Bei dem Zeitpunkt t₃ erreicht die Drehzahl n_{W}(t) ein lokales Minimum nₘᵢₙ das schon innerhalb der Abbremsbewegung AB, also hier kurz nach dem Zeitpunkt t₂, liegt. Nun steigt infolge der Steuerung der Freistichbewegung AB die Drehzahl n_{W}(t) wieder an und erreicht ein zweites lokales Maximum bei dem Zeitpunkt t₄ und nimmt danach erst bis auf 0 bei dem Umkehrpunkt UP bei dem Zeitpunkt t₅ ab. Das Maximum bei dem Zeitpunkt t₄ ist kleiner als das Maximum bei dem Zeitpunkt t₁ und ist punktuell, d.h. auch hier bildet sich kein Plateau mit konstanter Drehzahl heraus.

Dieser Verlauf der Drehzahl n_{W}(t) während der Arbeitsbewegung zwischen den Zeitpunkten t₁ und t₅ wiederholt sich in der Reversierbewegung zwischen den Zeitpunkten t₅ und t₁₀ punktgespiegelt am Umkehrpunkt UP mit zwei betragsmäßigen Maxima bei den Zeitpunkten t₆ und t9 und einem dazwischenliegenden betragsmäßigen Minimum - nₘᵢₙ dem Zeitpunkt t₈. Auch in der Reversierbewegung wird die betragsmäßig maximale Drehzahl - nₘₐₓ nicht erreicht und stellen sich nicht die gewünschten Plateaus der Drehzahl ein.

Die Flankenanstiege oder Steigungen bei der Drehzahl sind in beiden Ausführungsbeispielen und generell durch die maximale Drehbeschleunigung der Maschinenspindel begrenzt bzw. bestimmt.

Bei Ausführungen mit der Übersetzungseinheit wie gemäß FIG 15 wurden gegenüber Ausführungen ohne Übersetzungseinheit wie gemäß FIG 16 Verbesserungen der Gewindequalität, Maschinenabnutzung, Werkzeugbelastung und hierdurch vermutlich auch der Werkzeugstandzeit festgestellt.

In FIG 17 ist nun eine Werkzeugkoppelvorrrichtung in einer ersten Ausführungsform gezeigt. Das dargestellte Ausführungsbeispiel ist durch eine Modifikation des Speedsynchro^{®}-Futters der Anmelderin entstanden oder des Futters, wie es beispielsweise in der EP 2 361 712 A1 offenbart ist. Im Unterschied zu dem zuvor genannten Futter ist eine starre Kopplung ohne einen Längenausgleich mittels Elastomeren realisiert, um die Genauigkeit der in der Nähe des Umkehrpunktes UP vorgenommenen Steuerungsschritte nicht zu gefährden.

Die Werkzeugkoppelvorrichtung ist zum Ankoppeln eines Werkzeugs 2 an eine Antriebseinheit, insbesondere an eine Maschinenspindel einer Werkzeugmaschine, vorgesehen und umfasst eine Abtriebswelle 12, ein Gehäuse 100, eine Antriebswelle 107 und einen Adapter 91, der mit einer nicht dargestellten Maschinenspindel oder einer (Rotations-) Antriebseinheit gekoppelt werden kann, sowie eine Übersetzungseinheit 16 zwischen Antriebswelle 107 und Abtriebswelle 12.

Das Werkzeug 2 ist in einer Spannzange 10 gehalten, die wiederum in einer an einer Seite ausgebildeten Aufnahme einer Abtriebswelle (oder: eines Spannkopfes) 12 gehalten ist. Zum Halten des Werkzeugs 2 ist die Spannzange 10 mittels einer auf einem Gewinde der Abtriebswelle 12 aufgeschraubten Spannmutter 11 nach innen zusammengedrückt oder gespannt. Anstelle einer Spannzange kann natürlich auch ein anderes Haltemittel, beispielsweise ein Schnellwechseleinsatz oder Schrumpffutter, vorgesehen sein.

Die Abtriebswelle 12 erstreckt sich im Anschluss an die Aufnahme für die Spannzange 10 als zusammenhängender oder einstückiger Körper weiter durch eine Öffnung des Gehäuses 100 in das Gehäuse 100 hinein bis in den Innenraum eines innerhalb des Gehäuses 100 angeordneten annähernd ringförmigen Aufnahmebereiches 117 der Antriebswelle 107. Die Antriebswelle 107 umfasst außer dem Aufnahmebereich 117 einen Hohlschaft 127, der sich zum Aufnahmebereich 117 hin aufweitet und mit diesem lösbar verbunden ist, beispielsweise über Verbindungsschrauben, von denen eine mit dem Bezugszeichen 67 zu sehen ist. Am Ende des Hohlschaftes 127 der Abtriebswelle 12 ist der Adapter 91 lösbar befestigt, der einen Aufnahmeraum 92 zum Aufnehmen und Ankoppeln der nicht dargestellten Maschinenspindel einer Werkzeugmaschine (oder: Anrtriebseinheit) aufweist. Der Adapter 91 kann an verschiedene Formen der Maschinenspindel angepasst werden. Durch dieses Baukastensystem mit einem austauschbaren Adapter 91 kann die Koppelvorrichtung durch Verwendung verschiedener Adapter an verschiedene Maschinenspindeln angekoppelt werden. Die beiden Öffnungen im Gehäuse 100 sind durch nicht näher bezeichnete Verschlüsse mit Dichtungen um die Antriebswelle 12 bzw. Abtriebswelle 107 verschlossen.

Die Abtriebswelle 12 zusammen mit dem daran über die Spannzange 10 drehfest gehaltenen Werkzeug 2 und ebenso die Antriebswelle 107 mit dem Adapter 91 sind jeweils um eine zentrale Achse ZA in einer Vorwärtsdrehrichtung VD (oder in einer nicht dargestellten Rückwärtsdrehrichtung) drehbar. Die Maschinenspindel und damit die mit ihr drehfest gekoppelten Adapter 91 und Antriebswelle 107 mit dem Aufnahmebereich 117 drehen nun jeweils mit der Antriebsdrehzahl oder Maschinendrehzahl n_{S} der Maschinenspindel und die Abtriebswelle 12 zusammen mit dem daran über die Spannzange 10 drehfest gehaltenen Werkzeug 2 jeweils mit der Abtriebsdrehzahl oder Werkzeugdrehzahl n_{W} um die zentrale Achse ZA.

Zwischen die Antriebswelle 107 und die Abtriebswelle 12 ist nun eine Übersetzungseinheit 16 geschaltet, die innerhalb des Gehäuses 100 angeordnet ist. Die Übersetzungseinheit 16 übersetzt, bei gleicher Drehrichtung, die Maschinendrehzahl n_{S} in die Werkzeugdrehzahl n_{W} gemäß dem Übersetzungsverhältnis I der Übersetzungseinheit 16. Im dargestellten Ausführungsbeispiel der FIG 17 ist die Übersetzungseinheit 16 mit einem Getriebe, insbesondere einem Planetengetriebe, ausgebildet.

Das Getriebe der Übersetzungseinheit 16 umfasst ein zentrales Zahnrad 64, einen äußeren Getriebering 108 am Gehäuse 100 mit einer Innenverzahnung 68 sowie zwischen dem Zahnrad 64 und der Innenverzahnung 68 angeordnete jeweils mit ihren Außenverzahnungen in die Außenverzahnung des innere Zahnrades 64 und in die Innenverzahnung 68 eingreifende Zwischenzahnräder, beispielsweise drei, von denen zwei Zahnräder 61 und 62 in FIG 17 zu sehen sind. Das zentrale Zahnrad 64 ist in einem mittleren Bereich des Gehäuses 100 angeordnet und mit der Abtriebswelle 12 drehfest verbunden. Die Zahnräder 61 und 62 sind über zugeordnete Achsbolzen, von denen nur der Achsbolzen 65 für das Zahnrad 61 zu sehen ist, an dem Aufnahmebereich 117 der Antriebswelle 107 drehbar gelagert. Die Verzahnungen im Getriebe legen das Übersetzungsverhältnis I fest. Statt eines solchen Planetengetriebes kann aber auch ein anderes Getriebe für die Übersetzungseinheit 16 vorgesehen sein, beispielsweise Reibgetriebe oder andere Zahnradgetriebe.

Die Abtriebswelle 12 erstreckt sich somit durch das Getriebe der Übersetzungseinheit 16, vorzugsweise als einstückiger starrer Körper, und ist nun an beiden Seiten jeweils durch Wälzlager, insbesondere Kugellager, drehgelagert, nämlich durch Wälzlager 96B auf der Seite zum Werkzeug 2 hin gegen das oder in dem Gehäuse 100 und an der anderen Seite zum Adapter 91 hin durch Wälzlager 96A gegen die oder in der Antriebswelle 107. Dadurch wird ein sehr starrer und stabiler Aufbau mit für das Verfahren gemäß der Erfindung vorteilhaften ausgezeichneten Rundlaufeigenschaften erreicht. Die Antriebswelle 107 ist, vorzugsweise in ihrem Aufnahmebereich 117, an beiden Seiten und relativ nah zum Getriebe der Übersetzungseinheit 16 jeweils mittels weiterer Wälzlager 97A an der Seite zum Adapter 91 hin und Wälzlager 97B, an der Seite zum Werkzeug 2 hin an oder in dem Gehäuse 100 drehgelagert.

Um die durch das Getriebe der Übersetzungseinheit 16 aufgrund von actio = reactio auftretenden Drehmomente aufzunehmen, ist als Drehmomentaufnahme oder Drehmomentfixierung die in FIG 17 oben dargestellte und mit dem Gehäuse 100 fest verbundene Drehfixiereinheit 9 vorgesehen. Die Drehfixiereinheit 9 umfasst in einer entlang einer zur zentralen Achse ZA parallelen Achse B axialen Anordnung einen Fixierbolzen 103, der in einem Führungsteil 118 geführt ist, und ein Anschlussteil 104 zum Anschluss an ein festes nicht mitdrehendes Bezugssystem z.B. ein Maschinengestell oder Maschinengehäuse. Im dargestellten nicht angeschlossenen Zustand ist das Anschlussteil 104 frei und durch eine Feder 119, die sich an dem mit dem Gehäuse 100 verbundenen Führungsteil 118 abstützt, entlang der Achse B nach vorne gedrückt. Dadurch rastet ein Arretierelement 105 in eine Arretieraufnahme (Arretiernut) 109 in einem Außenring 106 außen an dem Hohlschaft 127 an der Antriebswelle 107. Ein Sprengring 129 an dem Ende des Führungsteils 118 bildet eine Sicherung gegen die Federkraft der Feder 119. Im nicht dargestellten angeschlossenen Zustand wird dagegen das Anschlussteil 104 entlang der Achse B nach hinten gegen die Feder 119 gedrückt und das Arretierelement 105 aus der Arretieraufnahme 109 bewegt und die Einheit wird dadurch betriebsbereit.

Ferner ist ein inneres Kühl- und/oder Schmiermittelzuführsystem vorhanden, das entlang der zentralen Achse ZA vom Adapter 91 durch ein Übergaberohr 99 in einen Innenkanal 13 in der Abtriebswelle bis zum Werkzeug 2 verläuft.

Die Ausführungsformen der Werkzeugkoppelvorrichtung sind bevorzugt für ein Verfahren gemäß der Erfindung vorgesehen, können aber auch unabhängig davon für ein anderes Verfahren verwendet werden. FIG 18 und 19 zeigen Ausführungsbeispiele eines Gewinde- und Räumzahnes 8, der als letzter oder hinterster Gewindezahn in dem Werkzeug 2 zur Durchführung des Verfahrens gemäß der Erfindung eingesetzt werden kann.

Der Gewinde- und Räumzahn 8 ist in einer ersten Funktion oder Hauptfunktion zum vollständigen Erzeugen oder Fertigstellen oder Nachbearbeiten des Gewindeganges oder des Gewindeprofils des Gewindeganges vorgesehen. Dazu umfasst der Gewinde- und Räumzahn 8 an seinem in Vorschubrichtung oder Vorwärtsrichtung oder im Windungssinn W gesehen vorne angeordneten vorderseitigen Bereich eine Gewindeschneide 85 mit einem Gewindezahnprofil GP, das einen Gewindezahnprofilkopf K, eine vordere Gewindezahnprofilflanke F1 und eine hintere Gewindezahnprofilflanke F2 aufweist. Im dargestellten Ausführungsbeispiel ist das Gewindezahnprofil GP trapezförmig. Es sind aber mit dem Werkzeug in allen Ausführungsformen beliebige, insbesondere alle bekannten, Gewindeprofile darstellbar und erzeugbar. In Ausführungsformen wird das gesamte Gewindezahnprofil GP schneidend erzeugt, bildet die Gewindeschneide 85 also das gesamte Gewindeprofil ab. In einer nicht dargestellten Ausführungsform kann der Gewinde- und Räumzahn 8 auch ausschließlich formend oder spanlos allein mit wenigstens einem Furchelement beim Gewindeerzeugen arbeiten.

In Ausführungsformen, beispielsweise wie in FIG 18 gezeigt, wird ein in der Regel unterer Teil des Gewindeprofils GP schneidend erzeugt, bildet die Gewindeschneide 85 also diesen Teil des Gewindeprofils ab, und wird das restliche Gewindeprofil spanlos durch Eindrücken oder Furchen erzeugt. Dazu umfasst der Gewinde- und Räumzahn 8 in solchen Ausführungsformen hinter der Gewindeschneide 85 am Zahnrücken einen Furchbereich, der von der Gewindeschneide 85 ausgehend nach außen zunimmt, beispielsweise in Form einer insbesondere flachen, Furchfläche 84, die unter einer Furchsteigung ansteigt bis zu einem, insbesondere flachen oder auf einer Zylinderfläche liegenden, Zahnsteg 83. Dieser Zahnsteg 83 bildet einen Kalibrierbereich für diesen Gewindefurchbereich und bildet vorzugsweise den endgültigen Gewindezahnprofilkopf K' oder bildet den endgültigen Gewindegrund des Gewindeganges im Werkstück ab. Die Breite des Gewindezahnprofilkopfes K' des Zahnsteges 83 ist kleiner als die des Gewindezahnprofilkopfes K der Gewindeschneide 85, die Gewindezahnprofilflanken F1 und F2 setzen sich über die Anfurchfläche bis zum Gewindezahnprofilkopf K' fort. Das resultierende Gewindezahnprofil GP' ist am Ende der Gewindefurchfläche 84 oder an dem Übergangsbereich zwischen Gewindefurchfläche 84 und Zahnsteg 83 erreicht.

In jedem Fall ist im vorderseitigen Bereich des Gewinde- und Räumzahnes 8 ein Gewindezahnelement vorgesehen, das das Gewindezahnprofil GP abbildet, sei es allein durch eine Gewindeschneide 85, durch Kombination einer Gewindeschneide 85 mit einer Gewindefurchfläche 84 oder auch allein durch ein Furchelement.

Ferner ist der Gewinde- und Räumzahn 8 auch, in einer zweiten Funktion, als Räumzahn oder zum Räumen des bereits erzeugten Gewindeganges oder auch der Umlaufnut von darin befindlichen Spänen oder Spanwurzeln oder sonstigen Rückständen während der Rückwärtsbewegung RB in der zweiten Reversierphase und auch in der ersten Reversierphase vorgesehen. Zu diesem Zweck weist der Gewinde- und Räumzahn 8 an seinem in Vorschubrichtung oder Vorwärtsrichtung VB oder im Windungssinn W gesehen hinten angeordneten rückseitigen Bereich eine Räumschneide 86 auf mit einem Räumprofil RP, das einen Räumprofilkopf RK, eine vordere Räumprofilflanke RF1 und eine hintere Räumprofilflanke RF2 aufweist. Das Räumprofil RP kann insbesondere zum Gewindezahnprofil GP korrespondieren oder gleich oder zumindest ähnlich sein. Mit der Räumschneide 86 werden die im Gewindegang oder in der Umlaufnut befindlichen Fremdkörper, insbesondere Späne oder Spanwurzeln, zertrennt oder abgetrennt.

Die Räumfunktion wird, beispielsweise gemäß FIG 19, ergänzend erfüllt durch eine Räumfläche 88, die von der Räumschneide 86 von deren Räumprofilkopf RK zu dem Zahnsteg 83 ansteigt analog zur Anfurchfläche 74, die von der Gewindeschneide 75 zum Zahnsteg 83 ansteigt, bis zu dem Räumprofil RP' mit dem Räumprofilkopf RK'. Die Räumfläche 88 drückt noch verbleibende Reste von Spanwurzeln oder dergleichen in die Werkstückoberfläche und/oder glättet die Werkstückoberfläche, insbesondere im Gewindegang, und kann auch zur Stabilisierung des Werkzeuges bei seiner Bewegung dienen.

Die Räumschneide 86 allein oder auch in Kombination mit der Räumfläche 88 bildet bzw. bilden ein Räumelement an der Rückseite oder im rückwärtigen Bereich des Gewinde- und Räumzahnes 8, also dem Bereich, der bei der Reversierbewegung den zuerst eintretenden Bereich im Gewindegang bildet. Das Räumelement 86 oder 86 und 88 bildet als gemeinsames Wirkprofil ein Räumprofil RP, das vorzugsweise dem Gewindeprofil des erzeugten Gewindes entspricht, so dass keine Zwischenspalte bei dem Räumvorgang entstehen.

Die Zahnflanken 81 und 82 des Gewinde- und Räumzahnes 8 sind nun insbesondere so gestaltet, insbesondere mit einer Schleifscheibe geschliffen, dass sie zumindest überwiegend oder vollständig oder über ihre gesamte Länge entlang der zugehörigen vorderen Gewindezahnflankeneinhüllenden G1 bzw. hinteren Gewindezahnflankeneinhüllenden G2 oder ohne Freiflächen oder Freiwinkel verlaufen.

Auch der Zahnsteg 83 weist vorzugsweise keine Freiflächen auf. Dadurch läuft der Gewinde- und Räumzahn 8 bei der Reversier- oder Rückwärtsbewegung ohne Zwischenspalt durch den erzeugten Gewindegang und die Räumfunktion wird optimiert, da sich keine Späne oder Rückstände in einen solchen Zwischenspalt klemmen können und Rückstände wie Spanwurzeln an der Werkstückoberfläche vollständig in diese eingedrückt werden können.

Die Ausgestaltung des Gewinde- und Räumzahnes 8 mit einem vollen Gewindezahnprofil und einem vollen Räumprofil ermöglicht auch eine Trennung der beiden Funktionen, so dass das Räumelement bei der Vorwärtsbewegung möglichst nicht arbeitet. Die formenden Fasen auf der vorderen und hinteren Seite, d.h. die Furchfläche 84 und die Räumfläche 88, stabilisieren auch die Schneidenecken und die Schneidkante gegen Bruch bei Spanklemmern und auch gegenüber dem Druck auf die hintere Flanke, der sich im Bereich des Abbremsens durch den kleineren programmierten Vorschub in z-Richtung ergibt, gegen Ausbrüche. Grundsätzlich genügt für ein derartiges "vollständiges" Räumen auch nur ein abschnittsweises Vollprofil ohne Freiflächen und können abschnittsweise dennoch Freiflächen oder Freischliffe an den Zahnflanken 81 und 82 vorgesehen sein, um die Reibung des Gewinde- und Räumzahnes 8 zu reduzieren.

Bei dem Werkzeug gemäß FIG 1 mit zwei Gewindezähnen 41 und 42 wird der Gewinde- und Räumzahn 8 vorzugsweise als hinterer Gewindezahn 42 eingesetzt.

Bei dem Werkzeug 2 mit einem derartigen Gewinde- und Räumzahn wurde festgestellt, dass dieser beim Abbremsen drückt und dadurch die Bohrkraft reduziert. Durch die Übersetzungseinheit, insbesondere das modifizierte SpeedSynchro, in Kombination mit dem Verfahren gemäß der Erfindung wird diese der Bohrkraft in nachteiliger Weise entgegenwirkende Kraft des Räumzahnes reduziert.

Der vordere Gewindezahn 41 des Werkzeugs 2, insbesondere gemäß FIG 1, oder allgemein ein weiter vorne liegender Gewindezahn, soll dagegen möglichst wenig Reibung erzeugen, vorzugsweise auch während der Freistichbewegung, und ist deshalb vorzugsweise in zwei Richtungen freigestellt. So kann der vordere Gewindezahn, insbesondere 41, mit seiner vordere Flankenfreifläche gegenüber einer vorderen Gewindezahnflankeneinhüllenden, die entlang der oder parallel zur Schraubenlinie und durch eine vordere Gewindezahnprofilflanke verläuft, nach hinten freigestellt oder zurückversetzt sein und mit seiner hinteren Flankenfreifläche gegenüber einer hinteren Transversalebene, die senkrecht zur Werkzeugachse A gerichtet ist und durch den hintersten Punkt der hinteren Gewindezahnprofilflanke verläuft und gegenüber der Schraubenlinie des Gewindes um den Gewindesteigungswinkel geneigt ist, nach vorne versetzt oder freigestellt sein. Dadurch reibt der vordere Gewindezahn 41 mit seinen Flankenbereichen auch während der Freistichbewegung nicht an der Werkstückoberfläche.

Das Verfahren gemäß der Erfindung wurde zwar zumeist im Zusammenhang mit einem kombinierten Werkzeug mit Bohrbereich beschrieben, jedoch ist es auch bei Nutzung eines reinen Gewindewerkzeugs ohne Bohrbereich, von Vorteil.

### Bezugszeichenliste

- 2: Werkzeug
- 3: Bohrbereich
- 4: Gewindeerzeugungsbereich
- 5: Gewindeloch
- 6: Werkstück
- 8: Gewinde- und Räumzahn
- 9: Drehfixiereinheit
- 10: Spannzange
- 11: Spannmutter
- 12: Abtriebswelle (oder: Spannkopf,)
- 13: Innenkanal
- 16: Übersetzungseinheit
- 20: Arbeitsbereich
- 21: Werkzeugschaft
- 25: Trennnuten
- 31, 32: Bohr(haupt)schneide
- 33: Bohrerspitze
- 41, 42: Gewinde(erzeugungs)zahn
- 50: Gewindegang
- 51, 52, 53: Umfangsnut
- 55: Gewindeprofil
- 56: Bohrungsteilbereich
- 60: Werkstückoberfläche
- 61,62,63,64: Zahnrad
- 65: Achsbolzen
- 67: Verbindungsschraube
- 68: Innenverzahnung
- 74: Anfurchfläche
- 75: Gewindeschneide
- 81, 82: Zahnflanke
- 83: Zahnsteg
- 84: Gewindefurchfläche
- 85: Gewindeschneide
- 86: Räumschneide
- 88: Räumfläche
- 90: Maschinenrotor (oder: Antriebswelle, Schaft)
- 91: Adapter
- 92: Aufnahmeraum
- 96A, 96B: Lager
- 97A, 97B: Lager
- 99: Übergaberohr
- 100: Gehäuse
- 101: Seitengehäuse
- 102: Haube
- 103: Fixierbolzen
- 104: Anschlusssteil
- 105: Arretierelement
- 106: Außenelement
- 107: Antriebswelle
- 108: Getriebering
- 109: Arretieraufnahme
- 111: Anschlagsfläche
- 112: Vorsprung
- 113: Anschlagsfläche
- 117: Aufnahmebereich
- 118: Führungsteil
- 119: Feder
- 127: Hohlschaft
- 129: Sprengring
- φ: Drehwinkel
- φ_{G}: Drehwinkelbereich
- φ_{L}: maximaler Drehwinkelbereich
- ΔT: Eindringtiefenbereich/maximale Eindringtiefe
- a: Nutlänge
- A: Werkzeugachse
- AB: Abbremsbewegung
- b: Gewindelücke
- B: Achse
- BB: Beschleunigungsbewegung
- c: Gewindebreite/Gewindeprofilbreite des Gewindewirkprofils
- D: Gewindeaußendurchmesser
- d: Kernlochdurchmesser
- d': Außendurchmesser
- EP: Eintrittspunkt
- F1, F2: Gewindezahnprofilflanke
- GP, GP': Gewindezahnprofil
- K, K': Gewindezahnprofilkopf
- M: Gewindemittelachse
- n: Drehzahl
- nₘₐₓ: maximale Drehzahl
- n_{S}: Drehzahl Spindel
- n_{W}: Drehzahl Werkzeug
- P: Gewindesteigung
- P₁ bis P₁₀: Steigungsparameter/Steigungswerte
- RB: Reversier-/Rückwärtsbewegung
- RD: Rückwärtsdrehsinn
- RF1, RF2: Räumprofilflanke
- RK, RK': Räumprofilkopf
- RP, RP': Räumprofil
- Si , S₁ bis S₁₀: Abbremsschritte
- T: Eindringtiefe/axialer Vorschub
- T_{G}: Gewindetiefe/Gewindelänge
- T_{L}: Gesamttiefe/Lochtiefe/axiale Abmessung des Gewindeloches
- Tₘₐₓ: maximale Eindringtiefe
- UP: Umkehrpunkt
- VB: Vorwärtsbewegung
- VD: Vorwärtsdrehsinn
- W: Windungssinn
- ZA: Zentralachse

## Patentansprüche

1. Verfahren zum Erzeugen eines Gewindes mit einer vorgegebenen Gewindesteigung in einem Werkstück,
a) bei dem ein Werkzeug zum Erzeugen eines Gewindes verwendet wird,
a1) wobei das Werkzeug wenigstens einen Gewindeerzeugungsbereich (4) umfasst,
a2) wobei der Gewindeerzeugungsbereich (4) mit einer vorgegebenen Gewindesteigung (P) und einem vorgegebenen Windungssinn (W) des zu erzeugenden Gewindes (50) um eine durch das Werkzeug verlaufende Werkzeugachse (A) verläuft,
b) bei dem das Werkzeug in einer Arbeitsbewegung während einer ersten Arbeitsphase in das Werkstück bewegt wird,
b1) wobei die Arbeitsbewegung eine Drehbewegung mit einem vorgegebenen Drehsinn um die Werkzeugachse (A) des Werkzeugs und eine gemäß der Gewindesteigung des Gewindeerzeugungsbereichs mit der Drehbewegung synchronisierte axiale Vorschubbewegung des Werkzeugs in einer axialen Vorwärtsrichtung (VB) axial zur Werkzeugachse umfasst, derart, dass einer vollen Umdrehung des Werkzeugs um die Werkzeugachse ein axialer Vorschub des Werkzeugs um die vorgegebene Gewindesteigung entspricht,
b2) wobei der Gewindeerzeugungsbereich während der ersten Arbeitsphase in der Arbeitsbewegung einen unter der vorgegebenen Gewindesteigung verlaufenden Gewindegang in dem Werkstück erzeugt,
c) wobei das Werkzeug in einer Abbremsbewegung (AB) während einer zweiten Arbeitsphase im Anschluss an die erste Arbeitsphase weiter in das Werkstück bis zu einem Umkehrpunkt (UP) bewegt wird,
c1) wobei der axiale Vorschub des Werkzeugs bezogen auf eine volle Umdrehung zumindest während eines Teils der Abbremsbewegung, vorzugsweise während der gesamten Abbremsbewegung, betragsmäßig kleiner als die Gewindesteigung ist und beim Umkehrpunkt Null ist und
c2) wobei der Gewindeerzeugungsbereich des Werkzeugs während der Abbremsbewegung wenigstens eine geschlossene oder ringförmige Umfangsnut (51, 52, 53) in dem Werkstück erzeugt, **dadurch gekennzeichnet, dass**
d) während der Arbeitsbewegung die Drehzahl der Drehbewegung des Werkzeugs in ihrem zeitlichen Verlauf ein erstes Plateau, bei dem die Drehzahl konstant auf einer vorgegebenen maximalen Drehzahl (nₘₐₓ) bleibt, durchläuft,
e) während der Abbremsbewegung die Drehzahl der Drehbewegung des Werkzeugs in ihrem zeitlichen Verlauf ein zweites Plateau, bei dem die Drehzahl konstant auf derselben vorgegebenen maximalen Drehzahl (nₘₐₓ) bleibt, durchläuft,
f) und dass die vorgegebene maximale Drehzahl der Drehbewegung des Werkzeugs mindestens so groß gewählt ist, dass eine Bahngeschwindigkeit am Gewindeerzeugungsbereich von mindestens 57 m/min, insbesondere von mindestens 85 m/min, erreicht wird, was bei einem Gewindedurchmesser von 6 mm einer maximalen Drehzahl von mindestens 3000 U/min, insbesondere mindestens 4.500 U/min, entspricht.

2. Verfahren nach Anspruch 1, bei dem zwischen einem Zeitintervall (Δt₁) des ersten Plateaus und einem Zeitintervall (Δt₃) des zweiten Plateaus ein Zwischenzeitintervall (Δt₂) liegt, in dem die Drehzahl unter die maximale Drehzahl abfällt.

3. Verfahren nach Anspruch 2, bei dem das Verhältnis (Δt₂ / Δt₃) der Intervalllänge des Zwischenzeitintervalls (Δt₂) zur Intervalllänge des Zeitintervalls (Δt₃) des zweiten Plateaus in einem Bereich von 0,5 bis 2,4 liegt.

4. Verfahren nach einem der Ansprüche 2 und 3, bei dem die Intervalllänge des zweiten Plateaus (Δt₃) in einem Bereich von 0,01 s bis 0,25 s, insbesondere 0,02 s bis 0,13 s, gewählt wird und/oder bei dem die Intervalllänge des Zwischenzeitintervalls (Δt₂) zwischen 0,05 s und 0,15 s, insbesondere zwischen 0,06 und 0,10 s, gewählt wird.

5. Verfahren nach einem der vorhergehenden Ansprüche, bei dem die maximal erreichte Bahngeschwindigkeit am Gewindeerzeugungsbereich in einem Bereich von 57 m/min bis 189 m/min, insbesondere von 85 m/min bis 132 m/min, liegt.

6. Verfahren nach einem der vorhergehenden Ansprüche, bei dem die maximale Drehzahl bereits zu Beginn der ersten Arbeitsphase oder der Arbeitsbewegung oder bei dem Eintrittspunkt des Werkezugs in das Werkstück erreicht ist.

7. Verfahren nach einem der vorhergehenden Ansprüche
a) bei dem das Werkzeug in der Arbeitsbewegung und in der Abbremsbewegung von einem Maschinenantrieb angetrieben wird und zwischen den Maschinenantrieb und das Werkzeug eine Übersetzungseinheit für die Drehbewegung, insbesondere eine Übersetzungsgetriebeeinheit, mit einem vorgegebenen oder vorgebbaren Übersetzungsverhältnis geschaltet ist,
b) wobei das Übersetzungsverhältnis dem Quotienten aus der Drehzahl des Maschinenantriebs und der Drehzahl des Werkzeugs entspricht und maximal 1:3 beträgt,
c) wobei in der Programmierung des Maschinenantriebs eine maximale Drehzahl der Drehbewegung des Maschinenantriebs programmiert wird, die dem Produkt aus dem Übersetzungsverhältnis und der vorgegebenen maximalen Drehzahl der Drehbewegung am Werkzeug entspricht.

8. Verfahren nach Anspruch 7, bei dem das Übersetzungsverhältnis i zwischen 1:3 und 1:10 gewählt, insbesondere zwischen 1:4 und 1:8, vorzugsweise zwischen 1:4 und 1:5, gewählt ist.

9. Verfahren nach einem der vorhergehenden Ansprüche, bei dem der Gewindeerzeugungsbereich ein Wirkprofil aufweist, das dem Gewindeprofil des zu erzeugenden Gewindes entspricht, und/oder bei dem der Gewindeerzeugungsbereich wenigstens einen Gewindezahn (41, 42, 8) aufweist, vorzugsweise zwei Gewindezähne, wobei der oder wenigstens ein Gewindezahn während der Abbremsbewegung die, Umfangsnut (51, 52, 53) in dem Werkstück erzeugt,

10. Verfahren nach einem der vorhergehenden Ansprüche, bei dem während wenigstens eines überwiegenden Teils der zweiten Arbeitsphase oder während der gesamten zweiten Arbeitsphase das Werkzeug in derselben Vorwärtsrichtung wie bei der Arbeitsbewegung in der ersten Arbeitsphase bewegt wird und/oder wobei die Abbremsbewegung eine Drehbewegung mit gleichbleibendem Drehsinn wie bei der Arbeitsbewegung umfasst.

11. Verfahren nach einem der vorhergehenden Ansprüche, wobei die Drehgeschwindigkeit der Drehbewegung beim Umkehrpunkt Null ist und/oder bei dem der gesamte oder aufsummierte axiale Vorschub des Werkzeuges während der Abbremsbewegung zwischen dem 0,1-fachen bis 2-fachen der Gewindesteigung gewählt ist.

12. Verfahren nach einem der vorhergehenden Ansprüche,
bei dem während der Abbremsbewegung in mehreren aufeinanderfolgenden Abbremsschritten zueinander unterschiedliche Beziehungen, insbesondere Funktionen, zwischen dem axialen Vorschub des Werkzeugs und dem Drehwinkel gewählt oder eingestellt werden,
wobei während mehreren Abbremsschritten für die axiale Eindringtiefe oder den axialen Vorschub eine lineare Funktion des Drehwinkels gewählt wird und/oder bei dem die Steigung, d.h. die Ableitung der axialen Eindringtiefe oder des axialen Vorschubs nach dem Drehwinkel, in jedem dieser Abbremsschritte konstant und betragsmäßig von einem Abbremsschritt zu einem darauffolgenden Abbremsschritt abnehmend eingestellt wird.

13. Verfahren nach einem der vorhergehenden Ansprüche, bei dem der nach Erreichen des Umkehrpunktes eine Reversierbewegung des Werkzeuges eingeleitet wird, mit der das Werkzeug aus dem Werkstück bewegt wird, wobei die Reversierbewegung zunächst eine erste Reversierphase, mit der der Gewindeerzeugungsbereich des Werkzeugs zurück in den Gewindegang des erzeugten Gewindes geführt wird, und im Anschluss eine zweite Reversierphase, während der der Gewindeerzeugungsbereich durch den Gewindegang aus dem Werkstück nach außen geführt wird, umfasst, wobei die Reversierbewegung mit einem zur Arbeitsbewegung und Abbremsbewegung symmetrischen Bewegungsverlauf mit umgekehrtem Drehsinn und umgekehrtem Vorschub durchgeführt wird.

14. Verfahren nach Anspruch 13, bei dem ein Gewinde- und Räumzahn (8) während der Reversierbewegung Fremdkörper, insbesondere Späne oder Spanwurzeln, vor oder aus dem Gewinde ausräumt und insbesondere auch die Werkstückoberfläche, insbesondere im Gewinde, glätten kann und/oder insbesondere keine Zwischenspalte bei dem Räumvorgang zur Gewindeganginnenwand entstehen lässt.

15. Verfahren nach einem der vorhergehenden Ansprüche, bei dem
a) das Werkzeug ferner wenigstens einen Bohrbereich (3) umfasst und
b) bei dem während der Arbeitsbewegung in der ersten Arbeitsphase der Bohrbereich des Werkzeugs ein Kernloch in dem Werkstück erzeugt und der Gewindeerzeugungsbereich einen unter der vorgegebenen Gewindesteigung verlaufenden Gewindegang in der Innenwandung des von dem Bohrbereich erzeugten Kernloches erzeugt,
wobei vorzugsweise der Bohrbereich und der Gewindeerzeugungsbereich starr bewegungsgekoppelt sind und die Arbeitsbewegung gemeinsam ohne Veränderung ihrer relativen Lage zueinander ausführen und/oder wobei vorzugsweise
der Bohrbereich in einem weiter vorne, insbesondere an einem vorderen oder freien Ende, liegenden Bereich angeordnet ist als der Gewindeerzeugungsbereich und/oder,
der Gewindeerzeugungsbereich radial zur Werkzeugachse weiter nach außen ragt als der Bohrbereich.

## Claims

1. A method for producing a thread with a predetermined thread pitch in a workpiece,
a) in which a tool is used to produce a thread,
a1) wherein the tool comprises at least one threading region (4),
a2) wherein the threading region (4) runs around a tool axis (A) extending through the tool with a predetermined thread pitch (P) and a predetermined handedness (W) of the thread (50) to be produced,
b) in which the tool is moved into the workpiece in a working movement during a first working phase,
b1) wherein the working movement comprises a rotational movement with a predetermined direction of rotation about the axis (A) of the tool and an axial feed movement of the tool, in an axial forward direction (VB) axially with respect to the tool axis, which is synchronized with the rotational movement in accordance with the thread pitch of the threading region, in such a way that one complete revolution of the tool about the tool axis corresponds to an axial feed of the tool by the predetermined thread pitch,
b2) wherein the threading region produces thread turns, running at the predetermined thread pitch, in the workpiece during the first working phase,
c) wherein the tool is moved further into the workpiece as far as a reversal point (UP) in a deceleration movement (AB) during a second working phase following the first working phase,
c1) wherein the axial feed of the tool, relative to one complete revolution at least during a part of the deceleration movement and preferably during the whole deceleration movement, is smaller in amount than the thread pitch and is zero at the reversal point, and
c2) wherein the threading region of the tool produces at least one closed or annular, peripheral groove (51, 52, 53) in the workpiece during the deceleration movement, **characterized in that**
d) during the working movement, the rotational speed of the rotational movement of the tool over time extends over a first plateau during which the rotational speed remains constant at a predetermined maximum rotational speed (nₘₐₓ),
e) during the deceleration movement, the rotational speed of the rotational movement of the tool over time extends over a second plateau during which the rotational speed remains constant at the same predetermined maximum rotational speed (nₘₐₓ),
f) and **in that** the predetermined maximum rotational speed of the rotational movement of the tool is chosen to be at least large enough that a tool path feed rate at the threading region of at least 57 m/min, in particular at least 85 m/min, is obtained, which for a thread diameter of 6 mm corresponds to a maximum rotational speed of at least 3000 rpm, in particular at least 4500 rpm.

2. The method as claimed in claim 1, in which an intermediate time interval (Δt₂), in which the rotational speed falls below the maximum rotational speed, is situated between a time interval (Δt₁) of the first plateau and a time interval (Δt₃) of the second plateau.

3. The method as claimed in claim 2, in which the ratio (Δt₂/Δt₃) between the interval length of the intermediate time interval (Δt₂) and the interval length of the time interval (Δt₃) of the second plateau is situated within a range from 0.5 to 2.4.

4. The method as claimed in one of claims 2 and 3, in which the interval length of the second plateau (Δt₃) is chosen to be within a range from 0.01 s to 0.25 s, in particular 0.02 s to 0.13 s, and/or in which the interval length of the intermediate time interval (Δt₂) is chosen to be between 0.05 s and 0.15 s, in particular between 0.06 and 0.10 s.

5. The method as claimed in one of the preceding claims, in which the maximum tool path feed rate achieved at the threading region is situated within a range from 57 m/min to 189 m/min, in particular from 85 m/min to 132 m/min.

6. The method as claimed in one of the preceding claims, in which the maximum rotational speed is already reached at the beginning of the first working phase or of the working movement or at the entry point of the tool into the workpiece.

7. The method as claimed in one of the preceding claims,
a) wherein the tool is driven by a machine drive in the working movement and in the deceleration movement and a transmission unit for the rotational movement, in particular a transmission gear unit, with a predetermined or predeterminable transmission ratio is interposed between the machine drive and the tool,
b) wherein the transmission ratio corresponds to the quotient of the rotational speed of the machine drive and the rotational speed of the tool and is a maximum of 1:3,
c) wherein a maximum rotational speed of the rotational movement of the machine drive, which corresponds to the product of the transmission ratio and the predetermined maximum rotational speed of the rotational movement at the tool, is programmed in the program for the machine drive.

8. The method as claimed in claim 7, in which the transmission ratio is chosen to be between 1:3 and 1:10, in particular between 1:4 and 1:8, and preferably between 1:4 and 1:5.

9. The method as claimed in one of the preceding claims, in which the threading region has an active profile which corresponds to the tapping profile of the thread to be produced, and/or in which the threading region has at least one tapping tooth (41, 42, 8), preferably two tapping teeth, wherein the or at least one tapping tooth produces the peripheral groove (51, 52, 53) in the workpiece during the deceleration movement.

10. The method as claimed in one of the preceding claims, in which, during at least the majority of the second working phase or during the whole second working phase, the tool is moved in the same forward direction as during the working movement in the first working phase and/or wherein the deceleration movement comprises a rotational movement with the same direction of rotation as during the deceleration movement.

11. The method as claimed in one of the preceding claims, in which the rotational speed of the rotational movement is zero at the reversal point and/or in which the whole or cumulative axial feed of the tool during the deceleration movement is chosen to be between 0.1 and 2 times the thread pitch.

12. The method as claimed in one of the preceding claims, in which, during the deceleration movement, in a plurality of successive deceleration steps different correlations, in particular functions, between the axial feed of the tool and the angle of rotation are chosen or set, wherein, during a plurality of deceleration steps a linear function of the angle of rotation is chosen for the axial penetration depth or the axial feed and/or in which the pitch, i.e. the derivative of the axial penetration depth or the axial feed with respect to the angle of rotation, is set to be constant in each of these deceleration steps and to decrease in amount from one deceleration step to a subsequent deceleration step.

13. The method as claimed in one of the preceding claims, in which, after the reversal point has been reached, a reversing movement of the tool is initiated by means of which the tool is moved out of the workpiece, wherein the reversing movement comprises initially a first reversing phase by means of which the threading region of the tool is guided back into the thread turns of the thread produced, and then a second reversing phase during which the threading region is guided outward through the thread turns out of the workpiece, wherein the reversing movement is performed with a movement path, which is symmetrical with respect to the working movement and the deceleration movement, with an opposite direction of rotation and an opposite feed.

14. The method as claimed in claim 13, in which, during the reversing movement, a tapping and chip-removal tooth (8) removes foreign bodies, in particular chips or chip roots, from the thread and can in particular also smooth the workpiece surface, in particular inside the thread, and/or in particular not allow any gaps from the inner wall of the thread turns to occur during the chip-removal procedure.

15. The method as claimed in one of the preceding claims, in which
a) tool moreover comprises a drilling region (3), and
b) in which, during the working movement in the first working phase, the drilling region of the tool produces a core hole in the workpiece and the threading region produces thread turns, running with the predetermined thread pitch, in the inner wall of the core hole produced by the drilling region, wherein the drilling region and the threading region are preferably rigidly coupled to each other in terms of movement and execute the working movement together without changing their relative position to each other, and/or wherein the drilling region is preferably arranged in a region which is situated further forward, in particular at a front or free end, than the threading region, and/or the threading region projects further outward radially with respect to the tool axis than the drilling region.

## Revendications

1. Procédé permettant de réaliser un filetage présentant un pas prédéfini dans une pièce,
a) dans lequel on utilise un outil destiné à réaliser un filetage,
a1) ledit outil comprenant au moins une zone de filetage (4),
a2) la zone de filetage (4) s'étendant autour d'un axe d'outil (A) traversant l'outil, avec un pas de filetage (P) prédéfini et un sens d'enroulement (W) prédéfini du filetage (50) à réaliser,
b) dans lequel l'outil est déplacé dans la pièce à usiner au cours d'un mouvement d'usinage pendant une première phase d'usinage,
b1) le mouvement de travail comprenant un mouvement de rotation dans un sens de rotation prédéfini autour de l'axe (A) de l'outil, ainsi qu'un mouvement d'avance axiale de l'outil dans une direction axiale vers l'avant (VB) perpendiculaire à l'axe de l'outil, de telle sorte qu'un tour complet de l'outil autour de l'axe de l'outil corresponde à une avance axiale de l'outil égale au pas de filetage prédéfini,
b2) la zone de filetage réalisant, pendant la première phase de travail au cours du mouvement de travail, un filetage s'étendant sous le pas de filetage prédéfini dans la pièce,
c) l'outil étant déplacé plus avant dans la pièce, dans un mouvement de décélération (AB) au cours d'une deuxième phase de travail succédant à la première phase de travail, jusqu'à un point de renversement (UP),
c1) l'avance axiale de l'outil, rapportée à un tour complet, étant, au moins pendant une partie du mouvement de décélération, de préférence pendant l'ensemble du mouvement de décélération, d'une valeur inférieure au pas du filetage et nulle au point de renversement, et
c2) la zone de filetage de l'outil formant, pendant le mouvement de décélération, au moins une rainure périphérique fermée ou annulaire (51, 52, 53) dans la pièce, **caractérisé en ce que**
d) pendant le mouvement de travail, la vitesse de rotation de l'outil suit, au cours de son évolution temporelle, un premier plateau au cours duquel la vitesse de rotation reste constante à une vitesse maximale prédéfinie (nₘₐₓ ),
e) pendant le mouvement de décélération, la vitesse de rotation de l'outil traverse, au cours de son évolution temporelle, un deuxième plateau au cours duquel la vitesse de rotation reste constante à la même vitesse maximale prédéfinie (nₘₐₓ ),
f) et que la vitesse de rotation maximale spécifiée pour le mouvement de rotation de l'outil soit choisie de manière à atteindre, au minimum, une vitesse de déplacement au niveau de la zone de filetage d'au moins 57 m/min, et notamment d'au moins 85 m/min, ce qui correspond, pour un diamètre de filetage de 6 mm, à une vitesse de rotation maximale d'au moins 3 000 tr/min, et notamment d'au moins 4 500 tr/min.

2. Procédé selon la revendication 1, dans lequel, entre un intervalle de temps (Δt₁ ) du premier plateau et un intervalle de temps (Δt₃ ) du deuxième plateau, se situe un intervalle de temps intermédiaire (Δt₂ ) durant lequel la vitesse de rotation chute en dessous de la vitesse de rotation maximale.

3. Procédé selon la revendication 2, dans lequel le rapport (Δt₂ / Δt₃ ) entre la durée de l'intervalle intermédiaire (Δt₂ ) et la durée de l'intervalle (Δt₃ ) du deuxième plateau se situe dans une plage comprise entre 0,5 et 2,4.

4. Procédé selon l'une des revendications 2 et 3, dans lequel la durée de l'intervalle du deuxième plateau (Δt₃ ) est choisie dans une plage comprise entre 0,01 s et 0,25 s, en particulier entre 0,02 s et 0,13 s, et/ou dans lequel la durée de l'intervalle intermédiaire (Δt₂ ) est choisie entre 0,05 s et 0,15 s, en particulier entre 0,06 s et 0,10 s.

5. Procédé selon l'une des revendications précédentes, dans lequel la vitesse de déplacement maximale atteinte au niveau de la zone de filetage se situe dans une plage comprise entre 57 m/min et 189 m/min, en particulier entre 85 m/min et 132 m/min.

6. Procédé selon l'une des revendications précédentes, dans lequel la vitesse de rotation maximale est atteinte dès le début de la première phase de travail ou du mouvement de travail, ou au point d'entrée de l'outil dans la pièce.

7. Procédé selon l'une des revendications précédentes
a) dans lequel l'outil est entraîné par un entraînement de machine pendant le mouvement de travail et le mouvement de décélération, et dans lequel une unité de transmission pour le mouvement de rotation, en particulier une unité d'engrenage, présentant un rapport de transmission prédéfini ou pouvant être prédéfini, est intercalée entre l'entraînement de machine et l'outil,
b) le rapport de transmission correspondant au quotient de la vitesse de rotation de l'entraînement de la machine et de la vitesse de rotation de l'outil, et s'élevant au maximum à 1:3,
c) dans la programmation de l'entraînement de la machine, on programme une vitesse de rotation maximale du mouvement de rotation de l'entraînement de la machine, qui correspond au produit du rapport de transmission et de la vitesse de rotation maximale prédéfinie du mouvement de rotation au niveau de l'outil.

8. Procédé selon la revendication 7, dans lequel le rapport de transmission i est choisi entre 1:3 et 1:10, en particulier entre 1:4 et 1:8, de préférence entre 1:4 et 1:5.

9. Procédé selon l'une des revendications précédentes, dans lequel la zone de filetage présente un profil actif qui correspond au profil du filetage à réaliser, et/ou dans lequel la zone de filetage comporte au moins une dent de filetage (41, 42, 8), de préférence deux dents de filetage, la ou au moins une dent de filetage formant, pendant le mouvement de décélération, la rainure circonférentielle (51, 52, 53) dans la pièce à usiner,

10. Procédé selon l'une des revendications précédentes, dans lequel, pendant au moins une partie prépondérante de la deuxième phase de travail ou pendant toute la deuxième phase de travail, l'outil est déplacé dans le même sens d'avance que lors du mouvement de travail de la première phase de travail et/ou dans lequel le mouvement de décélération comprend un mouvement de rotation dont le sens de rotation reste constant, comme lors du mouvement de travail.

11. Procédé selon l'une des revendications précédentes, dans lequel la vitesse de rotation du mouvement de rotation est nulle au point de retournement et/ou dans lequel l'avance axiale totale ou cumulée de l'outil pendant le mouvement de décélération est choisie entre 0,1 fois et 2 fois le pas du filetage.

12. Procédé selon l'une des revendications précédentes,
dans lequel, pendant le mouvement de décélération, des relations différentes les unes des autres, notamment des fonctions, entre l'avance axiale de l'outil et l'angle de rotation sont choisies ou réglées au cours de plusieurs étapes de décélération successives, une fonction linéaire de l'angle de rotation étant choisie pour la profondeur de pénétration axiale ou l'avance axiale au cours de plusieurs étapes de décélération, et/ou dans lequel le pas, c'est-à-dire la dérivée de la profondeur de pénétration axiale ou de l'avance axiale par rapport à l'angle de rotation, est réglée de manière constante dans chacune de ces étapes de décélération et diminue en valeur d'une étape de décélération à l'étape suivante.

13. Procédé selon l'une des revendications précédentes, dans lequel, une fois le point de retournement atteint, un mouvement d'inversion de l'outil est déclenché, grâce auquel l'outil est retiré de la pièce, le mouvement d'inversion comprenant d'abord une première phase d'inversion, au cours de laquelle la zone de filetage de l'outil est ramenée dans le filetage réalisé, puis une deuxième phase de retour en arrière, au cours de laquelle la zone de filetage est guidée vers l'extérieur de la pièce à usiner à travers le filetage, le mouvement de retour en arrière étant exécuté selon une trajectoire symétrique par rapport au mouvement de travail et au mouvement de freinage, avec un sens de rotation inverse et une avance inverse.

14. Procédé selon la revendication 13, dans lequel une dent de filetage et de brochage (8) élimine, pendant le mouvement d'inversion, des corps étrangers, notamment des copeaux ou des racines de copeaux, situés devant ou à l'intérieur du filetage, et peut notamment également lisser la surface de la pièce, en particulier au niveau du filetage, et/ou ne laisse notamment pas apparaître d'espace intermédiaire au niveau de la paroi intérieure du filetage lors de l'opération de brochage.

15. Procédé selon l'une des revendications précédentes, dans lequel
a) l'outil comprend en outre au moins une zone de perçage (3) et
b) au cours duquel, pendant le mouvement de travail, dans la première phase de travail, la zone de perçage de l'outil réalise un trou central dans la pièce à usiner et la zone de filetage réalise un filetage s'étendant selon un pas inférieur au pas de filetage prédéfini dans la paroi interne du trou central réalisé par la zone de perçage,
la zone de perçage et la zone de filetage étant de préférence couplées de manière rigide et effectuant conjointement le mouvement de travail sans modification de leur position relative l'une par rapport à l'autre et/ou, de préférence,
la zone de perçage est disposée dans une zone située plus en avant, notamment au niveau d'une extrémité avant ou libre, que la zone de filetage et/ou, la zone de filetage s'étend plus vers l'extérieur, radialement par rapport à l'axe de l'outil, que la zone de perçage.
